# EUROPEAN PATENT APPLICATION

(11) **EP 4 607 468 A1**
(43) Date of publication of application: **27.08.2025**
(21) Application number: 22962750.0
(22) Date of filing: 20.10.2022
(51) Int. Cl.: G06T 19/00, B33Y 50/00, B29C 64/386, G05B 19/4097, B22F 10/85

(54) **INFORMATION PROCESSING METHOD, MACHINING METHOD, DISPLAY METHOD, DISPLAY DEVICE, INFORMATION PROCESSING DEVICE, COMPUTER PROGRAM, AND RECORDING MEDIUM**

(71) Applicant: NIKON CORPORATION, Tokyo 140-8601 (JP)
(72) Inventor: NAKAGAWA, Tomoya, Tokyo 140-8601 (JP)
(74) Representative: Hoffmann Eitle
(86) International application number: PCT/JP2022/039045
(87) International publication number: WO 2024/084642

(57) **Abstract**

An information processing method of generating a difference model that is a three-dimensional model indicating a difference between an object model, which indicates a three-dimensional shape of an object, and a target model, which indicates a target shape of the object, includes: acquiring a plurality of unit areas each of which corresponds to a part of the target model, a distance between the object model and each of the plurality of unit areas is equal to or longer than a first threshold that is set by a first input from a user; acquiring, as a cluster area, a group of the unit areas in which a distance between two unit areas is equal to or shorter than a second threshold that is set by a second input from the user; and outputting, as the difference model, at least one of the cluster area acquired after receiving the first and second inputs.

## Description

### Technical Field

The present invention relates to a technical field of an information processing method, an information processing apparatus, and a computer program that perform an information processing related to a three-dimensional model, a processing method that generates processing control information for processing an object, and a display method, a display apparatus, and a computer program that perform a display related to a three-dimensional model, for example.

### Background Art

A Patent literature 1 discloses one example of a processing apparatus that processes an object. One technical problem of this processing apparatus is to properly generate processing control information for controlling a processing of the object.

### Citation List

### Patent Literature

Patent Literature 1: US2018/0029298A1

### Summary of Invention

A first aspect provides an information processing method of generating a difference model that is a three-dimensional model indicating a difference between an object model, which is a three-dimensional model indicating a three-dimensional shape of an object, and a target model, which is a three-dimensional model indicating a target shape of the object, and that indicates a part added to the object for processing the object to be the target shape, wherein the information processing method includes: receiving a first input that is an input from a user; acquiring a plurality of unit areas each of which corresponds to a part of the target model and whose distances from the object model are equal to or longer than a first threshold that is set by the first input; receiving a second input that is an input from the user; acquiring at least one cluster area, each cluster area is a group of the unit areas in which a distance between two unit areas of the plurality of acquired unit areas is equal to or shorter than a second threshold that is set by the second input; and outputting, as the difference model or information for generating the difference model, at least one of the cluster area acquired after receiving the first input and receiving the second input.

A second aspect provides an information processing method of generating a difference model that is a three-dimensional model indicating a difference between an object model, which is a three-dimensional model indicating a three-dimensional shape of an object, and a target model, which is a three-dimensional model indicating a target shape of the object, wherein the information processing method includes: displaying a first display image that displays: a plurality of unit areas which are acquired by dividing the target model and whose distances from the object model are equal to or longer than a first threshold; and that displays a first operational object that is allowed to be operated by the user to adjust the first threshold; displaying a second display image that displays: at least one cluster area, each cluster area is a group of the unit areas in which a distance between two unit areas of the plurality of acquired unit areas is equal to or shorter than a second threshold; and that displays a second operational object that is allowed to be operated by the user to adjust the second threshold; and outputting, as the difference model or information for generating the difference model, at least one of the cluster area acquired after an operation of the first operational object and the second operational object is performed.

A third aspect provides an information processing method of generating a difference model that is a three-dimensional model indicating a difference between an object model, which is a three-dimensional model indicating a three-dimensional shape of an object, and a target model, which is a three-dimensional model indicating a target shape of the object, wherein the information processing method includes: receiving a first input that is an input from a user; acquiring a plurality of unit areas each of which corresponds to a part of the target model and whose distances from the object model are equal to or longer than a first threshold that is set by the first input; acquiring at least one cluster area, each cluster area is a group of the unit areas in which a distance between two unit areas of the plurality of acquired unit areas is equal to or shorter than a second threshold; and outputting, as the difference model or information for generating the difference model, at least one of the cluster area acquired based on the second threshold.

A fourth aspect provides an information processing method of generating a difference model that is a three-dimensional model indicating a difference between an object model, which is a three-dimensional model indicating a three-dimensional shape of an object, and a target model, which is a three-dimensional model indicating a target shape of the object, wherein the information processing method includes: acquiring a plurality of unit areas each of which corresponds to a part of the target model and whose distances from the object model are equal to or longer than a first threshold; receiving an input that is an input from a user; acquiring at least one cluster area, each cluster area is a group of the unit areas in which a distance between two unit areas of the plurality of acquired unit areas is equal to or shorter than a second threshold that is set by the input; and outputting, as the difference model or information for generating the difference model, at least one of the cluster area acquired after receiving the input.

A fifth aspect provides an information processing method of generating a difference model that is a three-dimensional model indicating a difference between an object model, which is a three-dimensional model indicating a three-dimensional shape of an object, and a target model, which is a three-dimensional model indicating a target shape of the object, and that indicates a part removed from the object for processing the object to be the target shape, wherein the information processing method includes: receiving a first input that is an input from a user; acquiring a plurality of unit areas each of which corresponds to a part of the object model and whose distances from the target model are equal to or longer than a first threshold that is set by the first input; receiving a second input that is an input from the user; acquiring at least one cluster area, each cluster area is a group of the unit areas in which a distance between two unit areas of the plurality of acquired unit areas is equal to or shorter than a second threshold that is set by the second input; and outputting, as the difference model or information for generating the difference model, at least one of the cluster area acquired after receiving the first input and receiving the second input.

A sixth aspect provides an information processing method of generating a difference model that is a three-dimensional model indicating a difference between an object model, which is a three-dimensional model indicating a three-dimensional shape of an object, and a target model, which is a three-dimensional model indicating a target shape of the object, and that indicates a processed part for processing the object to be the target shape, wherein the information processing method includes: receiving a first input that is an input from a user; acquiring a plurality of unit areas each of which corresponds to a part of one model of the object model and the target model and whose distances from the other model of the object model and the target model are equal to or longer than a first threshold that is set by the first input; receiving a second input that is an input from the user; acquiring at least one cluster area, each cluster area is a group of the unit areas in which a distance between two unit areas of the plurality of acquired unit areas is equal to or shorter than a second threshold that is set by the second input; and outputting, as the difference model or information for generating the difference model, at least one of the cluster area acquired after receiving the first input and receiving the second input.

A seventh aspect provides a processing method of generating, based on the difference model generated by using the information processing method provided by any one of the first to sixth aspects described above, processing control information for processing a shape of an object to be a target shape by a processing apparatus configured to process the object.

An eighth aspect provides an information processing method of generating a difference model that is a three-dimensional model indicating a difference between a first model and a second model, wherein the information processing method includes: receiving a first input that is an input from a user; acquiring a plurality of unit areas each of which corresponds to a part of one model of the first model and the second model and whose distances from the other model of the first model and the second model are equal to or longer than a first threshold that is set by the first input; receiving a second input that is an input from the user; acquiring at least one cluster area, each cluster area is a group of the unit areas in which a distance between two unit areas of the plurality of acquired unit areas is equal to or shorter than a second threshold that is set by the second input; and outputting, as the difference model or information for generating the difference model, at least one of the cluster area acquired after receiving the first input and receiving the second input.

A ninth aspect provides an information processing method of generating a difference model that is a three-dimensional model indicating a difference between a first model and a second model, wherein the information processing method includes: acquiring a plurality of unit areas each of which corresponds to a part of one model of the first model and the second model and whose distances from the other model of the first model and the second model are equal to or longer than a first threshold; receiving a second input that is an input from the user; acquiring at least one cluster area, each cluster area is a group of the unit areas in which a distance between two unit areas of the plurality of acquired unit areas is equal to or shorter than a second threshold; and outputting, as the difference model or information for generating the difference model, at least one of the cluster area acquired based on the second threshold.

A tenth aspect provides a display method of displaying a difference model that is a three-dimensional model indicating a difference between an object model, which is a three-dimensional model indicating a three-dimensional shape of an object, and a target model, which is a three-dimensional model indicating a target shape of the object, wherein the display method includes: displaying a plurality of unit areas each of which corresponds to a part of the target model and whose distances from the object model are equal to or longer than a first threshold set by a first input that is an input from a user; displaying at least one cluster area, each cluster area is a group of the unit areas in which a distance between two unit areas of the plurality of acquired unit areas is equal to or shorter than a second threshold set by a second input that is an input from the user; and displaying, as the difference model, at least one of the cluster area acquired after receiving the first input and receiving the second input.

A eleventh aspect provides a display apparatus configured to display a difference model that is a three-dimensional model indicating a difference between an object model, which is a three-dimensional model indicating a three-dimensional shape of an object, and a target model, which is a three-dimensional model indicating a target shape of the object, wherein the display apparatus includes an input apparatus, the display apparatus: displays, as a first display image, a plurality of unit areas each of which corresponds to a part of the target model and whose distances from the object model are equal to or longer than a first threshold set by the input apparatus; displays, as a second display image, at least one cluster area, each cluster area is a group of the unit areas in which a distance between two unit areas of the plurality of acquired unit areas is equal to or shorter than a second threshold set by the input apparatus; and displays, as the difference model, at least one of the cluster area acquired based on the second threshold.

A twelfth aspect provides a n information processing apparatus configured to generate the difference model by using the information processing method provided by any one of the first to sixth and eighth to ninth aspects described above.

A thirteenth aspect provides a computer program that allows a computer to execute the information processing method provided by any one of the first to sixth and eighth to ninth aspects described above.

A fourteenth aspect provides a computer program that allows a computer to execute the display method provided by the tenth aspect.

An operation and another advantage of the present invention will be apparent from an example embodiment described below.

### Brief Description of Drawings

[FIG. 1] FIG. 1 is a block diagram that illustrates an entire configuration of a processing system in a present example embodiment.
[FIG. 2] FIG. 2 is a block diagram that illustrates a system configuration of a processing apparatus in the present example embodiment.
[FIG. 3] FIG. 3 is a cross-sectional view that illustrates a configuration of the processing apparatus in a present example embodiment.
[FIG. 4] FIG. 4 is a block diagram that illustrates a configuration of a measurement system.
[FIG. 5] FIG. 5 is a block diagram that illustrates a configuration of a control information generation apparatus.
[FIG. 6] Each of FIG. 6(a) to FIG 6(e) is a cross-sectional view that illustrates an aspect in which a certain area on a workpiece is irradiated with build light and a build material is supplied thereto.
[FIG. 7] Each of FIG. 7(a) to FIG. 7(c) is a cross-sectional view that illustrates a process for building a three-dimensional structural object.
[FIG. 8] FIG. 8 is a flowchart that illustrates an entire flow of a control information generation operation.
[FIG. 9] FIG. 9 schematically illustrates an object model and a target model.
[FIG. 10] FIG. 10 schematically illustrates the object model, the target model, and a difference model.
[FIG. 11] FIG. 11 schematically illustrates a certain one point included in the object model and a certain one point included in the target model.
[FIG. 12] FIG. 12 schematically illustrates a plurality of difference points.
[FIG. 13] FIG. 13 schematically illustrates point cloud clusters into which each of the plurality of difference points is classified.
[FIG. 14] FIG. 14 is a flowchart that illustrates a flow of a difference model generation operation.
[FIG. 15] FIG. 15 illustrates a difference point display image.
[FIG. 16] FIG. 16 illustrates a point cloud cluster display image.
[FIG. 17] FIG. 17 illustrates the point cloud cluster display image.
[FIG. 18] Each of FIG. 18(a) to FIG. 18(c) illustrates a file format of a file for storing an original model and a reduced model.
[FIG. 19] FIG. 19 illustrates a first specific example of the difference model generation operation using the reduced model.
[FIG. 20] FIG. 20 illustrates second specific example of the difference model generation operation using the reduced model.
[FIG. 21] FIG. 21 illustrates a third specific example of the difference model generation operation using the reduced model.
[FIG. 22] FIG. 22 illustrates a fourth specific example of the difference model generation operation using the reduced model.
[FIG. 23] FIG. 23 illustrates a scene in which an inter-model distance threshold and a cluster threshold are diverted.
[FIG. 24] FIG. 24 schematically illustrates the target model in a case where a workpiece is deformed due to a use of the workpiece and the object model in a case where the workpiece is deformed due to the use of the workpiece.
[FIG. 25] FIG. 25 schematically illustrates the difference model that is generated based on the target model in a case where the workpiece is deformed due to a use of the workpiece and the object model in a case where the workpiece is deformed due to the use of the workpiece.
[FIG. 26] FIG. 26 schematically illustrates the target model that is not deformed and the target model that is deformed.
[FIG. 27] FIG. 27 schematically illustrates the difference model that is generated based on the target model that is deformed based on the object model and the object model in a case where the workpiece is deformed due to the use of the workpiece.
[FIG. 28] FIG. 28 schematically illustrates the target model that is not deformed and the target model that is deformed.
[FIG. 29] FIG. 29 schematically illustrates the difference model that is generated based on the object model and the target model, which is generated by deforming the object model.
[FIG. 30] FIG. 30 illustrates an extraction point display image in a fifth modified example.
[FIG. 31] FIG. 31 illustrates the point cloud cluster display image in the fifth modified example.
[FIG. 32] FIG. 32 illustrates an integrated display image in a sixth modified example.
[FIG. 33] FIG. 33 illustrates the extraction point display image in a seventh modified example.
[FIG. 34] FIG. 34 illustrates the point cloud cluster display image in an eighth modified example.
[FIG. 35] FIG. 35 illustrates the integrated display image in a ninth modified example.
[FIG. 36] FIG. 36 illustrates a machine learning model used in a tenth modified example.
[FIG. 37] FIG. 37 illustrates a concept of a machine learning of the machine learning model used in the tenth modified example.
[FIG. 38] FIG. 38 schematically illustrates the object mode, the target model, and the difference model.

### Description of Example embodiments

Next, with reference to drawings, an example embodiment of an information processing method, a processing method, a display method, a display apparatus, an information processing apparatus, and a computer program will be described. In the below-described description, the example embodiment of the information processing method, the processing method, the display method, and the display apparatus will be described by using a processing system SYS that is configured to process a workpiece W that is one example of an object.

### (1) Configuration of Processing System SYS

### (1-1) Entire Configuration of Processing System SYS

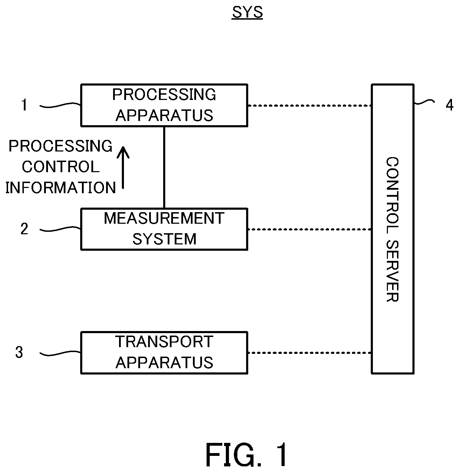

First, with reference to FIG. 1, an entire configuration of the processing system SYS will be described. FIG. 1 is a block diagram that illustrates the entire configuration of the processing system SYS.

As illustrated in FIG. 1, the processing system SYS includes a processing apparatus 1, a measurement system 2, and a transport apparatus 3. Incidentally, the processing system SYS includes the single processing apparatus 1 in an example illustrated in FIG. 1, however, it may include a plurality of processing apparatuses 1. The processing system SYS includes the single measurement system 2, however, it may include a plurality of measurement systems 2. The processing system SYS includes the single transport apparatus 3, however, it may include a plurality of transport apparatuses 3. Incidentally, the processing system SYS may not include the transport apparatus 3.

In a case where the processing system SYS includes the plurality of processing apparatuses 1, the number of measurement systems 2 may be smaller than the number of processing apparatuses 1. For example, the processing system SYS may include two or more processing apparatuses 1 and one measurement system 2. Moreover, in a case where the processing system SYS includes the plurality of measurement systems 2, the number of processing apparatuses 1 may be smaller than the number of measurement systems 2. For example, the processing system SYS may include one processing apparatus 1 and two or more measurement systems 2.

The processing apparatus 1 is configured to process the workpiece W. In the present example embodiment, an example in which the processing apparatus 1 is a processing apparatus that is configured to process the workpiece W by irradiating the workpiece W with processing light EL (namely, an energy beam in the form of light). However, the processing apparatus 1 may process the workpiece W without using the processing light EL.

The processing apparatus 1 is configured to perform an additive manufacturing on the workpiece W. Namely, the processing apparatus 1 is configured to build a build object on the workpiece W by performing the additive manufacturing on the workpiece W. In this case, the processing apparatus 1 may build the build object that is integrated with or separable from the workpiece W by performing the additive processing on the workpiece W. The build object that is built by the processing apparatus 1 may mean any object that is built by the processing apparatus 1. For example, the processing apparatus 1 may build a three-dimensional structural object ST (namely, a three-dimensional structure having a size in each of three-dimensional directions, a solid object, in other words, an object having a size in an X-axis direction, a Y-axis direction, and a Z-axis direction) as one example of the build object. Incidentally, the processing apparatus that is configured to perform the additive manufacturing may be referred to as an additive manufacturing apparatus.

The processing apparatus 1 may perform the additive processing by using any additive manufacturing method (namely, a build method) that is capable of building the build object. At least one of a Laser Metal Deposition (LMD), a Powder Bed Fusion (PBF) such as a Selective Laser Sintering (SLS), a Binder Jetting (BJ), a Material Jetting, a Stereo Lithography, and a Laser Metal Fusion (LMF) is one example of the additive manufacturing method. Incidentally, the Laser Metal Deposition may be referred to as a Directed Energy Deposition (DED).

The workpiece W may be an item that needs to be repaired having a lost part. **In** this case, the processing apparatus 1 may perform a repair processing for repairing (in other words, restoring) the item that needs to be repaired by performing the additive manufacturing for building the build object for filling in the lost part. Namely, the additive manufacturing performed by the processing apparatus 1 may include the additive manufacturing for adding, to the workpiece W, the three-dimensional structural object ST corresponding to the build object for filling in the lost part. The additive manufacturing performed by the processing apparatus 1 may be at least a part of the repair processing for the workpiece W having the lost part.

At least a part of a worn turbine is one example of the item that needs to be repaired having the lost part. For example, a turbine blade included in the turbine is one example of the item that needs to be repaired having the lost part. At least one of a turbine for a power generation and a turbine for an engine for an aircraft is one example of the turbine. **In** this case, the processing apparatus 1 may repair (in other words, restore) the worn turbine. A worn propeller-shaped component is another example of the item that needs to be repaired having the lost part. A body component of a vehicle such as a car, a motorcycle, an electric vehicle, and a train is another example of the item that needs to be repaired having the lost part. A component of an engine such as an engine for a car, an engine for a motorcycle, and an engine for an aerospace plane is another example of the item that needs to be repaired having the lost part. A component of a battery of an electric vehicle is another example of the item that needs to be repaired having the lost part. The processing apparatus 1 may repair this item that needs to be repaired.

The workpiece W may be a base for building the three-dimensional structural object ST. **In** this case, the processing apparatus 1 may manufacture the three-dimensional structural object ST from scratch by performing the additive manufacturing for building the three-dimensional structural object ST on the workpiece W. As one example, the processing apparatus 1 may manufacture the turbine from scratch by performing the additive manufacturing for building the three-dimensional structural object ST corresponding to the turbine on the workpiece W.

The workpiece W may be an intermediate product manufactured in a process of building the three-dimensional structural object ST. **In** this case, the processing apparatus 1 may manufacture the three-dimensional structural object ST from the intermediate product by performing the additive manufacturing for completing the three-dimensional structural object ST on the workpiece W that is the intermediate product of the three-dimensional structural object ST. As one example, the processing apparatus 1 may manufacture a completed product of the turbine from the intermediate product of the turbine by performing the additive manufacturing for completing the turbine on the workpiece W that is the intermediate product of the turbine.

The measurement system 2 measures the workpiece W before the processing apparatus 1 actually starts processing the workpiece W. **In** the present example embodiment, the measurement system 2 measures a three-dimensional shape of the workpiece W. Incidentally, when the three-dimensional shape of the workpiece W is determined, a position of the workpiece W in a three-dimensional space is also determined. Therefore, measuring the three-dimensional shape of the workpiece W may be considered to be substantially equivalent to measuring a position of the workpiece W.

The measurement system 2 further generates processing control information. The processing control information is control information that is used for controlling the processing apparatus 1 to process the workpiece W. Especially, the processing control information is control information that is used for controlling the processing apparatus 1 to process the workpiece W so that the shape of the workpiece W becomes a target shape. For example, the processing control information may include processing path information. The processing path information may indicate a target irradiation position (for example, a position of a target irradiation area EA described below) that should be irradiated with the processing light EL to process the workpiece W. Specifically, the processing path information may indicate a target movement path that is a path of the target irradiation position (for example, a movement path of the target irradiation area EA described below) that should be irradiated with the processing light EL to process the workpiece W. The target movement path may be referred to as a processing path or a tool path. **In** this case, the measurement system 2 may generate, as the processing control information, a G-code indicating the processing path or the tool path. The measurement system 2 may generate, as the processing control information, a file whose extension is gcode or gco. The processing control information generated by the measurement system 2 is transmitted from the measurement system 2 to the processing apparatus 1 through a non-illustrated communication network.

The processing apparatus 1 receives (namely, acquires) the processing control information transmitted from the measurement system 2. The processing apparatus 1 that has received the processing path information processes the workpiece W based on the received processing control information. Therefore, the workpiece W is transported from the measurement system 2 to the processing apparatus 1 after the measurement system 2 measures the three-dimensional shapes of the workpiece W. Specifically, the workpiece W is detached from the measurement system 2, and the detached workpiece W is transported to the processing apparatus 1. For example, the workpiece W may be transported from the measurement system 2 to the processing apparatus 1 by the transport apparatus 3. For example, the workpiece W may be transported from the measurement system 2 to the processing apparatus 1 by a user of the processing system SYS. The workpiece W transported to the processing apparatus 1 is set to (in other words, placed in or attached to) the processing apparatus 1. As a result, the processing apparatus 1 may process the workpiece W.

Incidentally, in the example illustrated in FIG. 1, the processing system SYS includes the processing apparatus 1 and the measurement system 2 that are separate apparatuses, respectively. However, the processing system SYS may include an apparatus in which the processing apparatus 1 and the measurement system 2 are integrated. Namely, the processing apparatus 1 and the measurement system 2 may be integrated.

The processing system SYS may further include a control server 4. The control server 4 may control an operation of the entire processing system SYS. For example, the control server 4 may control an operation of the processing apparatus 1. For example, the control server 4 may control an operation of the measurement system 2. For example, the control server 4 may control an operation of the transport apparatus 3. However, the processing system SYS may not include the control server 4.

The control server 4 may serve as a cloud server. In this case, the control server 4 may be configured to communicate with at least one of the processing apparatus 1, the measurement system 2, and the transport apparatus 3 through a communication network including Internet. Alternatively, the control server 4 may serve as an edge server. In this case, the control server 4 may be configured to communicate with at least one of the processing apparatus 1, the measurement system 2, and the transport apparatus 3 through a communication network including an intranet or local area network.

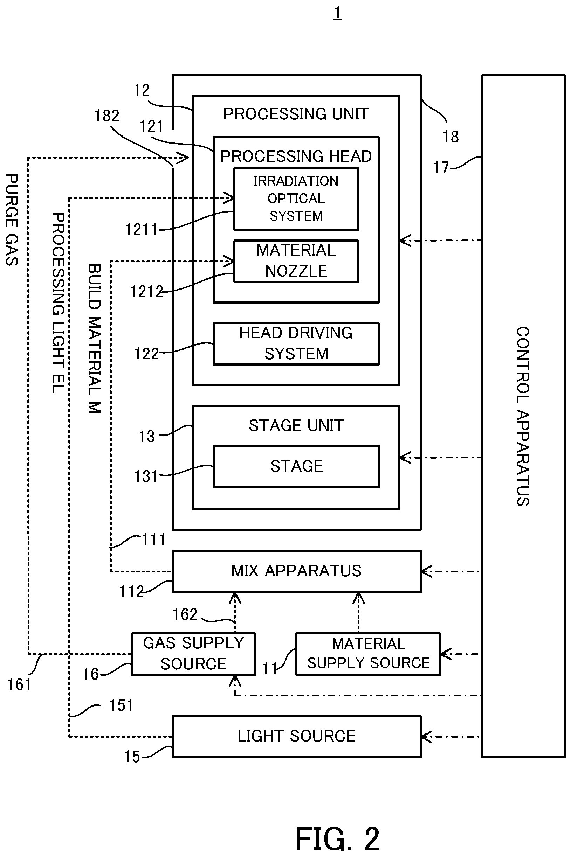

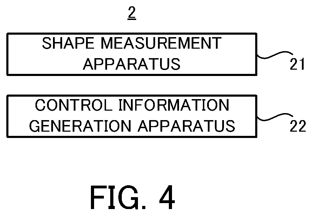

The processing system SYS may include a first computer that controls the processing apparatus 1 as a part of the processing apparatus 1, in addition to or instead of the control server 4 that controls the processing apparatus 1. Namely, the processing apparatus 1 may include the first computer. The first computer may be a laptop computer or any other type of computer. The first computer may serve as a below-described control unit 17 (see FIG. 2). The processing system SYS may include a second computer that controls the measurement system 2 as a part of the measurement system 2, in addition to or instead of the control server 4 that controls the measurement system 2. Namely, the measurement system 2 may include the second computer. The second computer may be a laptop computer, a tablet device, a mobile device such as a smartphone, or any other type of computer. The second computer may serve as a below-described control information generation apparatus 22 (see FIG. 4). The processing system SYS may include a third computer that controls the transport apparatus 3 as a part of the transport apparatus 3, in addition to or instead of the control server 4 that controls the transport apparatus 3. Namely, the transport apparatus 3 may include the third computer. The third computer may be a laptop computer or any other type of computer.

### (1-2) Configuration of Processing Apparatus 1

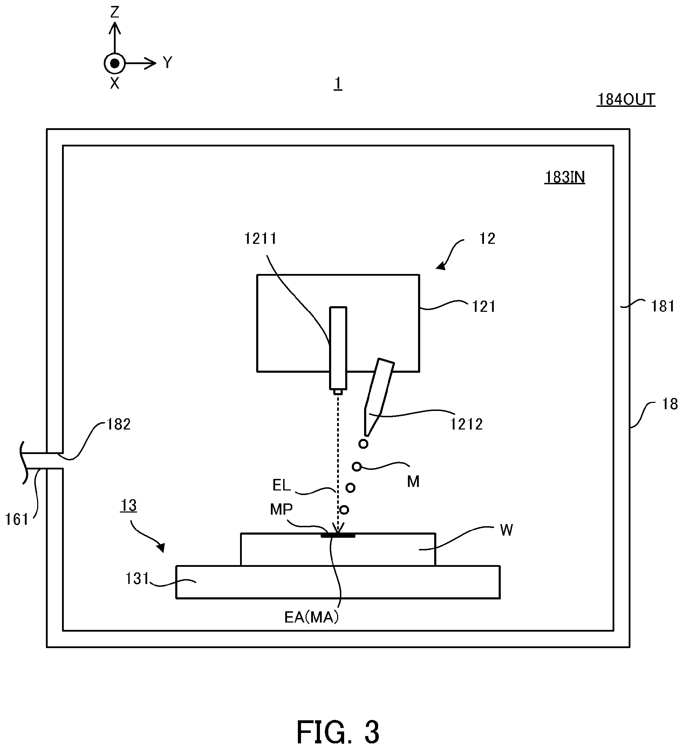

Next, with reference to FIG. 2 and FIG. 3, a configuration of the processing apparatus 1 will be described. FIG. 2 is a block diagram that illustrates a system configuration of the processing apparatus 1. FIG. 3 is a cross-sectional view that illustrates the configuration of the processing apparatus 1.

Incidentally, in the below described description, a positional relationship of various components that constitute the processing apparatus 1 will be described by using an XYZ rectangular coordinate system that is defined by an X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially an up-down direction), for the purpose of simple description, in the below described description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

Moreover, in the below-described description, the configuration of the processing apparatus 1 that performs the additive manufacturing by using the Laser Metal Deposition will be described as one example of the configuration of the processing apparatus 1.

The processing apparatus 1, which performs the additive manufacturing by using the Laser Metal Deposition, performs the additive manufacturing by processing a build material M by using the processing light EL. The build material M is a material that is molten by an irradiation with the processing light EL having a predetermined intensity or more intensity. At least one of a metal material and a resin material is usable as the build material M, for example. However, another material that is different from the metal material and the resin material may be used as the build material M. The build material M is powder-like or grain-like material. Namely, the build material M is powdery material. However, the build material M may not be the powdery material. For example, at least one of a wired-like build material and a gas-like build material may be used as the build material M.

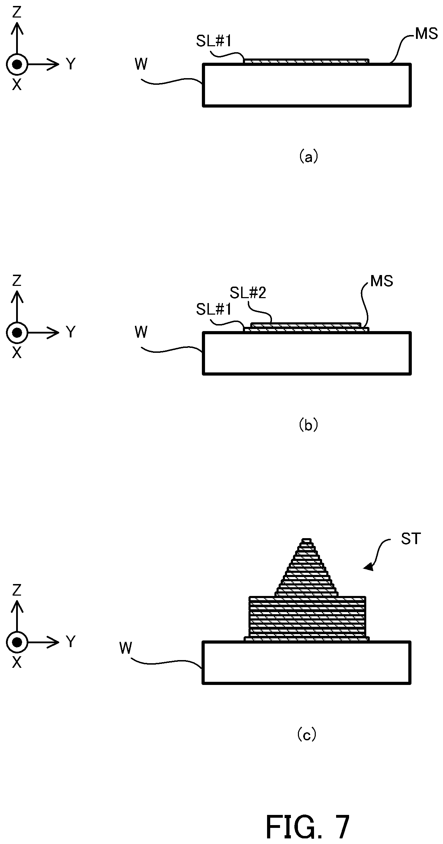

The processing apparatus 1, which performs the additive manufacturing by using the Laser Metal Deposition, builds the three-dimensional structural object ST in which a plurality of structural layers SL (see FIG. 7 below) are stacked by forming the plurality of structural layers SL in sequence. In this case, the processing apparatus 1 first sets a surface of the workpiece W to be a build surface MS on which the build object is actually built, and builds a first structural layer SL on the build surface MS. Then, the processing apparatus 1 sets a surface of the first structural layer SL to be a new build surface MS, and builds a second structural layer SL on the build surface MS. Then, the processing apparatus 1 repeats the same operation to build the three-dimensional structural object ST in which the plurality of structural layers SL are stacked.

In order to perform the additive manufacturing, the processing apparatus 1 includes a material supply source 11, a processing unit 12, a stage unit 13, a light source 15, a gas supply source 16, and a control unit 17, as illustrated in FIG. 2 to FIG. 3. The processing unit 12 and the stage unit 13 may be contained in a chamber space 183IN in a housing 18. Incidentally, at least one of the processing unit 12 and the stage unit 13 may not be contained in the chamber space 183IN in the housing 18.

The material supply source 11 supplies the build material M to the processing unit 12. The material supply source 11 supplies, to the processing unit 12, the build material M the amount of which is necessary for performing the additive manufacturing per unit time by supplying the build material M the amount of which is based on the necessary amount.

The processing unit 12 builds the build object by processing the build material M supplied from the material supply source 11. In order to build the build object, the processing unit 12 include a processing head 121 and a head driving system 122. Furthermore, the processing head 121 includes an irradiation optical system 1211 and a material nozzle 1212. Incidentally, in the example illustrated in FIG. 2 to FIG. 3, the processing head 121 includes a single irradiation optical system 1211, but the processing head 121 may include a plurality of irradiation optical systems 1211. Moreover, in the example illustrated in FIG. 2 to FIG. 3, the processing head 121 includes a single material nozzle 1212, but the processing head 121 may include a plurality of material nozzles 1212.

The irradiation optical system 1211 is an optical system (for example, a condensing optical system) for emitting the processing light EL. Specifically, the irradiation optical system 1211 is optically connected to the light source 15 that generates the processing light EL through a light transmitting member 151 such as an optical fiber and a light pipe. The irradiation optical system 1211 emits the processing light EL transmitted from the light source 15 through the light transmitting member 151. The irradiation optical system 1211 emits the processing light EL in a downward direction (namely, toward a -Z side) from the irradiation optical system 1211. The stage 131 is positioned below the irradiation optical system 1211. In a case where the workpiece W is placed on the stage 131, the irradiation optical system 1211 irradiates the workpiece W with the emitted processing light EL. In this case, the irradiation optical system 1211 irradiates the workpiece W with the emitted processing light EL from a position above the workpiece W. Specifically, the irradiation optical system 1211 is configured to irradiate a target irradiation area EA, which is set on the workpiece W or near the workpiece W as an area that is irradiated with the processing light EL (typically, in which the light is condensed), with the processing light EL. Furthermore, a state of the irradiation optical system 1211 is switchable between a state where the target irradiation area EA is irradiated with the processing light EL and a state where the target irradiation area EA is not irradiated with the processing light EL under the control of the control unit 17.

The material nozzle 1212 supplies (for example, injects, jets, blows out or sprays) the build material M. The material nozzle 1212 is physically connected to the material supply source 11, which is a supply source of the build material M, through a supply pipe 111 and a mix apparatus 112. The material nozzle 1212 supplies the build material M supplied from the material supply source 11 through the supply pipe 111 and the mix apparatus 112. The material nozzle 1212 may pressure-feed the build material M supplied from the material supply source 11 through the supply pipe 111. Namely, the build material M from the material supply source 11 and gas for feeding (namely, pressure-feed gas, and inert gas such as Nitrogen or Argon, for example) may be mixed by the mix apparatus 112 and then pressure-fed to the material nozzle 1212 through the supply pipe 111. As a result, the material nozzle 1212 supplies the build material M together with the gas for feeding. Purge gas supplied from the gas supply source 16 is used as the gas for feeding, for example. However, gas supplied from a gas supply source that is different from the gas supply source 16 may be used as the gas for feeding. The material nozzle 1212 supplies the build material M in a downward direction (namely, toward the -Z side) from the material nozzle 1212. The stage 131 is positioned below the material nozzle 1212. In a case where the workpiece W is placed on the stage 131, the material nozzle 1212 supplies the build material M toward the workpiece W or a vicinity of the workpiece W.

In the present example embodiment, the material nozzle 1212 supplies the build material M to an irradiation position of the processing light EL (namely, the target irradiation area EA that is irradiated with the processing light EL from the irradiation optical system 1211). Therefore, the material nozzle 1212 and the irradiation optical system 1211 are aligned so that a target supply area MA, which is set on the workpiece W or near the workpiece W as an area to which the material nozzle 1212 supplies the build material M, coincides with (alternatively, overlaps at least partially with) the target irradiation area EA. In this case, the build material M supplied from the material nozzle 1212 is irradiated with the processing light EL emitted from the irradiation optical system 1211. As a result, the build material M is molten. Namely, a melt pool MP including the molten build material M is formed on the workpiece W.

Note that the material nozzle 1212 may supply the build material M to the melt pool MP that is formed by the processing light EL emitted from the irradiation optical system 1211. Alternatively, for example, the processing apparatus 1 may melt the build material M by the irradiation optical system 1211 before the build material M from the material nozzle 1212 reaches the workpiece W and may make the molten build material M adhere to the workpiece W.

The head driving system 122 moves the processing head 121 under the control of the control unit 17. Namely, the head driving system 122 moves the irradiation optical system 1211 and the material nozzle 1212 under the control of the control unit 17. The head driving system 122 moves the processing head 121 along at least one of the X-axis, the Y-axis, the Z-axis, the θX direction, the θY direction, and the θZ direction, for example. When the head driving system 122 moves the processing head 121, a relative positional relationship between the processing head 121 and each of the stage 131 and the workpiece W placed on the stage 131 changes. As a result, the target irradiation area EA and the target supply area MA (furthermore, the melt pool MP) moves relative to the workpiece W.

The stage unit 13 includes the stage 131 and a stage driving system 132.

The workpiece W is placed on the stage 131. The stage 131 is configured to support the workpiece W placed on the stage 131. The stage 131 may be configured to hold the workpiece W placed on the stage 131. In this case, the stage 131 may include at least one of a mechanical chuck, an electrostatic chuck, and a vacuum suction chuck to hold the workpiece W. Alternatively, the stage 131 may not be configured to hold the workpiece W placed on the stage 131. In this case, the workpiece W may be placed on the stage 131 without clamp. Moreover, the workpiece W may be attached to a holding tool such as a jig, and the holding tool to which the workpiece W has been attached may be placed on the stage 31. Incidentally, the workpiece W may not be placed on the stage 131, and may be placed on a floor surface, for example.

The holding tool to which the workpiece W is attached may include a beam member that is positioned around the workpiece W. As one example, the holding tool may include a beam member that surrounds an outer periphery of the workpiece W. A plurality of workpieces W may be attached to the holding tool. In this case, the holding tool may include a beam members that is positioned around at least two of the plurality of workpieces W. As one example, the holding tool may include a beam member that surrounds an outer periphery of at least two workpieces W. As another example, the holding tool may include a beam member that passes through a space between at least two workpieces W. As another example, the holding tool may include two beam members that pass through the space between at least two workpieces W and that intersect each other. In this case, at least a part of at least two workpieces W may be positioned at an outside of an rectangular area connecting both ends of the two beam members. Incidentally, the holding tool may be placed on the stage 31 through a support member that is configured to kinematically support the holding tool.

The stage driving system 132 moves the stage 131 under the control of the control unit 17. For example, the stage driving system 132 moves the stage 131 along at least one of the X-axis, the Y-axis, the Z-axis, the θX direction, the θY direction and the θZ direction. When the stage driving system 132 moves the stage 131, the relative positional relationship between the processing head 121 and each of the stage 131 and the workpiece W placed on the stage 131 changes. As a result, the target irradiation area EA and the target supply area MA (furthermore, the melt pool MP) moves relative to the workpiece W.

The light source 15 emits at least one of infrared light, visible light, and ultraviolet light as the processing light EL, for example. However, other type of light may be used as the processing light EL. The processing light EL may include a plurality of pulsed lights (namely, a plurality of pulsed beams). The processing light EL may include continuous light (CW: Continuous Wave). The processing light EL may be a laser light. In this case, the light source 15 may include a semiconductor laser such as a laser light source (for example, a Laser Diode (LD)). The laser light source may include at least one of a fiber laser, a CO₂ laser, a YAG laser, an Excimer laser, and the like. However, the processing light EL may not be the laser light. The light source 15 may include any light source (for example, at least one of a LED (Light Emitting Diode), a discharge lamp and the like).

The gas supply source 16 is a supply source of the purge gas for purging the chamber space 183IN in the housing 18. The purge gas includes inert gas. At least one of Nitrogen gas and Argon gas is one example of the inert gas. The gas supply source 16 is connected to the chamber space 183IN through a supply port 182 formed in a wall member 181 of the housing 18 and a supply pipe 161 connecting the gas supply source 16 to the supply port 182. The gas supply source 16 supplies the purge gas to the chamber space 183IN through the supply pipe 161 and the supply port 182. As a result, the chamber space 183IN becomes a space purged by the purge gas. The purge gas supplied to the chamber space 183IN may be discharged from a non-illustrated outlet port formed in the wall member 181. Note that the gas supply source 16 may be a tank that stores the inert gas. In a case where the purge gas is the Nitrogen gas, the gas supply source 16 may be a Nitrogen gas generation apparatus that generates the Nitrogen gas by using air as material.

In a case where the material nozzle 1212 supplies the build material M together with the purge gas as described above, the gas supply source 16 may supply the purge gas to the mix apparatus 112 to which the build material M is supplied from the material supply source 11. Specifically, the gas supply source 16 may be connected to the mix apparatus 112 through a supply pipe 162 that connects the gas supply source 16 and the mix apparatus 112. As a result, the gas supply source 16 supplies the purge gas to the mix apparatus 112 through the supply pipe 162. In this case, the build material M from the material supply source 11 may be supplied (specifically, pressure-fed) to the material nozzle 1212 through the supply pipe 111 by the purge gas supplied from the gas supply source 16 through the supply pipe 162. Namely, the gas supply source 16 may be connected to the material nozzle 1212 through the supply pipe 162, the mix apparatus 112 and the supply pipe 111. In this case, the material nozzle 1212 supplies the build material M together with the purge gas for pressure-feeding the build material M.

The control unit 17 controls an operation of the processing apparatus 1. For example, the control unit 17 may control the processing unit 12 (for example, at least one of the processing head 121 and the head driving system 122) of the processing apparatus 1 to process the workpiece W. For example, the control unit 17 may control the stage unit 13 (for example, stage driving system 132) of the processing apparatus 1 to process workpiece W.

The control unit 17 may include a processor and a storage apparatus. The processor may include at least one of a CPU (Central Processing unit) and a GPU (Graphic Processing unit), for example. The storage apparatus may include a memory. The control unit 17 serves as an apparatus for controlling the operation of the processing apparatus 1 by means of the processor executing a computer program. The computer program is a computer program that allows the processor to execute (namely, to perform) a below-described operation that should be executed by the control unit 17. Namely, the computer program is a computer program that allows the control unit 17 to function so as to make the processing apparatus 1 execute the below-described operation. The computer program executed by the processor may be recorded in the storage apparatus (namely, a recording medium) of the control unit 17, or may be recorded in any recording medium (for example, a hard disk or a semiconductor memory) that is built in the control unit 17 or that is attachable to the control unit 17. Alternatively, the processor may download the computer program that should be executed from an apparatus positioned at an outside of the control unit 17 through a network interface.

The control unit 17 may control an emitting aspect of the processing light EL by the irradiation optical system 1211. The emitting aspect may include at least one of an intensity of the processing light EL and an emitting timing of the processing light EL, for example. In a case where the processing light EL includes the plurality of pulsed lights, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control unit 17 may control a movement aspect of the processing head 121 by the head driving system 122. The control unit 17 may control a movement aspect of the stage 131 by the stage driving system 132. The movement aspect may include at least one of a movement distance, a movement speed, a movement direction, and a movement timing (a movement period), for example. Moreover, the control unit 17 may control a supply aspect of the build material M by the material nozzle 1212. The supply aspect may include at least one of a supplied amount (especially, a supplied amount per unit time) and a supply timing (a supply period).

The control unit 17 may not be positioned in the processing apparatus 1. For example, the control unit 17 may be positioned at the outside of the processing apparatus 1 as a server or the like. In this case, the control unit 17 may be connected to the processing apparatus 1 through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 17 and the processing apparatus 1 may be configured to transmit and receive various information through the network. Moreover, the control unit 17 may be configured to transmit information such as a command and a control parameter to the processing apparatus 1 through the network. The processing apparatus 1 may include a reception apparatus that is configured to receive the information such as the command and the control parameter from the control unit 17 through the network. The processing apparatus 1 may include a transmission apparatus that is configured to transmit the information such as the command and the control parameter to the control unit 17 through the network (namely, an output apparatus that is configured to output information to the control unit 17). Alternatively, a first control apparatus that is configured to perform a part of the arithmetic processing performed by the control unit 17 may be positioned in the processing apparatus 1 and a second control apparatus that is configured to perform another part of the arithmetic processing performed by the control unit 17 may be positioned at the outside of the processing apparatus 1.

An arithmetic model that is buildable by machine learning may be implemented in the control unit 17 by the processor executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 17 may control the operation of the processing apparatus 1 by using the arithmetic model. Namely, the operation for controlling the operation of the processing apparatus 1 may include an operation for controlling the operation of the processing apparatus 1 by using the arithmetic model. Note that the arithmetic model that has been built by off-line machine learning using training data may be implemented in the control unit 17. Moreover, the arithmetic model implemented in the control unit 17 may be updated by online machine learning on the control unit 17. Alternatively, the control unit 17 may control the operation of the processing apparatus 1 by using the arithmetic model implemented in an apparatus that is positioned at an outside of the control unit 17 (namely, an apparatus that is positioned at an outside of the processing apparatus 1), in addition to or instead of the arithmetic model implemented on the control unit 17.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control unit 17. The recording medium may include a device that is configured to record the computer program (for example, a device for a universal use or a device for an exclusive use in which the computer program is embedded to be executable in a form of at least one of a software, a firmware, and the like). Moreover, various arithmetic processing or functions included in the computer program may be realized by a logical processing block that is realized in the control unit 17 by means of the control unit 17 (namely, a computer) executing the computer program, may be realized by a hardware such as a predetermined gate array (a FPGA, an ASIC) of the control unit 17, or may be realized in a form in which the logical process block and a partial hardware module that realizes a partial element of the hardware are combined.

### (1-3) Configuration of Measurement System 2

Next, with reference to FIG. 4, a configuration of the measurement system 2 will be described. FIG. 4 is a block diagram that illustrates the configuration of the measurement system 2. As illustrated in FIG. 4, the measurement system 2 includes a shape measurement apparatus 21 and a control information generation apparatus 22.

The shape measurement apparatus 21 is configured to measure a three-dimensional shape of a measurement target object. In the present example embodiment, the measurement system 2 measures the workpiece W before the processing apparatus 1 actually starts processing the workpiece W, as described above. Therefore, the measurement target object of the shape measurement apparatus 21 may include the workpiece W.

The shape measurement apparatus 21 may have any configuration as long as it is configured to measure the three-dimensional shape of the measurement target object. For example, the shape measurement apparatus 21 may measure the three-dimensional shape of the measurement target object by using a pattern projection method or a light section method that projects a light pattern on a surface of the measurement target object by irradiating the surface with measurement light and measures a shape of the projected pattern. For example, the shape measurement apparatus 21 may measure the three-dimensional shape of the measurement target object by using a time of flight method that performs an operation, which emits measurement light to the surface of the measurement target object, calculates a time until the emitted measurement light returns from the measurement target object to the shape measurement apparatus 21, and measures a distance to the measurement target object based on the time, at a plurality of positions on the measurement target object. For example, the shape measurement apparatus 21 may measure the three-dimensional shape of the measurement target object by using at least one of a moiré topography method (specifically, a grid irradiation method or a grid projection method), a holography interference method, an auto collimation method, a stereo method, an astigmatism method, a critical angle method, and a knife edge method.

Incidentally, the shape measurement apparatus 21 is not limited to an apparatus that measures the three-dimensional shape of the measurement target object contained in its housing. For example, the shape measurement apparatus 21 may be attached to a robot arm so as to be movable around the measurement target object.

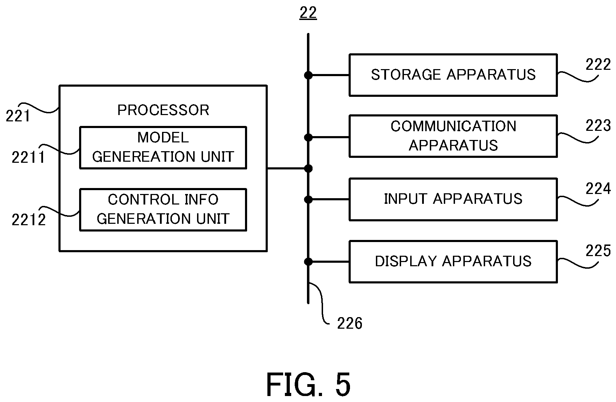

The control information generation apparatus 22 generates the processing control information. FIG. 5 illustrates one example of a configuration of the control information generation apparatus 22 that is configured to generate the processing control information. As illustrated in FIG. 5, the control information generation apparatus 22 includes a processor 221, a storage apparatus 222, and a communication apparatus 223. Furthermore, the control information generation apparatus 22 may include an input apparatus 224 and a display apparatus 225. However, the control information generation apparatus 22 may not include at least one of the input apparatus 224 and the display apparatus 225. The processor 221, the storage apparatus 222, the communication apparatus 223, the input apparatus 224, and the display apparatus 225 may be connected through a data bus 226.

The processor 221 may include at least one of a CPU (Central Processing unit) and a GPU (Graphic Processing unit), for example. The processor 221 read a computer program. For example, the processor 221 may read the computer program recorded in the storage apparatus 222. For example, the processor 221 may read the computer program recorded in a non-transitory computer-readable recording medium by using a non-illustrated recording medium reading apparatus. The processor 221 may acquire (namely, download or read) the computer program from a non-illustrated apparatus that is positioned at an outside of the control information generation apparatus 22 through the communication apparatus 223. Namely, the processor 221 may acquire (namely, download or read) the computer program recorded in a storage apparatus of the non-illustrated apparatus that is positioned at an outside of the control information generation apparatus 22 through the communication apparatus 223. The processor 221 executes the read computer program. As a result, a logical functional block for performing an operation that should be performed by the control information generation apparatus 22 (for example, an operation for generating the processing control information) is implemented in the processor 221. Namely, the processor 221 is configured to serve as a controller for implementing the logical functional block for performing the operation that should be performed by the control information generation apparatus 22. **In** this case, any apparatus (typically, a computer) that executes the computer program may serve as the control information generation apparatus 22.

FIG. 5 illustrates one example of the logical functional block implemented in the processor 221. As illustrated in FIG. 5, a model generation unit 2211 and a control information generation unit 2212 are implemented in the processor 221. The model generation unit 2211 generates a three-dimensional model indicating a three-dimensional shape of the build object that should be built by the processing apparatus 1 performing the additive manufacturing. In other words, the model generation unit 2211 generates a three-dimensional model indicating a three-dimensional shape of the three-dimensional structural object ST that should be built by the processing apparatus 1 performing the additive manufacturing. The control information generation unit 2212 generates the processing control information. Incidentally, an operation for generating the processing control information will be described in detail later.

An arithmetic model that is buildable by machine learning may be implemented in the processor 221 by the processor executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The processor 221 may generate the processing control information by using the arithmetic model. Note that the arithmetic model that has been built by off-line machine learning using training data may be implemented in the processor 221. Moreover, the arithmetic model implemented in the processor 221 may be updated by online machine learning on the processor 221. Alternatively, the processor 221 may control the operation of the processing apparatus 1 by using the arithmetic model implemented in an apparatus that is positioned at an outside of the processor 221 (namely, an apparatus that is positioned at an outside of the control information generation apparatus 22), in addition to or instead of the arithmetic model implemented on the processor 221.

The storage apparatus 222 is configured to store desired data. For example, the storage apparatus 222 may temporarily store the computer program that is executed by the processor 221. The storage apparatus 222 may temporarily store data temporarily used by the processor 221 when the processor 221 executes the computer program. The storage apparatus 222 may store data stored for a long term by the control information generation apparatus 22. Incidentally, the storage apparatus 222 may include at least one of a RAM (Random Access Memory), a ROM (Read Only Memory), a hard disk apparatus, a magneto-optical disc, a SSD (Solid State Drive), and a disk array apparatus. Namely, the storage apparatus 222 may include a non-transitory recording medium.

The communication apparatus 223 is configured to communicate with the processing apparatus 1 through a non-illustrated communication network. In the present example embodiment, the communication apparatus 223 is configured to transmit the processing control information generated by the control information generation apparatus 22 to the processing apparatus 1.

The input apparatus 224 is an apparatus that receives an input of information from an outside of the control information generation apparatus 22 to the control information generation apparatus 22. For example, the input apparatus 224 may include an operating apparatus (for example, at least one of a keyboard, a mouse, and a touch panel) that is operable by a user. In this case, the input apparatus 224 may receive the input from the user. For example, the input apparatus 224 may include a reading apparatus that is configured to read information recorded as data on a recording medium that is attachable to the control information generation apparatus 22. For example, the input apparatus 224 may receive the input of the information from a robot that is positioned at an outside of the control information generation apparatus 22. For example, the input apparatus 224 may receive the input of the information from a computer that is positioned at an outside of the control information generation apparatus 22.

The display apparatus 225 is configured to display desired information as an image. Namely, the display apparatus 225 is configured to display the image indicating the information that should be output.

The display apparatus 225 may be attached to a robot. In this case, the robot to which the display apparatus 225 is attached may output the information to the outside of the control information generation apparatus 22. For example, the robot to which the display apparatus 225 is attached may output the information as the image.

### (2) Operation of Processing System SYS

Next, an operation performed by the processing system SYS will be described. In the present example embodiment, the processing system SYS may perform a processing operation for processing the workpiece W by mainly using the processing apparatus 1. Furthermore, the processing system SYS may perform a control information generation operation for generating the processing control information by mainly using the measurement system 2. Therefore, in the below-described description, the processing operation and the control information generation operation will be described in sequence.

### (2-1) Processing Operation

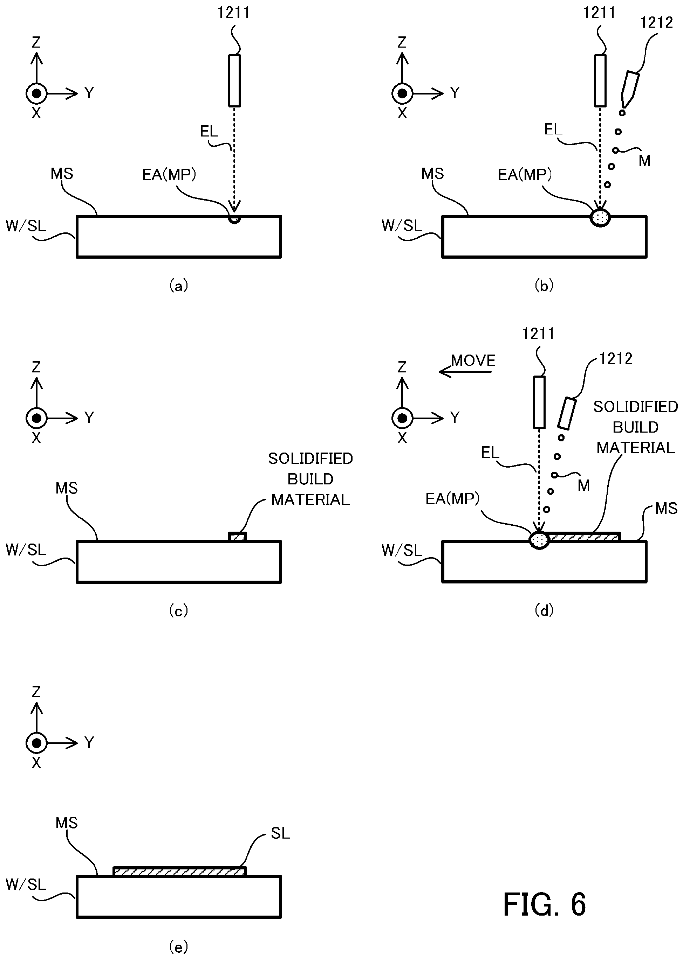

First, with reference to FIG. 6 to FIG. 7, the processing operation will be described. Especially, an additive manufacturing operation performed by the processing apparatus 1 will be described as one example of the processing operation. As described above, the processing apparatus 1 builds the three-dimensional structural object ST by using the Laser Metal Deposition. Therefore, the processing apparatus 1 may build the three-dimensional structural object ST by performing an existing additive manufacturing operation based on the Laser Metal Deposition. In the below-described description, one example of the processing operation of building the three-dimensional structural object ST by using the Laser Metal Deposition will be briefly described.

The processing system SYS sequentially builds a plurality of layered partial structural objects (it is referred to as the "structural layer" in the below described description) SL that are arranged along the Z-axis direction in order to build the three-dimensional structural object ST, for example. For example, the processing system SYS builds, one by one in sequence, the plurality of structural layers SL that are generated by slicing the three-dimensional structural object ST along the Z-axis direction. As a result, the three-dimensional structural object ST that is a layered structural body in which the plurality of structural layers SL are stacked is built. Next, a flow of an operation for building the three-dimensional structural object ST by building the plurality of structural layers SL one by one in sequence will be described.

First, with reference to FIG. 6(a) to FIG. 6(e), an operation for building each structural layer SL will be described. The processing apparatus 1 moves at least one of the processing head 121 and the stage 131 so that the target irradiation area EA is set at a desired area on the build surface MS that corresponds to a surface of the workpiece W or a surface of the built structural layer SL, under the control of the control unit 17. Then, the processing system SYS emits the processing light EL from the irradiation optical system 1211 to the target irradiation area EA. In this case, a condensed plane on which the processing light EL is condensed in the Z-axis direction may be positioned on the build surface MS. Alternatively, the condensed position may be away from the build surface MS. As a result, as illustrated in FIG. 6(a), the melt pool (namely, a pool of a metal molten by the processing light EL) MP is formed on the build surface MS that is irradiated with the processing light EL. Moreover, the processing system SYS supplies the build material M from the material nozzle 1212 under the control of the control unit 17. As a result, the build material M is supplied to the melt pool MP. The build material M supplied to the melt pool MP are molten by the processing light EL with which the melt pool MP is irradiated. Alternatively, the build material M supplied from the material nozzle 1212 may be molten by the processing light EL before reaching the melt pool MP, and the molten build material M may be supplied to the melt pool MP. Then, after the melt pool MP is no longer irradiated with the processing light EL due to the movement of at least one of the processing head 121 and the stage 131, the build material M molten in the melt pool MP is cooled and solidified (namely, coagulated). As a result, as illustrated in FIG. 6(c), the build object including the solidified build material M is deposited on the build surface MS.

The processing apparatus 1 repeats a series of build process including the formation of the melt pool MP by the irradiation of the processing light EL, the supply of the build material M to the melt pool MP, the melting of the supplied build material M and the solidification of the molten build material M while relatively moving the processing head 121 relative to the build surface MS along at least one of the X-axis direction and the Y-axis direction, as illustrated in FIG. 6(d). In this case, the processing apparatus 1 irradiates an area in which the build object should be built on the build surface MS with the processing light EL, but does not irradiate an area in which the build object should not be built on the build surface MS with the processing light EL. Namely, the processing apparatus 1 irradiates the build surface MS with the processing light EL at a timing based on an aspect of a distribution of the area in which the build object should be built, while moving the target irradiation area EA along a predetermined movement path on the build surface MS.

The movement path of the target irradiation area EA on the build surface MS may be referred to as the processing path (in other words, the tool path). The above-described processing control information includes the information related to this processing path as the processing path information. Therefore, the control information generation apparatus 22 may generate the processing control information including the processing path information. The processing apparatus 1 irradiates the build surface MS with the processing light EL at the timing based on the aspect of the distribution of the area in which the build object should be built, while moving the target irradiation area EA along the predetermined movement path on the build surface MS based on the processing control information.

As a result, the melt pool MP also moves on the build surface MS along a movement path based on the movement path of the target irradiation area EA. Specifically, the melt pool MP is formed in sequence at a part that is irradiated with the processing light EL in the area along the movement path of the target irradiation area EA on the build surface MS. As a result, as illustrated in FIG. 6(e), the structural layer SL corresponding to the build object that is an aggregation of the build material M, which has been solidified after being molten, is built on the build surface MS. Namely, the structural layer SL corresponding to an aggregation of the build object built in a pattern based on the movement path of the melt pool MP on the build surface MS (namely, the structural layer SL having a shape based on the movement path of the melt pool MP in a planar view) is built. Incidentally, when the target irradiation area EA is set at the area in which the build object should not be built, the processing apparatus 1 may irradiate the target irradiation area EA with the processing light EL and stop the supply of the build material M. Moreover, when the target irradiation area EA is set at the area in which the build object should not be built, the processing apparatus 1 may supply the build material M to the target irradiation area EA and irradiate the target irradiation area EA with the processing light EL having an intensity by which the melt pool MP is not formed.

The processing apparatus 1 repeats the operation for forming the structural layer SL based on the processing control information under the control of the control unit 17. Specifically, the processing apparatus 1 first performs an operation for building the first structural layer SL#1 on the build surface MS corresponding to the surface of the workpiece W based on the processing control information (especially, information related to the processing path for building the structural layer SL#1). As a result, the structural layer SL#1 is built on the build surface MS, as illustrated in FIG. 7(a). Then, the processing apparatus 1 sets a surface (namely, an upper surface) of the structural layer SL#1 as a new build surface MS, and builds the second structural layer SL#2 on the new build surface MS. In order to build the structural layer SL#2, the control unit 17 first controls at least one of the head driving system 122 and the stage driving system 132 so that the processing head 121 moves along the Z-axis relative to the stage 131. Specifically, the control unit 17 controls at least one of the head driving system 122 and the stage driving system 132 to move the processing head 121 toward the +Z side and / or to move the stage 131 toward the -Z side so that the target irradiation area EA is set on the surface of the structural layer SL#1 (namely, the new build surface MS). Then, the processing apparatus 1 builds the structural layer SL#2 on the structural layer SL#1 by an operation that is the same as the operation for building the structural layer SL#1 based on the processing control information (especially, information related to the processing path corresponding to the structural layer SL#2) under the control of the control unit 17. As a result, the structural layer SL#2 is built as illustrated in FIG. 7(b). Then, the same operation is repeated until all of the structural layers SL that constitute the three-dimensional structural object ST to be built on the workpiece W are built. As a result, as illustrated in FIG. 7(c), the three-dimensional structural object ST is built by the layered structural body in which the plurality of structural layers SL are stacked.

### (2-2) Control Information Generation Operation

Next, the control information generation operation will be described.

### (2-2-1) Entire Flow of Control Information Generation Operation

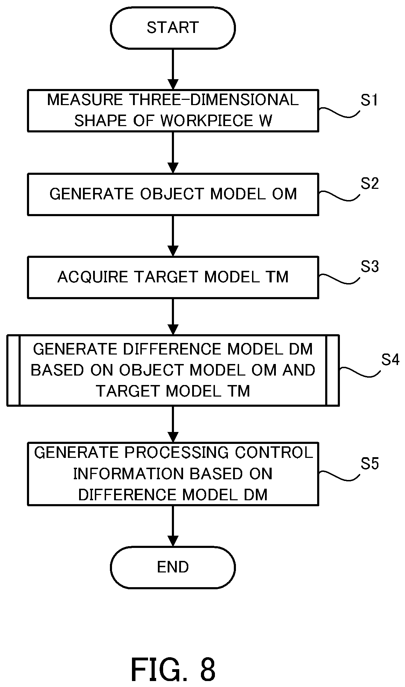

First, with reference to FIG. 8, an entire flow of the control information generation operation will be described. FIG. 8 is a flowchart that illustrates the entire flow of the control information generation operation.

As illustrated in FIG. 8, first, the shape measurement apparatus 21 measures the three-dimensional shape of the workpiece W (a step S1). As a result, the shape measurement apparatus 21 generates an object model OM. The object model OM is a three-dimensional model indicating a three-dimensional shape of the workpiece W. Specifically, the object model OM is a three-dimensional model indicating an actual three-dimensional shape of the workpiece W. Namely, the object model OM is a three-dimensional model having a three-dimensional shape that is the same as the actual three-dimensional shape of the workpiece W.

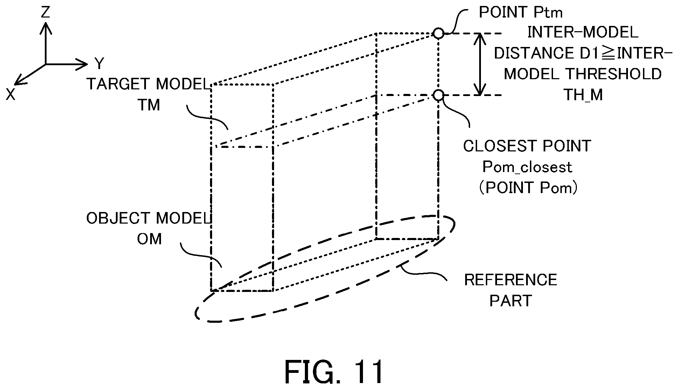

In the present example embodiment, a three-dimensional model that includes a plurality of unit areas is used as the object model OM. In other words, a three-dimensional model that is dividable into the plurality of unit areas is used as the object model OM. For example, a three-dimensional model that includes a plurality of points Pom (see FIG. 11), which are examples of the plurality of unit area, may be used as the object model OM. Namely, a three-dimensional model that uses the plurality of points Pom (namely, a point cloud) to indicate the three-dimensional shape of the workpiece W may be used as the object model OM. Incidentally, the three-dimensional model that uses the point cloud may be referred to as a point cloud model. Alternatively, for example, a three-dimensional model that includes a plurality of meshes, which are examples of the plurality of unit areas, may be used as the object model OM. Namely, a three-dimensional model that uses the plurality of meshes to indicates the three-dimensional shape of the workpiece W may be used as the object model OM. Each mesh has a polygonal shape. The three-dimensional model that includes the plurality of meshes may be referred to as a mesh model.

In the below-described description, for convenience of description, an example in which the three-dimensional model that includes the plurality of points Pom is used as the object model OM will be described. In this case, each of the plurality of points Pom may be considered to correspond to a part of the object model OM. However, even in a case where the three-dimensional model that includes the plurality of any unit areas, which are different from the plurality of points Pom, is used as the object model OM, the processing system SYS may perform the control information generation operation described below.

The shape measurement apparatus 21 outputs the generated object model OM to the control information generation apparatus 22. Alternatively, the shape measurement apparatus 21 may output a measured result of the three-dimensional shape of the workpiece W to the control information generation apparatus 22 without generating the object model OM. In this case, the control information generation apparatus 22 may generate the object model OM based on the measured result of the three-dimensional shape of the workpiece W by the shape measurement apparatus 21.

In parallel with or independently of the operation from the steps S1 to S2, the control information generation apparatus 22 (especially, the model generation unit 2211) acquires the target model TM (a step S3). A target model TM is a three-dimensional model that indicates a target shape of the workpiece W after processing. For example, a CAD (Computer Aided Design) model of the workpiece W having the target shape may be used as the target model TM. For example, a three-dimensional model acquired by actually measuring the three-dimensional shape of the workpiece W having the target shape may be used as the target model TM. In this case, a three-dimensional model indicated by a file indicating the CAD data may be used as the target model TM. At least one of a file whose extension is DWF, a file whose extension is DXF, a file whose extension is DWG, and a file whose extension is STP is one example of the file indicating the CAD data.

In the present example embodiment, a three-dimensional model that includes a plurality of unit areas is used as the target model TM. In other words, a three-dimensional model that is dividable into the plurality of unit areas is used as the target model TM. For example, a three-dimensional model that includes a plurality of points Ptm (see FIG. 11), which are examples of the plurality of unit area, may be used as the target model TM. Namely, a three-dimensional model that uses the plurality of points Pom (namely, a point cloud) to indicate the three-dimensional shape of the workpiece W may be used as the target model TM. Alternatively, for example, a three-dimensional model that includes a plurality of meshes, which are examples of the plurality of unit areas, may be used as the target model TM. Namely, a three-dimensional model that uses the plurality of meshes to indicates the three-dimensional shape of the workpiece W may be used as the target model TM. Each mesh has a polygonal shape. The three-dimensional model that includes the plurality of meshes may be referred to as a mesh model.

In the below-described description, for convenience of description, an example in which the three-dimensional model that includes the plurality of points Ptm is used as the target model TM will be described. In this case, each of the plurality of points Ptm may be considered to correspond to a part of the target model TM. However, even in a case where the three-dimensional model that includes the plurality of any unit areas, which are different from the plurality of points Ptm, is used as the target model TM, the processing system SYS may perform the control information generation operation described below.

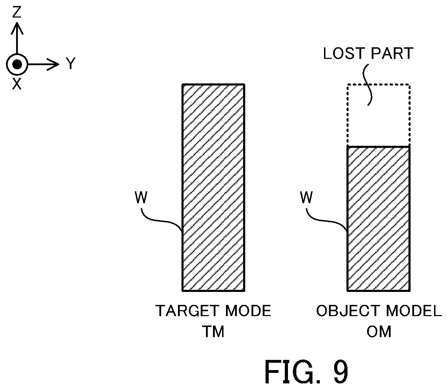

FIG. 9 illustrates one example of each of the object model OM and the target model TM. As illustrated in FIG. 9, the target shape of the workpiece W indicated by the target model TM is typically different from the actual three-dimensional shape of the workpiece W indicated by the object model OM. For example, in a case where the item that needs to be repaired having the lost part is used as the workpiece W as described above, the object model OM indicates the three-dimensional shape of the workpiece W that has been partially lost due to the use of the workpiece W, as illustrated in FIG. 9. On the other hand, as illustrated in FIG. 9, the target model TM indicates the three-dimensional shape of the workpiece W that has not been lost. Namely, the object model OM indicates the three-dimensional shape of the workpiece W that has actually been used, and the target model TM indicates the three-dimensional shape of the workpiece W before it is actually used. As one example, in a case where the workpiece W is the turbine blade that has worn partially, the object model OM indicates the three-dimensional shape of the turbine blade that has worn partially, and the target model TM indicates the three-dimensional shape of the turbine blade that has not worn.

Incidentally, "the use of the workpiece W" in the present example embodiment may include using the workpiece W in a way that is appropriate for an intended use of the workpiece W. In a case where the workpiece W is used as a component of a product, "the use of the workpiece W" may include using the product including the workpiece W in a way that is appropriate for an intended use of the product. For example, in a case where the workpiece W includes the turbine blade, the use of the turbine blade may include using the turbine including the turbine blade in a way that is appropriate for an intended use of the turbine.

Moreover, considering that the above-described situation where a part of the workpiece W is lost (for example, worn) due to the user of the workpiece W is one example of a situation where the processing system SYS in the present example embodiment is used, "the use of the workpiece W" may include a use of the workpiece W that causes a loss of a part of the workpiece W. For example, "the use of the workpiece W" may include a use of the workpiece W over a long time period that causes the loss of a part of the workpiece W. Therefore, the actually used workpiece W may include the workpiece W that has been used to the extent that a part of the workpiece W is lost. On the other hand, the workpiece W before it is actually used may include the workpiece W that has not been used to the extent that a part of the workpiece W is lost although it has been used. For example, the workpiece W before it is actually used may include the use of the workpiece W over a short time period (for example, a trial operation of the workpiece W or the product including the workpiece W) that does not cause the loss of a part of the workpiece W. Of course, the workpiece W before it is actually used may literally include the workpiece W that has not yet been used. For example, the workpiece W before it is actually used may include the workpiece W before it is shipped as the product or the component. For example, the workpiece W before it is actually used may include the workpiece W in a design stage.

In FIG. 8 again, then, the model generation unit 2211 generates a three-dimensional model that indicates a three-dimensional shape of the build object, which should be built by the processing apparatus 1 performing the additive manufacturing, based on the object model OM generated at the step S2 and the target model TM acquired at the step S3 (a step S4). Namely, the model generation unit 2211 generates a three-dimensional model that indicates the three-dimensional shape of the three-dimensional structural object ST that should be built by the processing apparatus 1 (the step S4). In other words, the model generation unit 2211 generates a three-dimensional model that indicates a three-dimensional shape of a part (the build object) that is added to the workpiece W in order to process the workpiece W so that the shape of the workpiece W becomes the target shape (the step S4).

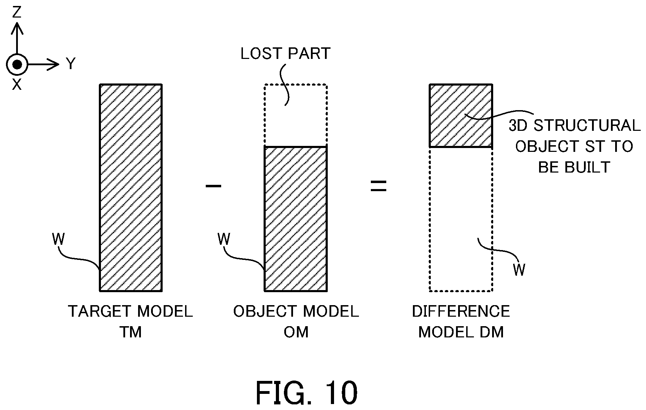

Specifically, as illustrated in FIG. 10 that schematically illustrates the target model TM and the object model OM, the target model TM indicates the target shape of the workpiece W, and the object model OM indicates the actual three-dimensional shape of the workpiece W. In this case, a difference between the target model TM and the object model OM corresponds to the three-dimensional model indicating the three-dimensional shape of the three-dimensional structural object ST that should be built by the processing apparatus 1, as illustrated in FIG. 10. Therefore, as illustrated in FIG. 10, the model generation unit 2211 may generate the three-dimensional model corresponding to the difference between the target model TM and the object model OM as the three-dimensional model indicating the three-dimensional shape of the three-dimensional structural object ST that should be built by the processing apparatus 1. Incidentally, in the below-described description, the three-dimensional model corresponding to the difference between the target model TM and the object model OM is referred to as a difference model DM. The difference model DM is typically a three-dimensional model that corresponds to a part of the target model TM.

In FIG. 8 again, then, the control information generation apparatus 22 (especially, the control information generation unit 2212) generates the processing control information based on the difference model DM generated at the step S4 (a step S5). For example, the control information generation unit 2212 may generate a plurality of slice data, which correspond to the plurality of structural layers SL included in the three-dimensional structural object ST, respectively, by performing a slicing process for dividing the difference model DM into a plurality of layered models with a layered pitch corresponding to a thickness of the structural layer SL. Then, the control information generation unit 2212 may generate the plurality of pieces of processing control information, which are used to build the plurality of structural layers SL, respectively, based on the plurality of slice data.

### (2-2-2) Difference Model Generation Operation

Next, a difference model generation operation, that is an operation for generating the difference model DM at the step S4 of FIG. 8 will be described. Incidentally, in the below-described description, the difference model generation operation that is performed in a case where the three-dimensional model including the plurality of points Pom (the point cloud) is used as the object model OM and the three-dimensional model including the plurality of points Ptm (the point cloud) is used as the target model TM as described above will be described, for convenience of description.

### (2-2-2-1) Overview of Difference Model Generation Operation

First, an overview of the difference model generation operation will be described with reference to FIG. 11 to FIG. 13.

FIG. 11 schematically illustrates the point Pom included in the object model OM and a point Ptm included in the target model TM. In order to generate the difference model DM, the model generation unit 2211 first perform a position alignment of the object model OM and the target model TM in a predetermined coordinate space, as illustrated in FIG. 11. For example, the model generation unit 2211 may perform the position alignment of the object model OM and the target model TM so that a reference part of the object model OM and a reference part of the target model TM are positioned at the same position in the predetermined coordinate space. In other words, the model generation unit 2211 may perform the position alignment of the object model OM and the target model TM so that a position of the reference part of the object model OM is the same as a position of the reference part of the target model TM in the predetermined coordinate space. For example, the model generation unit 2211 may perform the position alignment of the object model OM and the target model TM so that the object model OM and the target model TM overlap at least partially by positioning the reference part of the object model OM and the reference part of the target model TM at the same position in the predetermined coordinate space.

The reference part of each of the object model OM and the target model TM may be a model part that correspond to a reference part of the workpiece W. The reference parts of the workpiece W may include a part that is not easily worn by the use of the workpiece W. The reference parts of the workpiece W may include a part that is not easily deformed by the use of the workpiece W. For example, in a case where the workpiece W is the turbine blade, the reference part of the workpiece W may include at least a part of a shank of the turbine blade.

After performing the position alignment of the object model OM and the target model TM, the model generation unit 2211 extracts (in other words, calculates or acquires), as a plurality of extraction points Pext, a plurality of points Ptm that satisfy a predetermined distance condition from among the plurality of points Ptm included in the target model TM. The predetermined distance condition may include a condition that a distance D1 (in the below-described description, it is referred to as an "inter-model distance D1") between one point Ptm of the target model TM and one point Pom of the object model OM that is closest to the one point Ptm is equal to or longer than a predetermined inter-model distance threshold TH_M. In a case where the point Pom is a part of a surface of the object model OM that is closest to the one point Ptm of the target model TM, the inter-model distance D1 may be a distance between the one point Ptm of the target model TM and this point Pom. In the below-described description, for convenience of description, one point Pom of the object model OM that is closest to one point Ptm of the target model TM is referred to as a "closest point Pom_closest". In this case, in a case where the inter-model distance D1 between one point Ptm and the closest point Pom_closest is equal to or longer than the inter-model distance threshold TH_M, the model generation unit 2211 extracts this one point Ptm as the point Ptm that satisfies the distance condition (namely, as the extraction point Pext). On the other hand, in a case where the inter-model distance D1 between one point Ptm and the closest point Pom_closest is not equal to and longer than the inter-model distance threshold TH_M, the model generation unit 2211 may not extract this one point Ptm as the point Ptm that satisfies the distance condition (namely, as the extraction point Pext).

Incidentally, the inter-model distance threshold TH_M may be simply referred to as a distance threshold, because it is a threshold that is used for a comparison with a parameter of the distance that is referred to as the inter-model distance D1.

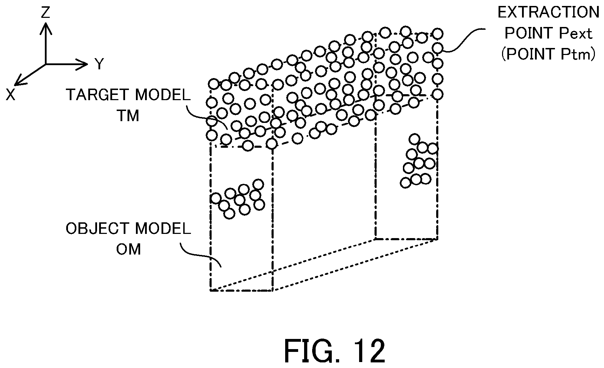

In a case where the target model TM includes N points Ptm (specifically, points Ptm#1 to Ptm#N), the model generation unit 2211 repeats an operation for determining whether or not the inter-model distance D1#k between the point Ptm#k (wherein, k is a variable number representing an integer that is equal to or larger than and that is equal to or smaller than N) and the closest point Pom_closest#k of the object model OM that is closest to the point Ptm#k is equal to or longer than the inter-model distance threshold TH_M, while changing the variable number k from 1 to N. As a result, as illustrated in FIG. 12 schematically illustrating the plurality of points Ptm that satisfy the distance condition, the plurality of points Ptm that satisfy the distance condition are extracted as the plurality of extraction points Pext.

As illustrated in FIG. 12, the plurality of extraction points Pext that satisfy the distance condition typically correspond to the difference between the object model OM and the target model TM. As illustrated in FIG. 12, the plurality of extraction points Pext indicate the three-dimensional shape of the difference between the object model OM and the target model TM, so the model generation unit 2211 may generate the difference model DM based on the plurality of extraction points Pext. For example, the model generation unit 2211 may generate, as the difference model DM, a three-dimensional model that includes the plurality of extraction points Pext. For example, the model generation unit 2211 may generate, as the difference model DM, a three-dimensional model that has a three-dimensional shape indicated by the plurality of extraction points Pext.

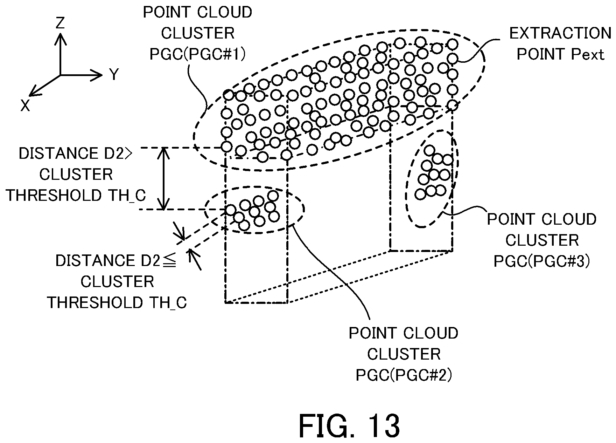

However, as illustrated in FIG. 12, there is a likelihood that the plurality of extraction points Pext include the extraction point Pext that does not indicate the difference between the object model OM and the target model TM. Namely, there is a likelihood that the plurality of extraction points Pext include the extraction point Pext corresponding to a noise that should not be used to generate the difference model DM. Therefore, in the present example embodiment, the model generation unit 2211 performs a clustering of the plurality of extraction points Pext after extracting the plurality of extraction points Pext. Specifically, as illustrated in FIG. 13 that illustrates the plurality of extraction points Pext, the model generation unit 2211 performs the clustering of the plurality of extraction points Pext so that two extraction points Pext, which satisfy a condition that a distance D2 between the two extraction points Pext is equal to or shorter than a predetermined cluster threshold TH_C, are classified into the same point cloud cluster PGC. In this case, the clustering of the plurality of extraction points Pext may be regarded as a processing for applying a labeling processing of a connected component in a graph to the point cloud, and a processing for classifying each extraction point Pext into a cluster while considering that two extraction points Pext, which are distant from each other by the distance D2 that is equal to or shorter than the cluster threshold TH_C, are connected. Incidentally, the point cloud cluster PGC may be referred to as a cluster area. However, the model generation unit 2211 may not necessarily perform the clustering of the plurality of extraction points Pext.

The distance D2 between two extraction points Pext may be a distance on the order of micrometers. The distance D2 between two extraction points Pext may be a parameter that is adjustable on the order of micrometers. For example, the distance D2 between two extraction points Pext may be a distance of several hundred micrometers. Alternatively, the distance D2 between two extraction points Pext may be a distance on the order of sub-millimeters to centimeters. The distance D2 between two extraction points Pext may be a parameter that is adjustable on the order of sub-millimeters to centimeters. Alternatively, the distance D2 between two extraction points Pext may be a distance that is allowed to be expressed by using the number of pixels in the image.

Incidentally, the cluster threshold TH_C may be simply referred to as a distance threshold, because it is a threshold that is used for a comparison with a parameter of the distance that is referred to as the distance D2. Namely, the cluster threshold TH_C may be regarded as an example of the distance threshold that is used for a comparison with the parameter of the distance, as with the inter-model distance threshold TH_M described above.

For example, in a case where the distance D2 between a first extraction point Pext and a second extraction point Pext is equal to or shorter than the cluster threshold TH_C, the model generation unit 2211 performs the clustering of the first extraction point Pext and the second extraction point Pext so that the first extraction point Pext and the second extraction point Pext are classified into a first point cloud cluster PGC. Furthermore, for example, in a case where the distance D2 between a third extraction point Pext and at least one of the first and second extraction points Pext is equal to or shorter than the cluster threshold TH_C, the model generation unit 2211 performs the clustering of the third extraction point Pext so that the third extraction point Pext is classified into the first point cloud cluster PGC into which the first and second extraction points Pext are classified. On the other hand, for example, in a case where the distance D2 between the third extraction point Pext and each of the first and second extraction points Pext is not equal to or shorter than the cluster threshold TH_C, the model generation unit 2211 performs the clustering of the third extraction point Pext so that the third extraction point Pext is classified into a second point cloud cluster PGC that is different from the first point cloud cluster PGC into which the first and second extraction points Pext are classified.

Alternatively, for example, in a case where the distance D2 between the first extraction point Pext and the second extraction point Pext is not equal to or shorter than the cluster threshold TH_C, the model generation unit 2211 performs the clustering of the first extraction point Pext and the second extraction point Pext so that the first extraction point Pext is classified into a first point cloud cluster PGC and the second extraction point Pext is classified into a second point cloud cluster PGC that is different from the first point cloud cluster PGC. Furthermore, for example, in a case where the distance D2 between the third extraction point Pext and the first extraction point Pext is equal to or shorter than the cluster threshold TH_C, the model generation unit 2211 performs the clustering of the third extraction point Pext so that the third extraction point Pext is classified into the first point cloud cluster PGC into which the first extraction point Pext is classified. On the other hand, for example, in a case where the distance D2 between the third extraction point Pext and the second extraction point Pext is equal to or shorter than the cluster threshold TH_C, the model generation unit 2211 performs the clustering of the third extraction point Pext so that the third extraction point Pext is classified into the second point cloud cluster PGC into which the second extraction point Pext is classified. On the other hand, for example, in a case where the distance D2 between the third extraction point Pext and each of the first and second extraction points Pext is not equal to or shorter than the cluster threshold TH_C, the model generation unit 2211 performs the clustering of the third extraction point Pext so that the third extraction point Pext is classified into a third point cloud cluster PGC that is different from the first and second point cloud clusters PGC into which the first and second extraction points Pext are classified, respectively.

As a result, as illustrated in FIG. 13, the model generation unit 2211 generates (in other words, calculates or acquires) at least one point cloud cluster PGC into which at least one extraction point Pext is classified. In the example illustrated in FIG. 13, the model generation unit 2211 performs the clustering of the plurality of extraction points Pext so that three point cloud clusters PGC (specifically, a point cloud cluster PGC#1, a point cloud cluster PGC#2, and a point cloud cluster PGC#3) are generated.

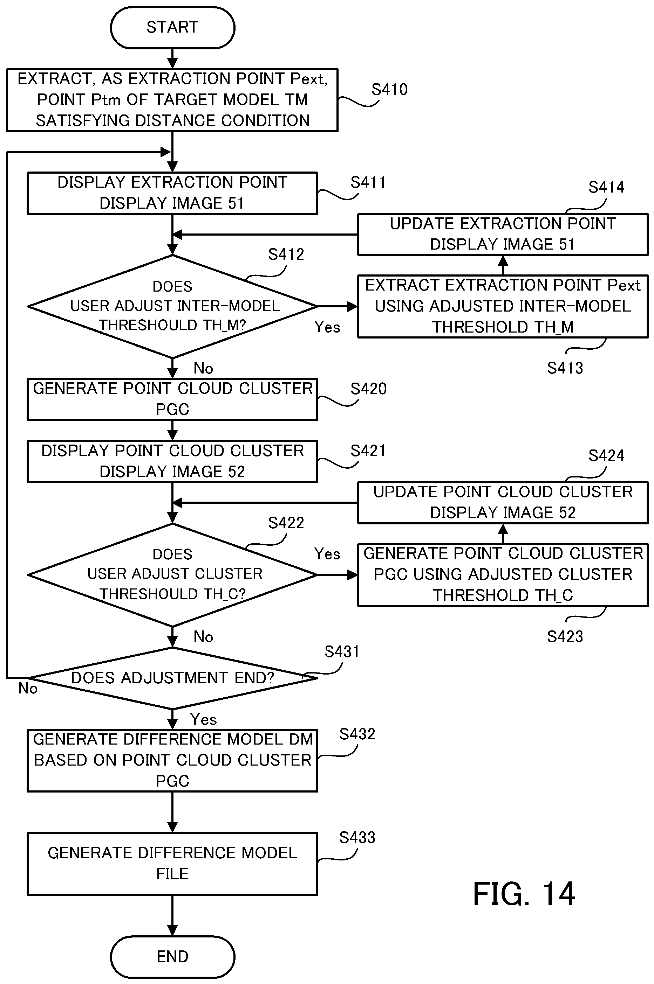

Then, the model generation unit 2211 generates the difference model DM based on at least one point cloud cluster PGC. Incidentally, an operation for generating the difference model DM based on at least one point cloud cluster PGC will be described in detail later with reference to FIG. 14, so the description thereof is omitted here.

### (2-2-2-2) Flow of Difference Model Generation Operation

Next, with reference to FIG. 14, a flow of the difference model generation operation, will be described. FIG. 14 is a flowchart that illustrates the flow of the difference model generation operation.

As illustrated in FIG. 14, the model generation unit 2211 first extracts, as the plurality of extraction points Pext, the plurality of points Ptm that satisfy the predetermined distance condition from among the plurality of points Ptm included in the target model TM (a step S410). Specifically, the model generation unit 2211 extracts, as the extraction point Pext, a point Ptm that satisfies the condition that the inter-model distance D1 between the point Ptm of the target model TM and the closest point Pom_closest is equal to or longer than the inter-model distance threshold TH_M. Incidentally, in the step S410, the model generation unit 2211 may extract the plurality of extraction points Pext by using a default inter-model distance threshold TH_M.

Then, the model generation unit 2211 controls the display apparatus 25 to display an extraction point display image 51 for displaying the plurality of extraction points Pext extracted by the model generation unit 2211 (a step S411). As a result, the display apparatus 25 displays the extraction point display image 51 under the control of the model generation unit 2211 (the step S411).

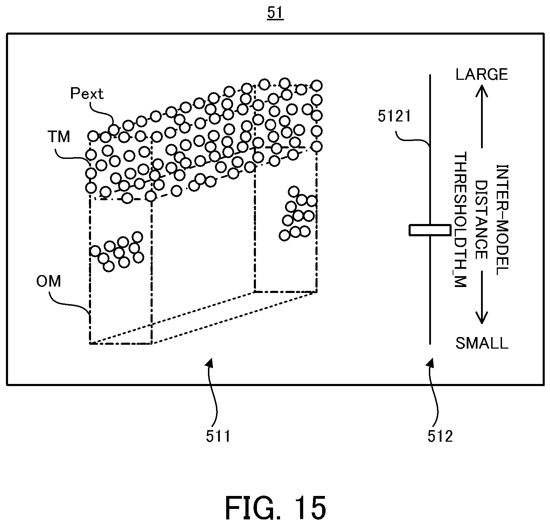

FIG. 15 illustrates one example of the extraction point display image 51. As illustrated in FIG. 15, the extraction point display image 51 may include a display image 511 for displaying the plurality of extraction points Pext extracted by the model generation unit 2211. In an example illustrated in FIG. 15, the plurality of extraction points Pext are displayed in the display image 511 in a three-dimensional manner in a predetermined coordinate space. However, a display method that is different from the display method illustrated in FIG. 15 may be used as a display method of the plurality of extraction points Pext in the display image 511.

In the display image 511, the plurality of extraction points Pext may be displayed together with at least one of the target model TM and the object model OM. For example, in the display image 511, the plurality of extraction points Pext may be displayed in a state where the plurality of extraction points Pext are aligned with the target model TM. In other words, in the display image 511, the plurality of extraction points Pext may be displayed in a state where the plurality of extraction points Pext are associated with the target model TM. For example, in the display image 511, the plurality of extraction points Pext may be displayed in a state where the plurality of extraction points Pext are aligned with the object model OM. In other words, in the display image 511, the plurality of extraction points Pext may be displayed in a state where the plurality of extraction points Pext are associated with the object model OM.

In the example illustrated in FIG. 15, the plurality of extraction points Pext are displayed together with both the target model TM and the object model OM in the display image 511. In this case, the target model TM and the object model OM may be displayed in a state where the target model TM and the object model OM are aligned with each other. For example, the target model TM and the object model OM may be displayed so that the reference part of the object model OM and the reference part of the target model TM are positioned at the same position in the predetermined coordinate space as described above. For example, the target model TM and the object model OM may be displayed so that the object model OM and the target model TM overlap at least partially by positioning the reference part of the object model OM and the reference part of the target model TM at the same position in the predetermined coordinate space as described above.

The model generation unit 2211 may change a display aspect of a group of display object(s), which includes the plurality of extraction points Pext displayed in the display image 511, based on an input from the user using the input apparatus 24. For example, the model generation unit 2211 may translate the display object in the predetermined coordinate space defined in the display image 511. For example, the model generation unit 2211 may rotate the display object in the predetermined coordinate space defined in the display image 511. For example, the model generation unit 2211 may scale up or scale down the display object in the predetermined coordinate space defined in the display image 511. Incidentally, in a case where the plurality of extraction points Pext are displayed in the display image 511 together with at least one of the target model TM and the object model OM, the group of display object(s) including the plurality of extraction points Pext may include at least one of the target model TM and the object model OM.

Moreover, in the present example embodiment, the extraction point display image 51 may include a display image 512 including an operational object 5121 that is allowed to be operated by the user to adjust the inter-model distance threshold TH_M used to extract the extraction points Pext. In this case, the user may adjust (in other words, set or change) the inter-model distance threshold TH_M by using the input apparatus 24 to operate the operational object 5121.

In the example illustrated in FIG. 15, a slider (in other words, a slider bar) is used as the operational object 5121. In this case, the user may adjust the inter-model distance threshold TH_M so that the inter-model distance threshold TH_M becomes larger by performing an operation for moving the slider toward a first direction (for example, toward an upward direction in FIG. 15). On the other hand, the user may adjust the inter-model distance threshold TH_M so that the inter-model distance threshold TH_M becomes smaller by moving the slider toward a second direction opposite to the first direction (for example, toward a downward direction in FIG. 15).

Incidentally, a display object that is different from the slider may be used as the operational object 5121. For example, a display object that is allowed to specify one candidate value, which should be set to the inter-model distance threshold TH_M, from among a plurality of candidate values for the inter-model distance threshold TH_M may be used as the scanning object 5121. At least one of a combo box, a drop-down list, and a radio button is one example of this display object.

The input apparatus 224 that is used by the user to operate the operational object 5121 may be configured to receive the input from the user for operating the scanning object 5121. As one example, the input apparatus 224 may be configured to receive at least one of a slide input, a pinch input, and a spin input. In this case, the user may adjust the inter-model distance threshold TH_M by performing at least one of the slide input, the pinch input, and the spin input.

The user may adjust the inter-model distance threshold TH_M on the order of micrometers. The user may adjust the inter-model distance threshold TH_M on the order of sub-millimeters to centimeters. The user may adjust the inter-model distance threshold TH_M by using the number of pixels in the image.

In FIG. 14 again, the model generation unit 2211 determines whether or not the user has adjusted the inter-model distance threshold TH_M by using the input apparatus 24 (a step S412). Namely, the model generation unit 2211 determines whether or not the user has performed the operation for adjusting the inter-model distance threshold TH_M by using the input apparatus 24 (the step S412). In other words, the model generation unit 2211 determines whether or not the input apparatus 24 has received the input from the user for adjusting the inter-model distance threshold TH_M (the step S412).

As a result of the determination at the step S412, in a case where it is determined that the user has adjusted the inter-model distance threshold TH_M (the step S412: Yes), the model generation unit 2211 extracts the plurality of extraction points Pext by using the inter-model distance threshold TH_M adjusted by the user (a step S413). Namely, the model generation unit 2211 re-extracts the plurality of extraction points Pext by using the inter-model distance threshold TH_M adjusted by the user. Specifically, the model generation unit 2211 extracts, as the extraction point Pext, the point Ptm that satisfies the condition that the inter-model distance D1 between the point Ptm of the target model TM and the closest point Pom_closest is equal to or longer than the inter-model distance threshold TH_M adjusted by the user (the step S413). In other words, the model generation unit 2211 updates the plurality of extraction points Pext based on the user's operation of the operational object 5121 (the step S413).

Then, the model generation unit 2211 controls the display apparatus 25 to display the extraction point display image 51 for displaying the plurality of extraction points Pext extracted at the step S413 (a step S414). As a result, the display apparatus 25 displays the extraction point display image 51 for displaying the plurality of extraction points Pext extracted at the step S413 under the control of the model generation unit 2211 (the step S414).

In this case, the model generation unit 2211 may be considered to control the display apparatus 25 to update the extraction point display image 51. Specifically, the model generation unit 2211 may be considered to control the display apparatus 25 to update the extraction point display image 51 based on the plurality of extraction points Pext extracted at the step S413. Since the plurality of extraction points Pext are extracted based on the user's operation of the operational object 5121 at the step S413, the model generation unit 2211 may be considered to control the display apparatus 25 to update the extraction point display image 51 based on the user's operation of the operational object 5121.

Then, the model generation unit 2211 extracts the plurality of extraction points Pext (the step S413) and updates the extraction point display image 51 (the step S414) each time it is determined that the user has adjusted the inter-model distance threshold TH_M (the step S412: Yes). Incidentally, in a case where an adjustment speed of the inter-model distance threshold TH_M by the user is equal to or higher than a predetermined threshold, the model generation unit 2211 may not update the extraction point display image 51 each time the inter-model distance threshold TH_M is adjusted by the user.

The model generation unit 2211 may reflect a result of the user's adjustment of the inter-model distance threshold TH_M in real time in the extraction point display image 51. Namely, when the user has adjusted the inter-model distance threshold TH_M, the model generation unit 2211 may extract the plurality of extraction points Pext and update the extraction point display image 51 in real time. For example, in a case where the operation from the step S412 to the step S414 described above is performed at a relatively fast cycle, the model generation unit 2211 may reflect the result of the user's adjustment of the inter-model distance threshold TH_M in the extraction point display image 51 in real time. However, the model generation unit 2211 may not reflect the result of the user's adjustment of the inter-model distance threshold TH_M in the extraction point display image 51 in real time.

In this manner, in the present example embodiment, the user may adjust the inter-model distance threshold TH_M as necessary by using the operational object 5121 included in the extraction point display image 51. For example, in a case where the plurality of extraction points Pext displayed in the extraction point display image 51 are not appropriate, the user may adjust the inter-model distance threshold TH_M so that appropriate extraction points Pext are extracted. In this case, since the plurality of extraction points Pext that have been extracted are displayed in the extraction point display image 51, the user may easily check the plurality of extraction points Pext displayed in the extraction point display image 51. As a result, the user can adjust the inter-model distance threshold TH_M relatively easily so that appropriate extraction points Pext are extracted, compared to a case where the plurality of extraction points Pext that have been extracted are not displayed in the extraction point display image 51. Furthermore, in a case where the inter-model distance threshold TH_M is adjusted, the model generation unit 2211 can extract more appropriate extraction points Pext, compared to a case where the inter-model distance threshold TH_M is fixed. As a result, the model generation unit 2211 can generate more appropriate difference model DM based on the appropriate extraction points Pext that have been extracted in this manner.

The model generation unit 2211 may change a display aspect of each extraction point Pext based on the inter-model distance D1 between each extraction point Pext and the closest point Pom_closest that is the closest to each extraction point Pext. For example, there is a higher likelihood that each extraction point Pext is a point Ptm that appropriately indicates the difference between the target model TM and the object model OM as the inter-model distance D1 between each extraction point Pext and the closest point Pom_closest is longer. This is because this extraction point Pext is the point Ptm of the target model TM that is relatively far from the object model OM, so it is more natural to consider it as the point Ptm that appropriately indicates the difference between the target model TM and the object model OM. Conversely, there is a higher likelihood that each extraction point Pext is a noise that does not appropriately indicate the difference between the target model TM and the object model OM as the inter-model distance D1 between each extraction point Pext and the closest point Pom_closest is shorter. Therefore, the model generation unit 2211 may change the display aspect of each extraction point Pext so that the display aspect of the extraction point Pext whose inter-model distance D1 is longer than a predetermined noise threshold is different from the display aspect of the extraction point Pext whose inter-model distance D1 is shorter than the predetermined noise threshold. Namely, the model generation unit 2211 may change the display aspect of each extraction point Pext so that the display aspect of the extraction point Pext that has a relatively high likelihood of being noise is different from the display aspect of the extraction point Pext that has a relatively low likelihood of being noise. In this case, the user may check the extraction point display image 51 to adjust the inter-model distance threshold TH_M so that the number of extraction points Pext that have a relatively high likelihood of being noise decreases. As a result, the model generation unit 2211 can appropriately extract the extraction points Pext that appropriately indicate the difference between the target model TM and the object model OM. Therefore, the model generation unit 2211 can generate more appropriate difference model DM based on the appropriate extraction points Pext that have been extracted in this manner. Incidentally, a display color is one example of the display aspect.

The model generation unit 2211 may change the display aspects of all of the plurality of extraction points Pext based on the inter-model distance D1. Alternatively, the model generation unit 2211 may change the display aspect of a part of the plurality of extraction points Pext based on the inter-model distance D1, and may not change the display aspect of other part of the plurality of extraction points Pext based on the inter-model distance D1. For example, while the model generation unit 2211 may change the display aspect of a part of the plurality of extraction points Pext based on the inter-model distance D1, and may display other part of the plurality of extraction points Pext in a predetermined color (for example, gray). Alternatively, the model generation unit 2211 may change the display aspect of a part of the plurality of extraction points Pext based on the inter-model distance D1, and may not display other part of the plurality of extraction points Pext.

The model generation unit 2211 may display the extraction point display image 51 that includes a display object for displaying the plurality of points Ptm included in the target model TM. In this case, the model generation unit 2211 may change the display aspect of each point Ptm based on the inter-model distance D1 as in a case where the display aspect of each extraction point Pext is changed based on the inter-model distance D1.

In addition to changing the display aspect of each extraction point Pext based on the inter-model distance D1, the model generation unit 2211 may display the extraction point display image 51 that includes a histogram indicating an appearance frequency of the extraction point Pext based on the inter-model distance D1. In addition to changing the display aspect of each point Ptm based on the inter-model distance D1, the model generation unit 2211 may display the extraction point display image 51 that includes a histogram indicating an appearance frequency of the point Ptm based on the inter-model distance D1.

On the other hand, as a result of the determination at the step S412, in a case where it is determined that the user has not adjusted the inter-model distance threshold TH_M (the step S412: No), the model generation unit 2211 generates at least one point cloud cluster PGC by clustering the plurality of extraction points Pext (a step S420). Specifically, the model generation unit 2211 generates at least one point cloud cluster PG by classifying two extraction points Pext, which satisfy the condition that the distance D2 between the two extraction points Pext is equal to or shorter than the predetermined cluster threshold TH_C, into the same point cloud cluster PGC. Incidentally, at the step S420, the model generation unit 2211 may generate the point cloud clusters PGC by using a default cluster threshold TH_C.

Then, the model generation unit 2211 controls the display apparatus 25 to display a point cloud cluster display image 52 for displaying at least one point cloud cluster PGC generated by the model generation unit 2211 (a step S421). As a result, the display apparatus 25 displays the point cloud cluster display image 52 under the control of the model generation unit 2211 (the step S421).

The model generation unit 2211 may control the display apparatus 25 to display the point cloud cluster display image 52 instead of the extraction point display image 51. Namely, the model generation unit 2211 may control the display apparatus 25 to display one of the extraction point display image 51 and the point cloud cluster display image 52, but not to display the other one of the extraction point display image 51 and the point cloud cluster display image 52. In this case, the display apparatus 25 may be considered to switch the image displayed on the display apparatus 25 between the extraction point display image 51 and the point cloud cluster display image 52 exclusively. Even in a case where the extraction point display image 51 is displayed at the above-described step S410, the model generation unit 2211 may control the display apparatus 25 to display the extraction point display image 51 instead of the point cloud cluster display image 52.

Alternatively, the model generation unit 2211 may control the display apparatus 25 to display the point cloud cluster display image 52 in addition to the extraction point display image 51. Namely, the model generation unit 2211 may control the display apparatus 25 to display both the extraction point display image 51 and the point cloud cluster display image 52. In this case, the display apparatus 25 may display both the extraction point display image 51 and the point cloud cluster display image 52 simultaneously. Namely, the display apparatus 25 may display the extraction point display image 51 and the point cloud cluster display image 52 simultaneously within a single display screen. Even in a case where the extraction point display image 51 is displayed in the above-described step S410, the model generation unit 2211 may control the display apparatus 25 to display both the extraction point display image 51 and the point cloud cluster display image 52.

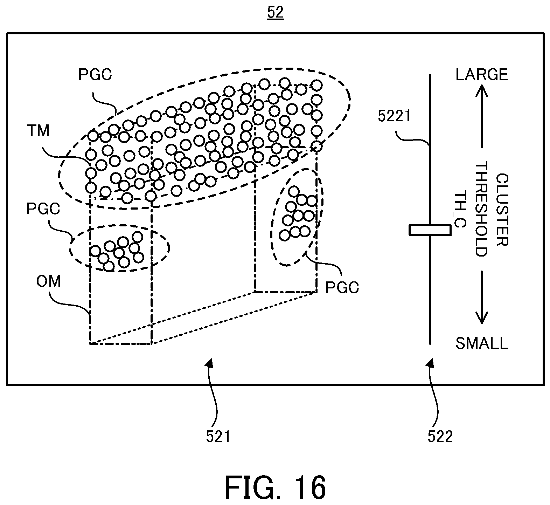

FIG. 16 illustrates one example of the point cloud cluster display image 52. As illustrated in FIG. 16, the point cloud cluster display image 52 may include a display image 521 for displaying at least one point cloud cluster PGC generated by the model generation unit 2211. In an example illustrated in FIG. 16, at least one point cloud cluster PGC is displayed in the display image 521 in a three-dimensional manner in a predetermined coordinate space. However, a display method that is different from the display method illustrated in FIG. 16 may be used as a display method of at least one point cloud cluster PGC in the display image 521.

In the display image 521, at least one point cloud cluster PGC may be displayed together with at least one of the target model TM and the object model OM. For example, in the display image 521, at least one point cloud cluster PGC may be displayed in a state where at least one point cloud cluster PGC is aligned with the target model TM. In other words, in the display image 521, at least one point cloud cluster PGC may be displayed in a state where at least one point cloud cluster PGC is associated with the target model TM. For example, in the display image 521, at least one point cloud cluster PGC may be displayed in a state where at least one point cloud cluster PGC is aligned with the object model OM. In other words, in the display image 521, at least one point cloud cluster PGC may be displayed in a state where at least one point cloud cluster PGC is associated with the object model OM.

In the example illustrated in FIG. 16, at least one point cloud cluster PGC is displayed in the display image 521 together with both the target model TM and the object model OM. In this case, the target model TM and the object model OM may be displayed in a state where the target model TM and the object model OM are aligned with each other. For example, the target model TM and the object model OM may be displayed so that the reference part of the object model OM and the reference part of the target model TM are positioned at the same position in the predetermined coordinate space as described above. For example, the target model TM and the object model OM may be displayed so that the object model OM and the target model TM overlap at least partially by positioning the reference part of the object model OM and the reference part of the target model TM at the same position in the predetermined coordinate space as described above.

The model generation unit 2211 may change a display aspect of a group of display object(s), which includes at least one point cloud cluster PGC displayed in the display image 521, based on an input from the user using the input apparatus 24. For example, the model generation unit 2211 may translate the display object in the predetermined coordinate space defined in the display image 521. For example, the model generation unit 2211 may rotate the display object in the predetermined coordinate space defined in the display image 521. For example, the model generation unit 2211 may scale up or scale down the display object in the predetermined coordinate space defined in the display image 521. Incidentally, in a case where at least one point cloud cluster PGC is displayed in the display image 521 together with at least one of the target model TM and the object model OM, the group of display object(s) including at least one point cloud cluster PGC may include at least one of the target model TM and the object model OM.

Moreover, in the present example embodiment, the point cloud cluster display image 52 may include a display image 522 including an operational object 5221 that is allowed to be operated by the user to adjust the cluster threshold TH_C used to generate the point cloud cluster PGC. In this case, the user may adjust (in other words, set or change) the cluster threshold TH_C by using the input apparatus 24 to operate the operational object 5221.

In the example illustrated in FIG. 16, a slider (in other words, a slider bar) is used as the operational object 5221. In this case, the user may adjust the cluster threshold TH_C so that the cluster threshold TH_C becomes larger by performing an operation for moving the slider toward a first direction (for example, toward an upward direction in FIG. 16). On the other hand, the user may adjust the cluster threshold TH_C so that the cluster threshold TH_C becomes smaller by moving the slider toward a second direction opposite to the first direction (for example, toward a downward direction in FIG. 16).

Incidentally, a display object that is different from the slider may be used as the operational object 5221. For example, a display object that is allowed to specify one candidate value, which should be set to the cluster threshold TH_C, from among a plurality of candidate values for the cluster threshold TH_C may be used as the scanning object 5221. At least one of a combo box, a drop-down list, and a radio button is one example of this display object.

The input apparatus 224 that is used by the user to operate the operational object 5221 may be configured to receive the input from the user for operating the scanning object 5221. As one example, the input apparatus 224 may be configured to receive at least one of a slide input, a pinch input, and a spin input. In this case, the user may adjust the cluster threshold TH_C by performing at least one of the slide input, the pinch input, and the spin input.

The user may adjust the cluster threshold TH_C on the order of micrometers. The user may adjust the cluster threshold TH_C on the order of sub-millimeters to centimeters. The user may adjust the cluster threshold TH_C by using the number of pixels in the image.

In FIG. 14 again, the model generation unit 2211 determines whether or not the user has adjusted the cluster threshold TH_C by using the input apparatus 24 (a step S422). Namely, the model generation unit 2211 determines whether or not the user has performed the operation for adjust the cluster threshold TH_C by using the input apparatus 24 (the step S422). In other words, the model generation unit 2211 determines whether or not the input apparatus 24 has received the input from the user for adjusting the cluster threshold TH_C (the step S422).

As a result of the determination at the step S422, in a case where it is determined that the user has adjusted the cluster threshold TH_C (the step S422: Yes), the model generation unit 2211 extracts at least one point cloud cluster PGC by using the cluster threshold TH_C adjusted by the user (a step S423). Namely, the model generation unit 2211 re-extracts at least one point cloud cluster PGC by using the cluster threshold TH_C adjusted by the user. Specifically, the model generation unit 2211 generates at least one point cloud cluster PG by classifying two extraction points Pext, which satisfy the condition that the distance D2 between the two extraction points Pext is equal to or shorter than the cluster threshold TH_C adjusted by the user, into the same point cloud cluster PGC (the step S423). In other words, the model generation unit 2211 updates at least one point cloud cluster PGC based on the user's operation of the operational object 5221 (the step S423).

Then, the model generation unit 2211 controls the display apparatus 25 to display the point cloud cluster display image 52 for displaying at least one point cloud cluster PGC generated at the step S423 (a step S424). As a result, the display apparatus 25 displays the point cloud cluster display image 52 for displaying at least one point cloud cluster PGC generated at the step S423 under the control of the model generation unit 2211 (the step S424).

In this case, the model generation unit 2211 may be considered to control the display apparatus 25 to update the point cloud cluster display image 52. Specifically, the model generation unit 2211 may be considered to control the display apparatus 25 to update the point cloud cluster display image 52 based on at least one point cloud cluster PGC generated at the step S423. Since at least one point cloud cluster PGC is generated based on the user's operation of the operational object 5221 at the step S423, the model generation unit 2211 may be considered to control the display apparatus 25 to update the point cloud cluster display image 52 based on the user's operation of the operational object 5221.

Then, the model generation unit 2211 generates at least one point cloud cluster PGC (the step S423) and updates the point cloud cluster display image 52 (the step S424) each time it is determined that the user has adjusted the cluster threshold TH_C (the step S422: Yes). Incidentally, in a case where an adjustment speed of the cluster threshold TH_C by the user is equal to or higher than a predetermined threshold, the model generation unit 2211 may not update the point cloud cluster display image 52 each time the cluster threshold TH_C is adjusted by the user.

The model generation unit 2211 may reflect a result of the user's adjustment of the cluster threshold TH_C in real time in the point cloud cluster display image 52. Namely, when the user has adjusted the cluster threshold TH_C, the model generation unit 2211 may extract at least one point cloud cluster PGC and update the point cloud cluster display image 52 in real time. For example, in a case where the operation from the step S422 to the step S424 described above is performed at a relatively fast cycle, the model generation unit 2211 may reflect the result of the user's adjustment of the cluster threshold TH_C in the point cloud cluster display image 52 in real time. However, the model generation unit 2211 may not reflect the result of the user's adjustment of the cluster threshold TH_C in the point cloud cluster display image 52 in real time.

In this manner, in the present example embodiment, the user may adjust the cluster threshold TH_C as necessary by using the operational object 5221 included in the point cloud cluster display image 52. For example, in a case where at least one point cloud cluster PGC displayed in the point cloud cluster display image 52 is not appropriate, the user may adjust the cluster threshold TH_C so that appropriate point cloud cluster PGC is generated. In this case, since the point cloud cluster PGC that has been generated is displayed in the point cloud cluster display image 52, the user may easily check the point cloud cluster PGC displayed in the point cloud cluster display image 52. As a result, the user can adjust the cluster threshold TH_C relatively easily so that appropriate point cloud cluster PGC is generated, compared to a case where the point cloud cluster PGC that has been extracted is not displayed in the point cloud cluster display image 52. Furthermore, in a case where the cluster threshold TH_C is adjusted, the model generation unit 2211 can generate more appropriate point cloud cluster PGC, compared to a case where the cluster threshold TH_C is fixed. As a result, the model generation unit 2211 can generate more appropriate difference model DM based on the appropriate point cloud cluster PGC that has been generated in this manner.

The model generation unit 2211 may change a display aspect of each point cloud cluster PGC based on the number of extraction points Pext included in each point cloud cluster PGC. For example, the point cloud cluster PGC into which a relatively large number of extraction points Pext are classified is more likely to include the extraction point Pext that is noise, compared to the point cloud cluster PGC into which a relatively small number of extraction points Pext are classified. This is because there is a higher likelihood that the extraction point Pext classified into the point cloud cluster PGC is the point Ptm of the target model TM that has been fortuitously extracted as the extraction point Pext by some factor as the number of extraction points Pext classified into point cloud cluster PGC is larger. Therefore, the model generation unit 2211 may change the display aspect of each point cloud cluster PGC so that the display aspect of the point cloud cluster PGC in which the number of classified extraction points Pext is larger than a lower limit threshold is different from the display aspect of the point cloud clusters PGC in which the number of classified extraction points Pext is smaller than the lower limit threshold. Namely, the model generation unit 2211 may change the display aspect of each point cloud cluster PGC so that the display aspect of the point cloud cluster PGC into which the extraction point Pext that is more likely to be noise is classified is different from the display aspect of the point cloud cluster PGC into which the extraction point Pext that is less likely to be noise is classified. In this case, the user may check the point cloud cluster display image 52 to adjust the cluster threshold TH_C so that the point cloud clusters PGC including the extraction point Pext, which is likely to be noise, is not generated. As a result, the model generation unit 2211 can appropriately generate the point cloud clusters PGC including the extraction point Pext that appropriately indicates the difference between the target model TM and the object model OM. As a result, the model generation unit 2211 can generate more appropriate difference model DM based on the appropriate point cloud cluster PGC generated in this manner. Incidentally, a display color is one example of the display aspect.

As a result of adjusting the cluster threshold TH_C, the number of generated point cloud clusters PGC may change. Namely, the number of point cloud clusters PGC generated after the cluster threshold TH_C is adjusted may be different from the number of point cloud clusters PGC generated before the cluster threshold TH_C is adjusted. Alternatively, as a result of adjusting the cluster threshold TH_C, the number of generated point cloud clusters PGC may not change. Namely, the number of point cloud clusters PGC generated after the cluster threshold TH_C is adjusted may be the same as the number of point cloud clusters PGC generated before the cluster threshold TH_C is adjusted.

On the other hand, as a result of the determination at the step S422, in a case where it is determined that the user has not adjusted the cluster threshold TH_C (the step S422: No), the model generation unit 2211 determines whether or not the adjustment of the inter-model distance threshold TH_M and the cluster threshold TH_C should be ended (a step S431). For example, the model generation unit 2211 may determine that the adjustment of the inter-model distance threshold TH_M and the cluster threshold TH_C should not be ended in a case where the user has requested that the adjustment of at least one of the inter-model distance threshold TH_M and the cluster threshold TH_C should be continued. For example, the model generation unit 2211 may determine that the adjustment of the inter-model distance threshold TH_M and the cluster threshold TH_C should be ended in a case where the user has not requested that the adjustment of at least one of the inter-model distance threshold TH_M and the cluster threshold TH_C should be continued. For example, the model generation unit 2211 may determine that the adjustment of the inter-model distance threshold TH_M and the cluster threshold TH_C should be ended in a case where the user requests that the adjustment of the inter-model distance threshold TH_M and the cluster threshold **TH_C** should be ended.

As a result of the determination at the step S431, in a case where it is determined that the adjustment of the inter-model distance threshold TH_M and the cluster threshold TH_C should not be ended (the step S431: No), the operation from the step S411 is repeated. For example, the user may adjust the inter-model distance threshold TH_M as necessary, and the model generation unit 2211 may extract the plurality of extraction points Pext and update the extraction point display image 51 in accordance with the user's adjustment of the inter-model distance threshold TH_M. For example, the user may adjust the cluster threshold TH_C as necessary, and the model generation unit 2211 may generate the point cloud cluster PGC and update the point cloud cluster display image 52 in accordance with the user's adjustment of the cluster threshold TH_C.

Namely, in the present example embodiment, the user may repeat the adjustment of the inter-model distance threshold TH_M and the adjustment of the cluster threshold TH_C as many times as necessary. For example, the user may complete the adjustment of the inter-model distance threshold TH_M and the cluster threshold TH_C after performing a single adjustment of the inter-model distance threshold TH_M and performing a single adjustment of the cluster threshold TH_C. For example, the user may complete the adjustment of the inter-model distance threshold TH_M and the cluster threshold TH_C after performing a plurality of adjustments of the inter-model distance threshold TH_M and performing a single adjustment of the cluster threshold TH_C. For example, the user may complete the adjustment of the inter-model distance threshold TH_M and the cluster threshold TH_C after performing a single adjustment of the inter-model distance threshold TH_M and performing a plurality of adjustments of the cluster threshold TH_C. For example, the user may complete the adjustment of the inter-model distance threshold TH_M and the cluster threshold TH_C after performing a plurality of adjustments of the inter-model distance threshold TH_M and performing a plurality of adjustments of the cluster threshold TH_C.

In a case where the user performs the plurality of adjustments of the inter-model distance threshold TH_M, at least one of the plurality of adjustments of the inter-model distance threshold TH_M by the user may include a fine adjustment of the inter-model distance threshold TH_M to set the inter-model distance threshold TH_M to a value desired by the user. In this case, the model generation unit 2211 may not extract the plurality of extraction points Pext at the step S413, and may not update the extraction point display image 51 at the step S414 when the user has performed the fine adjustment of the inter-model distance threshold TH_M. In other words, in a case where an adjusted amount (in other words, a changed amount) of the inter-model distance threshold TH_M by the user is within a predetermined range, the model generation unit 2211 may not extract the plurality of extraction points Pext at the step S413, and may not update the extraction point display image 51 at the step S414. The model generation unit 2211 may extract the plurality of extraction points Pext and update the extraction point display image 51 after the user has completed the fine adjustment of the inter-model distance threshold TH_M and the value of the inter-model distance threshold TH_M has been determined.

In a case where the user performs the plurality of adjustments of the cluster threshold TH_C, at least one of the plurality of adjustments of the cluster threshold TH_C by the user may include a fine adjustment of the cluster threshold TH_C to set the cluster threshold TH_C to a value desired by the user. In this case, the model generation unit 2211 may not generate the point cloud cluster PGC at the step S423 and may not update the point cloud cluster display image 52 at the step S424 when the user has fine-tuned the cluster threshold TH_C. In other words, in a case where an adjusted amount (in other words, a changed amount) of the cluster threshold TH_C by the user is within a predetermined range, the model generation unit 2211 may not generate the point cloud cluster PGC at the step S423, and may not update the point cloud cluster display image 52 at the step S424. The model generation unit 2211 may generate the point cloud clusters PGC and update the point cloud cluster display image 52 after the user has completed the fine adjustment of the cluster threshold TH_C and the value of the cluster threshold TH_C has been determined.

On the other hand, as a result of the determination at the step S431, in a case where it is determined that the adjustment of the inter-model distance threshold TH_M and the cluster threshold TH_C should be ended (the step S431: Yes), the model generation unit 2211 generates the difference model DM based on at least one point cloud cluster PGC generated at the step S423 (a step S432). For example, the model generation unit 2211 may generate, as the difference model DM, a three-dimensional model that includes the plurality of extraction points Pext classified into at least one point cloud cluster PGC. For example, the model generation unit 2211 may generate, as the difference model DM, a three-dimensional model that has a three-dimensional shape indicated by the plurality of extraction points Pext classified into at least one point cloud cluster PGC. In this case, it may be considered that the point cloud cluster PGC is used as the difference model DM. It may be considered that the plurality of extraction points Pext included in the point cloud cluster PGC are used as the difference model DM.

In a case where a single point cloud cluster PGC is generated at the step S423, the model generation unit 2211 may generate the difference model DM based on the single point cloud cluster PGC. In a case where the plurality of point cloud clusters PGC are generated at the step S423, the model generation unit 2211 may generate the difference model DM based on at least one of the plurality of point cloud clusters PGC.

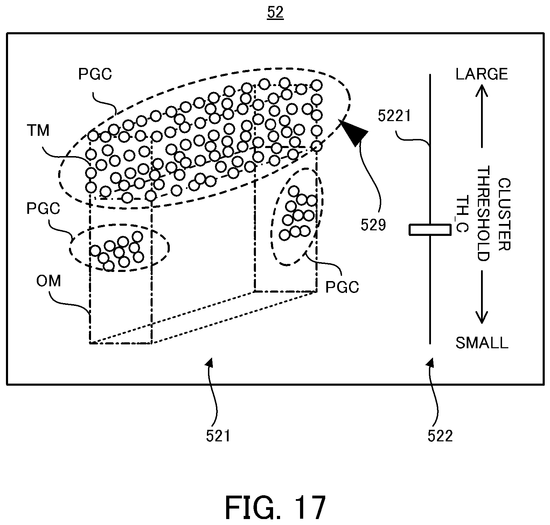

In a case where the plurality of point cloud clusters PGC are generated at the step S423, the user may specify at least one point cloud cluster PGC that should be used to generate the difference model DM. For example, as illustrated in FIG. 17, the user may specify at least one point cloud cluster PGC by using the input apparatus 24 to operate a pointer 529, which is for specifying at least one point cloud cluster PGC, on the point cloud cluster display image 52. In this case, the model generation unit 2211 may generate the difference model DM based on at least one point cloud cluster PGC specified by the user. Alternatively, the model generation unit 2211 may automatically specify at least one point cloud cluster PGC that should be used to generate the difference model DM. Alternatively, a cluster specification apparatus that is different from the model generation unit 2211 may automatically specify at least one point cloud cluster PGC that should be used to generate the difference model DM. An apparatus using an arithmetic model that can specify at least one point cloud cluster PGC that should be used to generate the difference model DM when feature amounts of the plurality of point cloud clusters PGC are input thereto is one example of the cluster specification apparatus. The arithmetic model may be an arithmetic model that can be learned by a machine learning.

The cluster specification apparatus (alternatively, the arithmetic model used by the cluster specification apparatus, the same applies to this paragraph) may specify at least one point cloud cluster PGC that should be used to generate the difference model DM based on a type of the workpiece W on which the additive manufacturing is performed. For example, in a case where the workpiece W is the turbine blade, a tip (in other words, an upper part) of the turbine blade is worn. Therefore, the cluster specification apparatus may specify, as at least one point cloud cluster PGC that should be used to generate the difference model DM, a point cloud cluster PGC positioned at or near the tip (in other words, the upper part) of the turbine blade. On the other hand, a side or a bottom surface of the turbine blade is not worn so frequently, so the cluster specification apparatus may specify, as noise, a point cloud cluster PGC positioned at the side surface or the bottom surface of the turbine blade. Namely, the point cloud clusters PGC positioned at the side surface or the bottom surface of the turbine blade may not be specified as at least one point cloud cluster PGC that should be used to generate the difference model DM.

As described above, the point cloud cluster PGC into which a relatively small number of extraction points Pext are classified is more likely to include the extraction point Pext that is noise, compared to the point cloud cluster PGC into which a relatively large number of extraction points Pext are classified. Therefore, in a case where the plurality of point cloud clusters PGC are generated, the model generation unit 2211 may generate the difference model DM based on the point cloud cluster PGC that satisfies a cluster selection condition that is based on the number of extraction points Pext classified into the point cloud cluster PGC. The cluster selection condition may include a first condition that the number of extraction points Pext classified into the point cloud cluster PGC is equal to or larger than the lower limit threshold. In this case, the model generation unit 2211 may generate the difference model DM based on at least one point cloud cluster PGC in which the number of extraction points Pext classified into the point cloud cluster PGC is equal to or larger than the lower threshold. The cluster selection condition may include a second condition that the number of extraction points Pext classified into the point cloud cluster PGC is maximum. In this case, the model generation unit 2211 may generate the difference model DM based on one point cloud cluster PGC in which the number of extraction points Pext classified into the point cloud cluster PGC is maximum. In this case, the model generation unit 2211 can generate the difference model DM without using the extraction point Pext that has a relatively high likelihood of being noise. As a result, the model generation unit 2211 can generate the difference model DM that accurately indicates the difference between the object model OM and the target model TM.

In a case where the difference model DM is generated, the model generation unit 2211 may generate a difference model file related to the generated difference model DM (a step S433). The difference model file may store the difference model DM. The difference model file may store the plurality of slice data generated by performing the slicing process on the difference model DM as described above. The difference model file may store at least one of the inter-model distance threshold TH_M and the cluster threshold TH_C used to generate the difference model DM. The difference model file may store at least one of the object model OM and the target model TM used to generate the difference model DM. Alternatively, the difference model file may be associated with another file that stores at least one of the object model OM and the target model TM used to generate the difference model DM. The difference model file may be used for the purpose of traceability of an environment in which the difference model DM was generated. In this case, the user can easily check the environment in which a certain difference model DM was generated by referring to the difference model file.

Furthermore, in a case where the difference model DM is generated, the model generation unit 2211 may control the display apparatus 25 to display the generated difference model DM. As a result, the display apparatus 25 may display the difference model DM generated by the model generation unit 2211 under the control of the model generation unit 2211.

Furthermore, in a case where the difference model DM is generated, the model generation unit 2211 outputs the generated difference model DM to the control information generation unit 2212. As a result, the control information generation unit 2212 generates the processing control information based on the difference model DM generated by the model generation unit 2211.

However, at the step S432 in FIG. 14, the model generation unit 2211 may output at least one point cloud cluster PGC as information for generating the difference model DM, in addition to or instead of generating the difference model DM based on at least one point cloud cluster PGC. In this case, an apparatus that is different from the model generation unit 2211 may generate the difference model DM based on at least one point cloud cluster PGC generated by the model generation unit 2211. The control information generation unit 2212 may generate the processing control information based on the difference model DM generated by the apparatus that is different from the model generation unit 2211.

### (3) Technical Effect

As described above, in the present example embodiment, the user may repeat the adjustment of the inter-model distance threshold TH_M and the adjustment of the cluster threshold TH_C as many times as necessary. Therefore, the user may adjust the inter-model distance threshold TH_M again after adjusting the cluster threshold TH_C. For example, in a case where the point cloud cluster PGC that displayed in the point cloud cluster display image 52 after adjusting the cluster threshold TH_C is not appropriate, the user may adjust not only the cluster threshold TH_C but also the inter-model distance threshold TH_M. Here, a reason why the generated point cloud cluster PGC is not appropriate may include not only a reason that the cluster threshold TH_C is not appropriate, but also a reason that the plurality of extraction points Pext that are a base for calculating the point cloud cluster PGC are not appropriate. In the present example embodiment, in a case where the point cloud cluster PGC is not appropriate, the user may adjust the inter-model distance threshold TH_M again to solve a problem that the plurality of extraction points Pext are not appropriate, in addition to adjusting the cluster threshold TH_C to solve a problem of the cluster threshold TH_C is not appropriate. Furthermore, in a case where the inter-model distance threshold TH_M is adjusted, the user may adjust the cluster threshold TH_C again in accordance with the adjustment of the inter-model distance threshold TH_M. Therefore, compared to a case where the user is not allowed to adjust the inter-model distance threshold TH_M again after adjusting the cluster threshold TH_C, the model generation unit 2211 can generate more appropriate point cloud cluster PGC. As a result, the model generation unit 2211 can generate more appropriate difference model DM based on the appropriate point cloud cluster PGC generated in this manner.

### (4) Modified Example

Next, a modified example of the processing system SYS will be described.

### (4-1) First Modified Example

As described above, the model generation unit 2211 extracts the plurality of extraction points Pext from the target model TM in real time (the step S413 in FIG. 14) and displays the extraction points Pext in real time (the step S414 in FIG. 14) based on the inter-model distance threshold TH_M, which has been adjusted by the user, each time the user adjusts the inter-model distance threshold TH_M (the step S412 in FIG. 14: Yes). However, a processing load required to extract and display the plurality of extraction points Pext is higher as the number of points Ptm included in the target model TM and the number of points Pom included in the object model OM (namely, a data size of the point clouds) are larger. As a result, depending on the data size of the point cloud, there is a likelihood that the model generation unit 2211 cannot extract and display the plurality of extraction points Pext in real time.

Similarly, as described above, the model generation unit 2211 generates at least one point cloud cluster PGC in real time (the step S423 in FIG. 14) and displays the point cloud cluster PGC in real time (the step S424 in FIG. 14) based on the cluster threshold TH_C, which has been adjusted by the user, each time the user adjusts the cluster threshold TH_C (the step S422: Yes in FIG. 14). However, a processing load required to generate and display at least one point cloud cluster PGC is higher as the number of points Ptm included in the target model TM and the number of points Pom included in the object model OM (namely, a data size of the point clouds) are larger. As a result, depending on the data size of the point cloud, there is a likelihood that the model generation unit 2211 cannot generate and display at least one point cloud cluster PGC in real time.

Therefore, in a first modified example, the model generation unit 2211 may use, as the target model TM, a reduced target model TM_reduced, which has a smaller number of points Ptm (namely, which has a smaller data size of point cloud) than an original target model TM_original, in addition to the original target model TM _original acquired at the step S3 in FIG. 8. Similarly, the model generation unit 2211 may use, as the object model OM, a reduced object model OM_reduced, which has a smaller number of points Pom (namely, which has a smaller data size of point cloud) than an original object model OM _original, in addition to the original object model OM_original generated by the shape measurement apparatus 21 at the step S2 in FIG. 8.

Incidentally, in the below-described description, each of the original target model TM_original and the original object model OM_original is collectively referred to as an "original model M_original" as necessary. Furthermore, in the below-described description, each of the reduced target model TM_reduced and the reduced object model OM_reduced is collectively referred to as a "reduced model M_reduced" as necessary. Moreover, the reduced model M_reduced may be considered to correspond to a reduced three-dimensional image. Therefore, the reduced model M_reduced may be referred to as a "thumbnail image" that indicates a reduced (in other words, compressed) image.

In a case where the reduced model M_reduced is used, the model generation unit 2211 may acquire the reduced model M_reduced before starting the difference model generation operation illustrated in FIG. 14. For example, the model generation unit 2211 may acquire the target model TM_reduced by performing a reduction processing on the target model TM_original to generate the target model TM_reduced. For example, the model generation unit 2211 may acquire the target model TM_reduced from a model generation apparatus that generates the target model TM_reduced. For example, the model generation unit 2211 may acquire the object model OM_reduced by performing a reduction processing on the object model OM_original to generate the object model OM_reduced. For example, the model generation unit 2211 may acquire the object model OM_reduced from a model generation apparatus that generates the object model OM_reduced. Then, the model generation unit 2211 may perform the difference model generation operation illustrated in FIG. 14 by using the reduced model M_reduced in addition to the original model M_original.

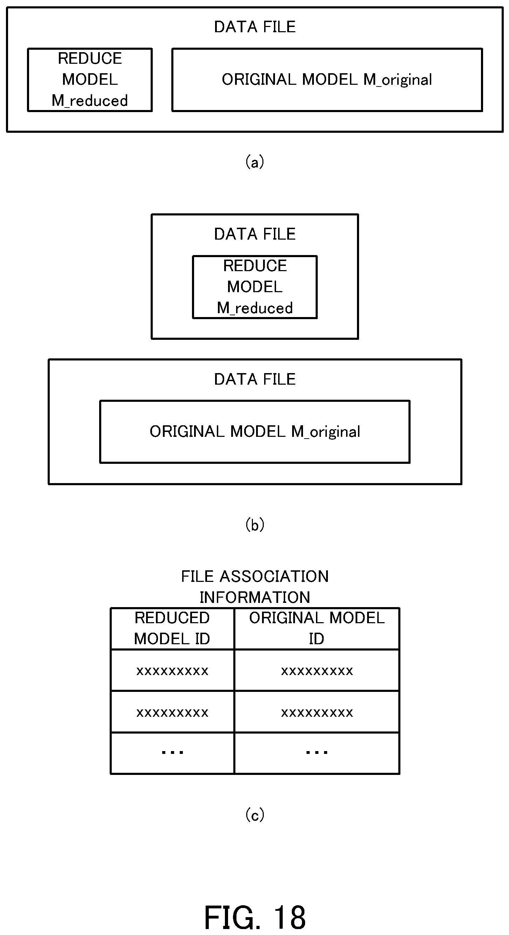

The original model M_original and the reduced model M_reduced may be used in a file format in which the original model M_original and the reduced model M_reduced are stored in a single data file, as illustrated in FIG. 18(a). Alternatively, the original model M_original and the reduced model M_reduced may be used in a file format in which the original model M_original and the reduced model M_reduced are stored in separate data files, respectively, as illustrated in FIG. 18(b). In a case where the original model M_original and the reduced model M_reduced are stored in the separate data files, the model generation unit 2211 may acquire one original model M_original and one reduced model M_reduced corresponding to the one original model M_original by using file association information that associates the data file in which the one original model M_original is stored with the data file in which the one reduced model M_reduced corresponding to the one original model M_original is stored.

Next, a specific example of the difference model generation operation using the reduced model M_reduced will be described.

### (4-1-1) First Specific Example of Difference Model Generation Operation using Reduced Model M reduced

In a first specific example, in order to extract the plurality of extraction points Pext at the step S410 or the step S413 in FIG. 14, the model generation unit 2211 may first use the reduced model M_reduced instead of the original model M _original.

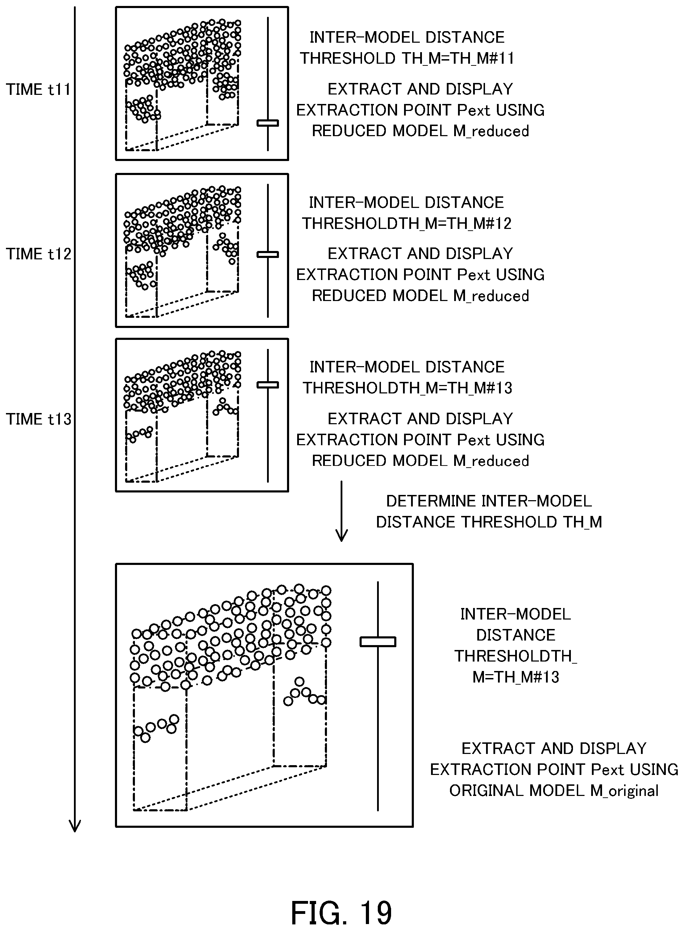

For example, FIG. 19 illustrates the plurality of extraction points Pext that are extracted by using the reduced model M_reduced instead of the original model M_original. As illustrated in FIG. 19, in a case where the user adjusts the inter-model distance threshold TH_M so that the inter-model distance threshold TH_M becomes a first inter-model distance threshold TH_M#11 at a time t11, the model generation unit 2211 may extract the plurality of extraction points Pext by using the target model TM_reduced, the object model OM_reduced, and the first inter-model distance threshold TH_M#11. Furthermore, the display apparatus 25 may display the extraction point display image 51 for displaying the plurality of extraction points Pext. Then, in a case where the user adjusts the inter-model distance threshold TH_M so that the inter-model distance threshold TH_M is changed from the first inter-model distance threshold TH_M#11 to a second inter-model distance threshold TH_M#12 at a time t12, the model generation unit 2211 may extract the plurality of extraction points Pext by using the target model TM_reduced, the object model OM_reduced, and the second inter-model distance threshold TH_M#12. Furthermore, the display apparatus 25 may display the extraction point display image 51 for displaying the plurality of extraction points Pext. As illustrated in FIG. 19, at least one of the positions and the number of the plurality of extraction points Pext may change due to the change of the inter-model distance threshold TH_M. Then, in a case where the user adjusts the inter-model distance threshold TH_M so that the inter-model distance threshold TH_M is changed from the second inter-model distance threshold TH_M#12 to a third inter-model distance threshold TH_M#13 at a time t13, the model generation unit 2211 may extract the plurality of extraction points Pext by using the target model TM_reduced, the object model OM_reduced, and the third inter-model distance threshold TH_M#13. Furthermore, the display apparatus 25 may display the extraction point display image 51 for displaying the plurality of extraction points Pext. As illustrated in FIG. 19, at least one of the positions and the number of the plurality of extraction points Pext may change due to the change of the inter-model distance threshold TH_M.

In a case where the user determines that the third inter-model distance threshold TH_M#13 is appropriate as a final inter-model distance threshold TH_M as a result of the adjustment of the inter-model distance threshold TH_M, the model generation unit 2211 may extract the plurality of extraction points Pext by using the original model M_original instead of the reduced model M_reduced. Namely, the model generation unit 2211 may extract, as the plurality of extraction points Pext, the plurality of points Ptm satisfying the condition that the inter-model distance D1 between the point Ptm of the target model TM_original and the closest point Pom_closest of the object model OM_original is equal to or longer than the third inter-model distance threshold TH_M#13. Furthermore, if necessary, the display apparatus 25 may display the extraction point display image 51 for displaying the plurality of extraction points Pext.

As a result, the model generation unit 2211 extracts and displays the plurality of extraction points Pext by using the reduced model M_reduced in a period during which the user adjusts the inter-model distance threshold TH_M. Therefore, the processing load required to extract and display the plurality of extraction points Pext is reduced, compared to a case where the original model M_original is used. As a result, there is a higher likelihood that the model generation unit 2211 can extract and display the plurality of extraction points Pext in real time.

On the other hand, after the user has completed the adjustment of the inter-model distance threshold TH_M, the model generation unit 2211 re-extract the plurality of extraction points Pext by using the original model M_original. Therefore, the model generation unit 2211 can generate the point cloud clusters PGC by using the plurality of extraction points Pext that have been extracted by using the original model M_original, instead of the plurality of extraction points Pext that have been extracted by using the reduced model M_reduced. Therefore, an operation for extracting the plurality of extraction points Pext by using the reduced model M_reduced does not affect the subsequent operation for generating the point cloud cluster PGC.

### (4-1-2) Second Specific Example of Difference Model Generation Operation using Reduced Model M reduced

In the second specific example, in order to extract the plurality of extraction points Pext at the step S410 or the step S413 in FIG. 14, the model generation unit 2211 may use the reduced model M_reduced in addition to the original model M_original. Namely, the model generation unit 2211 may perform a processing for extracting the plurality of extraction points Pext by using the original model M_original and a processing for extracting the plurality of extraction points Pext by using the reduced model M_reduced in parallel. However, the model generation unit 2211 may perform the processing for extracting the plurality of extraction points Pext by using the original model M_original as a background processing. On the other hand, the model generation unit 2211 may perform the processing for extracting the plurality of extraction points Pext by using the reduced model M_reduced as a foreground processing.

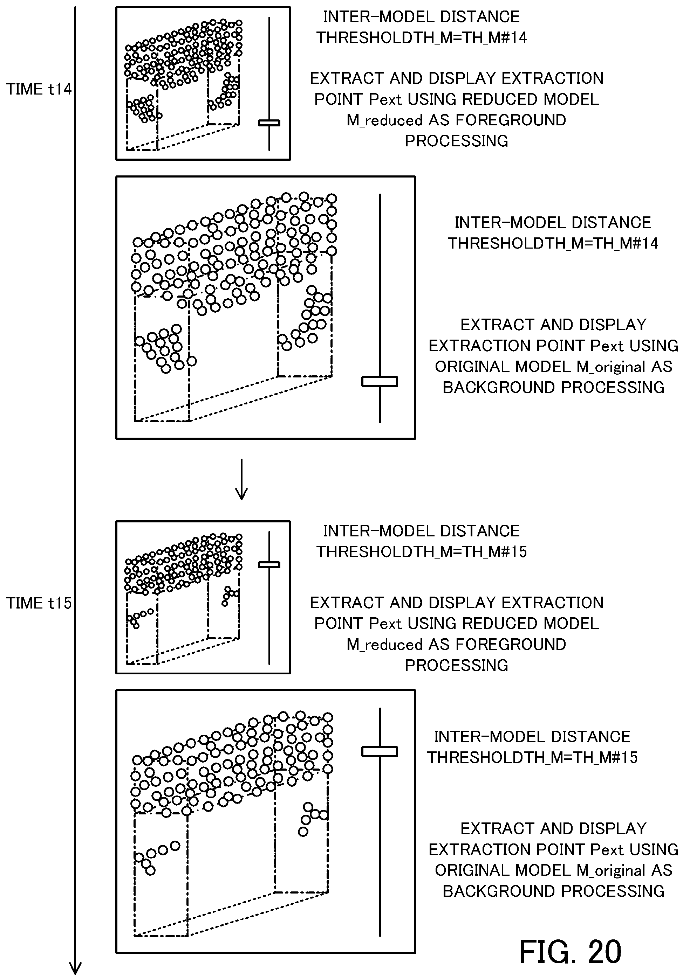

For example, FIG. 20 illustrates the plurality of extraction points Pext that are extracted by using the reduced model M_reduced in addition to the original model M_original. As illustrated in FIG. 20, in a case where the user adjusts the inter-model distance threshold TH_M so that the inter-model distance threshold TH_M becomes a fourth inter-model distance threshold TH_M#14 at a time t14, the model generation unit 2211 may perform the processing for extracting the plurality of extraction points Pext by using the target model TM_reduced, the object model OM_reduced, and the fourth inter-model distance threshold TH_M#14 as the foreground processing. Furthermore, the display apparatus 25 may display the extraction point display image 51 for displaying the plurality of extraction points Pext extracted by the foreground processing. On the other hand, the model generation unit 2211 may perform the processing for extracting the plurality of extraction points Pext by using the target model TM _original, the object model OM_original, and the fourth inter-model distance threshold TH_M#14 as the background processing. In this case, the display apparatus 25 may not display the extraction point display image 51 for displaying the plurality of extraction points Pext extracted by the background processing. Then, in a case where the user adjusts the inter-model distance threshold TH_M so that the inter-model distance threshold TH_M is changed from the fourth inter-model distance threshold TH_M#14 to a fifth inter-model distance threshold TH_M#15 at a time t15, the model generation unit 2211 may perform the processing for extracting the plurality of extraction points Pext by using the target model TM_reduced, the object model OM_reduced, and the fifth inter-model distance threshold TH_M#15, as the foreground processing. Furthermore, the display apparatus 25 may display the extraction point display image 51 for displaying the plurality of extraction points Pext extracted by the foreground processing. As illustrated in FIG. 20, at least one of the positions and the number of the plurality of extraction points Pext may change due to the change of the inter-model distance threshold TH_M. On the other hand, the model generation unit 2211 may perform the processing for extracting the plurality of extraction points Pext by using the target model TM_original, the object model OM _original, and the fifth inter-model distance threshold TH_M#15 as the background processing. In this case, the display apparatus 25 may not display the extraction point display image 51 for displaying the plurality of extraction points Pext extracted by the background processing.

In a case where the user determines that the fifth inter-model distance threshold TH_M#15 is appropriate as the final inter-model distance threshold TH_M as a result of the adjustment of the inter-model distance threshold TH_M, the model generation unit 2211 may generate the point cloud cluster PGC by using the plurality of extraction points Pext that have been already generated by the background processing using the fifth inter-model distance threshold TH_M#15. As a result, a time required to generate the point cloud cluster PGC after the user has completed the adjustment of the inter-model distance threshold TH_M is reduced, compared to a case where the background processing is not performed. Furthermore, since the processing for extracting the plurality of extraction points Pext by using the original model M _original is performed as the background processing, the model generation unit 2211 can allocate relatively more resource to the processing for extracting and displaying the plurality of extraction points Pext by using the reduced model M_reduced, compared to a case where the processing for extracting the plurality of extraction points Pext by using the original model M _original as the foreground processing. As a result, there is a higher likelihood that the model generation unit 2211 can extract and display the plurality of extraction points Pext in real time.

### (4-1-3) Third Specific Example of Difference Model Generation Operation using Reduced Model M reduced

In a third specific example, in order to generate at least one point cloud cluster PGC at the step S420 or the step S423 in FIG. 14, the model generation unit 2211 may first use the reduced model M_reduced instead of the original model M _original.

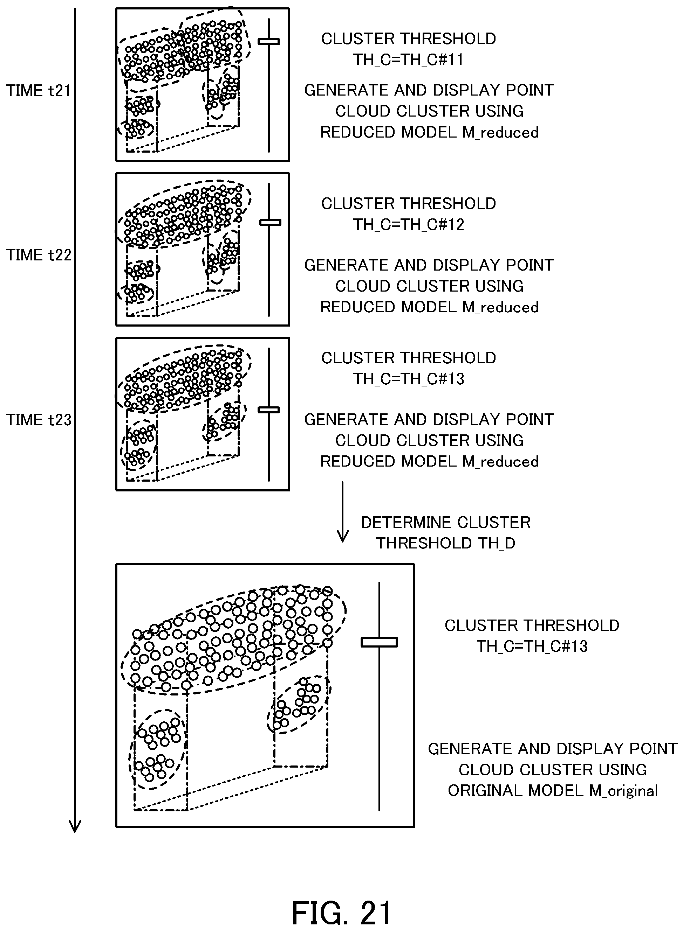

For example, FIG. 21 illustrates at least one point cloud cluster PGC that is generated by using the reduced model M_reduced instead of the original model M _original. As illustrated in FIG. 21, in a case where the user adjusts the cluster threshold TH_C so that the cluster threshold TH_C becomes a first cluster threshold TH_C#11 at a time t21, the model generation unit 2211 may generate at least one point cloud cluster PGC by performing the clustering of the plurality of extraction points Pext, which have been extracted from the target model TM_reduced, based on the first cluster threshold TH_C#11. Furthermore, the display apparatus 25 may display the point cloud cluster display image 52 for displaying at least one point cloud cluster PGC. Then, in a case where the user adjusts the cluster threshold TH_C so that the cluster threshold TH_C is changed from the first cluster threshold TH_C#11 to a second cluster threshold TH_C#12 at a time t22, the model generation unit 2211 may generate at least one point cloud cluster PGC by performing the clustering of the plurality of extraction points Pext, which have been extracted from the target model TM_reduced, based on the second cluster threshold TH_C#12. Furthermore, the display apparatus 25 may display the point cloud cluster display image 52 for displaying at least one point cloud cluster PGC. As illustrated in FIG. 21, at least one of the position, the shape, and the number of the point cloud cluster PGC may change due to the change of the cluster threshold TH_C. Then, in a case where the user adjusts the cluster threshold TH_C so that the cluster threshold TH_C is changed from the second cluster threshold TH_C#12 to a third cluster threshold TH_C#13 at a time t23, the model generation unit 2211 may generate at least one point cloud cluster PGC by performing the clustering of the plurality of extraction points Pext, which have been extracted from the target model TM_reduced based on the third cluster threshold TH_C#13. Furthermore, the display apparatus 25 may display the point cloud cluster display image 52 for displaying at least one point cloud cluster PGC. As illustrated in FIG. 21, at least one of the position, the shape, and the number of the point cloud cluster PGC may change due to the change of the cluster threshold TH_C.

In a case where the user determines that the third cluster threshold TH_C#13 is appropriate as the final cluster threshold TH_C as a result of the adjustment of the cluster threshold TH_C, the model generation unit 2211 may generate at least one point cloud cluster PGC by performing the clustering of the plurality of extraction points Pext that have been extracted from the target model TM_original, instead of the clustering of the plurality of extraction points Pext that have extracted from the target model TM_reduced. Furthermore, if necessary, the display apparatus 25 may display the point cloud cluster display image 52 for displaying at least one point cloud cluster PGC.

As a result, the model generation unit 2211 generates and displays at least one point cloud cluster PGC by using the reduced model M_reduced in a period during which the user adjusts the cluster threshold TH_C. Therefore, the processing load required to generate and display at least one point cloud cluster PGC is reduced, compared to a case where the original model M_original is used. As a result, there is a higher likelihood that the model generation unit 2211 can generate and display at least one point cloud cluster PGC in real time.

On the other hand, after the user has completed the adjustment of the cluster threshold TH_C, the model generation unit 2211 re-generates at least one point cloud cluster PGC by using the original model M_original. Therefore, the model generation unit 2211 can generate the difference model DM by using at least one point cloud cluster PGC that has been generated by using the original model M_original, instead of at least one point cloud cluster PGC that has been generated by using the reduced model M_reduced. Therefore, an operation for generating at least one point cloud cluster PGC by using the reduced model M_reduced does not affect the subsequent operation for generating the difference model DM.

### (4-1-4) Fourth Specific Example of Difference Model Generation Operation using Reduced Model M reduced

In a fourth specific example, in order to generate at least one point cloud cluster PGC at the step S420 or the step S423 in FIG. 14, the model generation unit 2211 may use the reduced model M_reduced in addition to the original model M_original. Namely, the model generation unit 2211 may perform a processing for generating at least one point cloud cluster PGC by using the original model M_original and a processing for generating at least one point cloud cluster PGC by using the reduced model M_reduced in parallel. However, the model generation unit 2211 may perform the processing for generating at least one point cloud cluster PGC by using the original model M_original as a background processing. On the other hand, the model generation unit 2211 may perform the processing for generating at least one point cloud cluster PGC by using the reduced model M_reduced as a foreground processing.

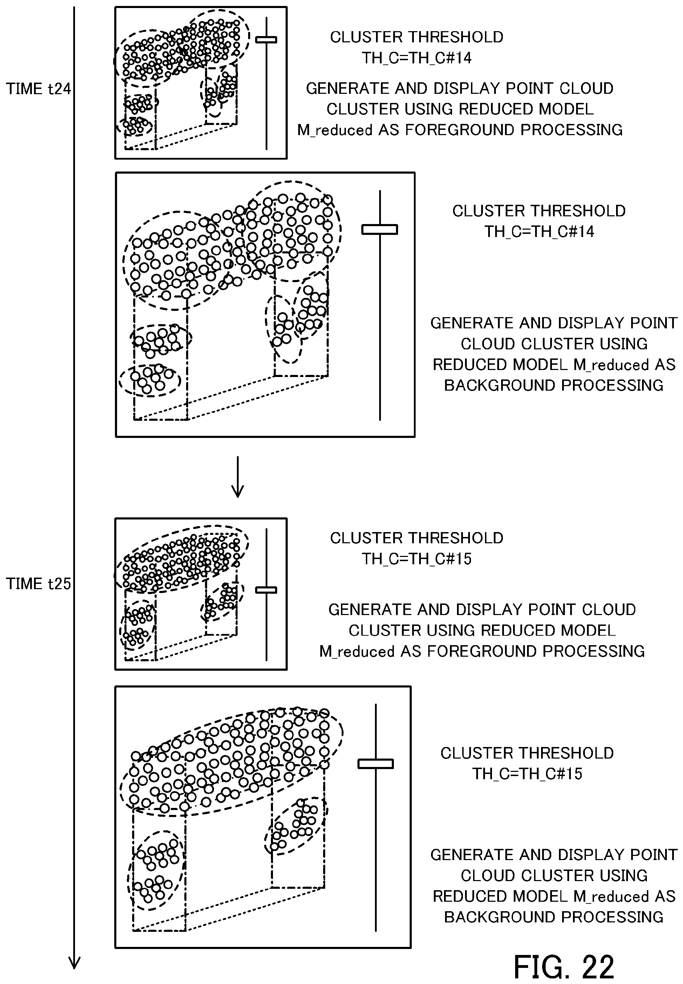

For example, FIG. 22 illustrates at least one point cloud cluster PGC that is generated by using the reduced model M_reduced in addition to the original model M_original. As illustrated in FIG. 22, in a case where the user adjusts the cluster threshold TH_C so that the cluster threshold TH_C becomes a fourth cluster threshold TH_C#14 at a time t24, the model generation unit 2211 may perform the processing for generating at least one point cloud cluster PGC by performing the clustering of the plurality of extraction points Pext, which have been extracted from the target model TM_reduced, based on the fourth cluster threshold TH_C#14, as the foreground processing. Furthermore, the display apparatus 25 may display the point cloud cluster display image 52 for displaying at least one point cloud cluster PGC generated by the foreground processing. On the other hand, the model generation unit 2211 may perform the processing for generating at least one point cloud cluster PGC by performing the clustering of the plurality of extraction points Pext, which have been extracted from the target model TM_original, based on the fourth cluster threshold TH_C#14, as the background processing. In this case, the display apparatus 25 may not display the point cloud cluster display image 52 for displaying at least one point cloud cluster PGC generated by the background processing. Then, in a case where the user adjusts the cluster threshold TH_C so that the cluster threshold TH_C is changed from the fourth cluster threshold TH_C#14 to a fifth cluster threshold TH_C#15 at a time t25, the model generation unit 2211 may perform the processing for generating at least one point cloud cluster PGC by performing the clustering of the plurality of extraction points Pext, which have been extracted from the target model TM_reduced, based on the fifth cluster threshold TH_C#15, as the foreground processing. Furthermore, the display apparatus 25 may display the point cloud cluster display image 52 for displaying at least one point cloud cluster PGC generated by the foreground processing. As illustrated in FIG. 22, at least one of the position, the shape, and the number of the point cloud cluster PGC may change due to the change of the cluster threshold TH_C. On the other hand, the model generation unit 2211 may perform the processing for generating at least one point cloud cluster PGC by performing the clustering of the plurality of extraction points Pext, which have been extracted from the target model TM _original, based on the fifth cluster threshold TH_C#15, as the background processing. In this case, the display apparatus 25 may not display the point cloud cluster display image 52 for displaying at least one point cloud cluster PGC generated by the background processing.

In a case where the user determines that the fifth cluster threshold TH_C#15 is appropriate as the final cluster threshold TH_C as a result of the adjustment of the cluster threshold TH_C, the model generation unit 2211 may generate the difference model DM by using at least one point cloud cluster PGC that has been already generated by the background processing using the fifth cluster threshold TH_C#15. As a result, a time required to generate the point cloud cluster PGC after the user has completed the adjustment of the cluster threshold TH_C is reduced, compared to a case where the background processing is not performed. Furthermore, since the processing for generating at least one point cloud cluster PGC by using the original model M_original is performed as the background processing, the model generation unit 2211 can allocate relatively more resource to the processing for generating and displaying at least one point cloud cluster PGC by using the reduced model M_reduced, compared to a case where the processing for generating at least one point cloud cluster PGC by using the original model M_original is performed as the foreground processing. As a result, there is a higher likelihood that the model generation unit 2211 can generate and display at least one point cloud cluster PGC in real time.

### (4-2) Second Modified Example

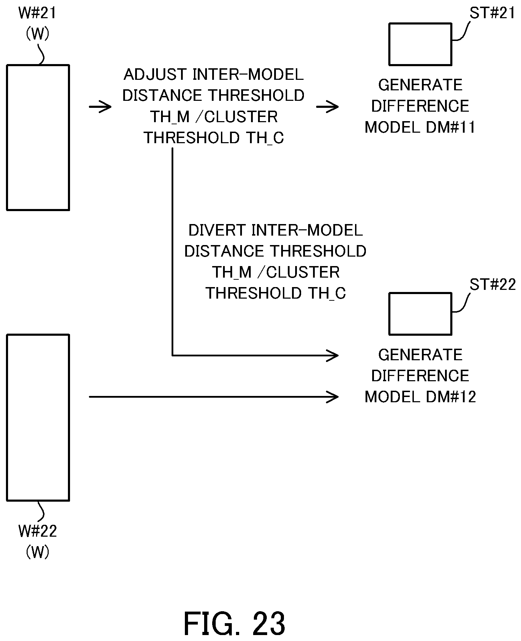

In a second modified example, as illustrated in FIG. 23, the model generation unit 2211 may divert at least one of the inter-model distance threshold TH_M and the cluster threshold TH_C, which has been adjusted to generate a first difference model DM#21 indicating a three-dimensional shape of a first three-dimensional structural object ST#21 that should be built on a first workpiece W#21, in order to generate a second difference model DM#22 indicating a three-dimensional shape of a second three-dimensional structural object ST#22 that should be built on a second workpiece W#22 that is different from the first workpiece W#21.

Especially, as illustrated in FIG. 23, in a case where the processing apparatus 1 processes a plurality of workpieces W so that the shapes of the plurality of workpieces W having the same shape become the same target shape, the three-dimensional shape of the first three-dimensional structural object ST#21 that should be built on the second workpiece W#21 should be the same as the three-dimensional shape of the second three-dimensional structural object ST#22 that should be built on the second workpiece W#22. Therefore, the first difference model DM#21 should also be the same as the second difference model DM#22. Therefore, even in a case where at least one of the inter-model distance threshold TH_M and the cluster threshold TH_C, which is diverted to generate the first difference model DM#21, is used to generate the second difference model DM#22, the model generation unit 2211 can generate the second difference model DM#22 that indicates the three-dimensional shape of the second three-dimensional structural object ST#22 that should be built on the second workpiece W#22 with a reasonable degree of accuracy. Therefore, a technical effect achieved by diverting at least one of the inter-model distance threshold TH_M and the cluster threshold TH_C is greater in a case where the processing apparatus 1 processes the plurality of workpieces W so that the shapes of the plurality of workpieces W having the same shape become the same target shape.

Specifically, in order to generate the second difference model DM#22, the model generation unit 2211 may extract the plurality of extraction points Pext by using the inter-model distance threshold TH_M, which has been adjusted to generate the first difference model DM#21, at the step S410 in FIG. 14. For example, in a case where the inter-model distance threshold TH_M#21 is used as a definite value of the inter-model distance threshold TH_M to generate the first difference model DM#21, the model generation unit 2211 may extract the plurality of extraction points Pext by using the inter-model distance threshold TH_M#21 at the step S410 in FIG. 14.

In this case, the user may not necessarily adjust the inter-model distance threshold TH_M at the step S412 in FIG. 14. This reduces a workload required by the user to adjust the inter-model distance threshold TH_M. Furthermore, a time required for the user to adjust the inter-model distance threshold TH_M, a time required to extract the plurality of extraction points Pext due to the adjustment of the inter-model distance threshold TH_M by the user, and a time required to update the extraction point display image 51 due to the extraction of the plurality of extraction points Pext are not required. Therefore, a through-put for generating the difference model DM is improved. Furthermore, the model generation unit 2211 may not necessarily extract the plurality of extraction points Pext due to the adjustment of the inter-model distance threshold TH_M by the user and update the extraction point display image 51 due to the extraction of the plurality of extraction points Pext. Therefore, a processing load of the model generation unit 2211 required to generate the difference model DM is reduced.

Furthermore, in order to generate the second difference model DM#22, the model generation unit 2211 may generate at least one point cloud cluster PGC by using the cluster threshold TH_C, which has been adjusted to generate the first difference model DM#21, at the step S420 in FIG. 14. For example, in a case where the cluster threshold TH_C#21 is used as a definite value of the cluster threshold TH_C to generate the first difference model DM#21, the model generation unit 2211 may generate at least one point cloud cluster PGC by using the cluster threshold TH_C#21 at the step S420 in FIG. 14.

In this case, the user may not necessarily adjust the cluster threshold TH_C at the step S422 in FIG. 14. This reduces an effort required for the user to adjust the cluster threshold TH_C. Furthermore, a time required for the user to adjust the cluster threshold TH_C, a time required to generate at least one point cloud cluster PGC due to the adjustment of the cluster threshold TH_C by the user, and a time required to update the point cloud cluster display image 52 due to the generation of at least one point cloud cluster PGC are not required. Therefore, the through-put for generating the difference model DM is improved. Furthermore, the model generation unit 2211 may not necessarily generate at least one point cloud cluster PGC due to the adjustment of the cluster threshold TH_C by the user and update the point cloud cluster display image 52 due to the generation of at least one point cloud cluster PGC. As a result, the processing load of the model generation unit 2211 required to generate the difference model DM is reduced.

The model generation unit 2211 may divert a single inter-model distance threshold TH_M, which has been adjusted by the user for a single workpiece W, as the inter-model distance threshold TH_M for another workpiece W. Alternatively, the model generation unit 2211 may divert two or more inter-model distance thresholds TH_M, which have been adjusted by the user for two or more workpieces W, respectively, as the inter-model distance threshold TH_M for another workpiece W. In this case, the model generation unit 2211 may divert a value calculated from the two or more inter-model distance thresholds TH_M as the inter-model distance threshold TH_M for another workpiece W. At least one of an average value, a median value, a minimum value, and a maximum value of the two or more inter-model distance thresholds TH_M is one example of the value calculated from the two or more inter-model distance thresholds TH_M.

Furthermore, the model generation unit 2211 may divert a position of the first difference model DM#21 in addition to or instead of diverting at least one of the inter-model distance threshold TH_M and the cluster threshold TH_C, which have been adjusted to generate the first difference model DM#22, in order to generate the second difference model DM#22. Specifically, the model generation unit 2211 may use a point cloud cluster PGC, which is positioned at a position closest to the position of the first difference model DM#21, of at least one point cloud cluster PGC generated to generate the second difference model DM#22. Namely, the model generation unit 2211 may generate the second difference model DM#22 by using the point cloud cluster PGC that is positioned at a position closest to the position of the first difference model DM#21.

However, the model generation unit 2211 may not divert at least one of the inter-model distance threshold TH_M, the cluster threshold TH_C, and the position of the difference model DM. Namely, the user may adjust the inter-model distance threshold TH_M and the cluster threshold TH_C to generate the first difference model DM#21, and may adjust the inter-model distance threshold TH_M and the cluster threshold TH_C to generate the second difference model DM#22. In this case, the model generation unit 2211 can generate the second difference model DM#22 indicating the three-dimensional shape of the second three-dimensional structural object ST#22, which should be built in the second workpiece W#22, with higher accuracy, compared to a case where at least one of the inter-model distance threshold TH_M, the cluster threshold TH_C, and the position of the difference model DM is diverted.

Moreover, in a case where the three-dimensional shape of the second difference model DM#22, which is generated by diverting at least one of the inter-model distance threshold TH_M, the cluster threshold TH_C, and the position of the difference model DM, is significantly different from an expected three-dimensional shape, the model generation unit 2211 may regenerate the second difference model DM#22 without diverting at least one of the inter-model distance threshold TH_M, the cluster threshold TH_C, and the position of the difference model DM model DM#22. This is because it is assumed that an accuracy of the second difference model DM#22 has deteriorated due to the diversion of at least one of the inter-model distance threshold TH_M, the cluster threshold TH_C, and the position of the difference model DM in this case. In this case, the model generation unit 2211 may generate the second difference model DM#22 by using the inter-model distance threshold TH_M and the cluster threshold TH_C adjusted by the user to generate the second difference model DM#22.

Moreover, as described above, the technical effect achieved by diverting at least one of the inter-model distance threshold TH_M and the cluster threshold TH_C is greater in a case where the processing apparatus 1 processes the plurality of workpieces W so that the shapes of the plurality of workpieces W having the same shape become the same target shape. Therefore, in a case where the plurality of workpieces include at least one workpiece W having a significantly different shape, there is a likelihood that the accuracy of the difference model DM deteriorates by diverting at least one of the inter-model distance threshold TH_M and the cluster threshold TH_C for the workpiece W having the significantly different shape. Therefore, the model generation unit 2211 may determine whether or not an actual shape of the workpiece W is significantly different from an expected shape based on the measured result of the three-dimensional shape of the workpiece W by the shape measurement apparatus 21 (namely, the object model OM). The model generation unit 2211 may generate the difference model DM without diverting at least one of the inter-model distance threshold TH_M, the cluster threshold TH_C, and the position of the difference model DM for the workpiece W whose actual shape is significantly different from the expected shape. As a result, even in a case where the plurality of workpieces include at least one workpiece W having a significantly different shape, there is a lower likelihood that the accuracy of the difference model DM deteriorates.

Incidentally, the second modified example may be combined with the first modified example described above. Namely, even in the first modified example described above, the model generation unit 2211 may divert at least one of the inter-model distance threshold TH_M and the cluster threshold TH_C as described in the second modified example.

### (4-3) Third Modified Example

In a third modified example, after the target model TM is acquired at the step S3 in FIG. 8, the model generation unit 2211 deforms the target model TM based on the object model OM, and generates the difference model DM based on the object model OM and the deformed target model TM. In the below-described description, a technical reason for deforming the target model TM will be described and then an operation for deforming the target model TM will be described.

As described above, a part of the workpiece W is lost due to the use of the workpiece W. On the other hand, there is a likelihood that at least a part of the workpiece W is physically deformed due to the user of the workpiece W, in addition to or instead of the loss of a part of the workpiece W. For example, there is a likelihood that the workpiece W is physically deformed due to a load applied to the workpiece W that is used in a high-temperature environment. Namely, there is a likelihood that a creep occurs. For example, there is a likelihood that the workpiece W is physically deformed due to an aging or other factor.

In a case where the workpiece W is deformed, "the use of the workpiece W" may include a use of the workpiece W that causes a deformation of the workpiece W. For example, "the use of the workpiece W" may include a use of the workpiece W over a long time period that causes the deformation of the workpiece W. Therefore, the actually used workpiece W may include the workpiece W that has been used to the extent that the workpiece W is deformed. On the other hand, the workpiece W before it is actually used may include the workpiece W that has not been used to the extent that the workpiece W is deformed although it has been used. For example, the workpiece W before it is actually used may include the use of the workpiece W over a short time period (for example, a trial operation of the workpiece W or the product including the workpiece W) that does not cause the deformation of the workpiece W.

Incidentally, it can be said that the workpiece W is deformed even in a case where a part of the workpiece W is lost (for example, worn) due to the use of the workpiece W, because the three-dimensional shape of the workpiece W changes. However, in the present example embodiment, the "deformation of the workpiece W" means the deformation of the workpiece W that occurs due to the use of the workpiece W and the deformation of the workpiece W caused by a factor that is different from the loss of the workpiece W.

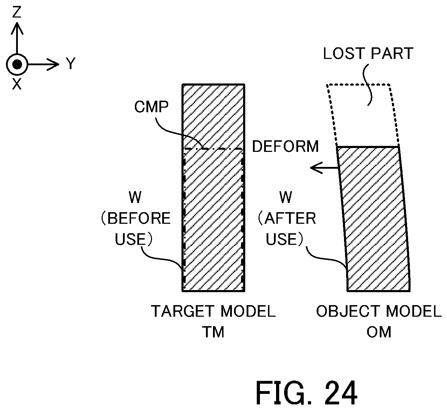

Here, as described above, the object model OM indicates the three-dimensional shape of the actually used workpiece W. Therefore, in a case where the workpiece W is deformed due to the use of the workpiece W, the object model OM indicates the actual three-dimensional shape of the workpiece W that has been deformed due to the use of the workpiece W, as illustrated in a right side of FIG. 24 that schematically illustrates the object model OM that is generated in a case where the workpiece W is deformed. Namely, the object model OM reflects the deformation of the workpiece W caused by the use of the workpiece W. On the other hand, as described above, the target model TM indicates the three-dimensional shape of the workpiece W before it is actually used. Therefore, the target model TM does not reflect the deformation of the workpiece W caused by the use of the workpiece W at all. Therefore, as illustrated in a left side of FIG. 24, the target model TM indicates the target shape of the undeformed workpiece W.

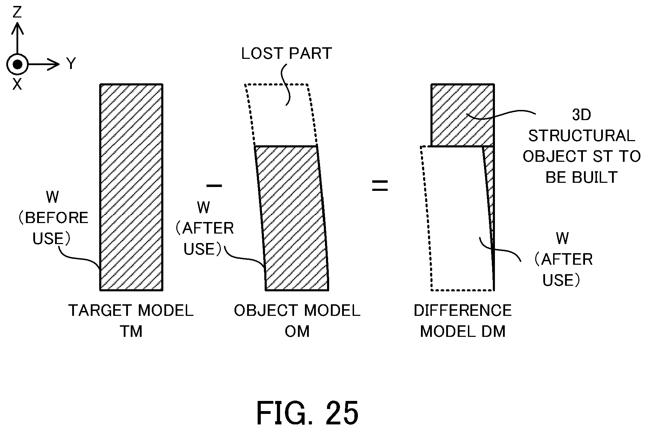

In this case, although the three-dimensional shape of the object model OM should be the same as a three-dimensional shape of a corresponding model part CMP, which corresponds to the object model OM, of the target model TM, the three-dimensional shape of the object model OM is different from the three-dimensional shape of the corresponding model part CMP of the target model TM due to the deformation of the workpiece W, as illustrated in FIG. 24. As a result, as illustrated in FIG. 25 that schematically illustrates the difference model DM that is generated in a case where the workpiece W is deformed, the difference model DM, which corresponds to the difference between the target model TM and the object model OM, indicates a three-dimensional shape that is different from the three-dimensional shape of the three-dimensional structural object ST that should be built by the processing apparatus 1 performing the additive manufacturing. For example, the difference model DM indicates a three-dimensional shape that is different from the three-dimensional shape of the lost part of the workpiece W. As a result, in a case where the processing control information is generated based on this difference model DM, the processing apparatus 1 builds the three-dimensional structural object ST whose shape is different from the desired shape. Namely, the processing apparatus 1 is unable to build the three-dimensional structural object ST whose shape is the desired shape. For example, the processing apparatus 1 is unable to build the three-dimensional structural object ST for appropriately filling in the lost part. Thus, in a case where the workpiece W is deformed due to the use of the workpiece W, the measurement system 2 (especially, the control information generation apparatus 22) has a technical problem that there is a likelihood that it is unable to generate the processing control information for controlling the processing apparatus 1 to build the three-dimensional structural object ST whose shape is the desired shape.

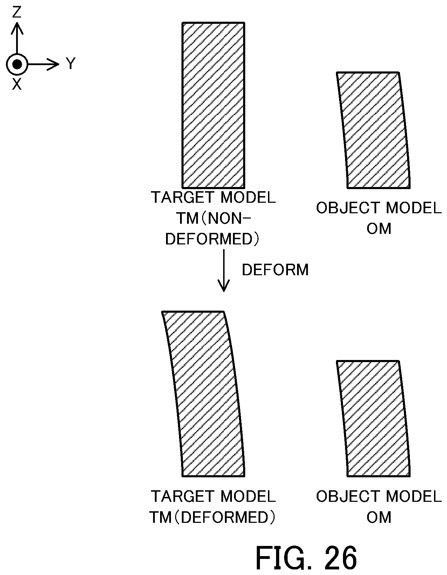

Therefore, in the third modified example, in order to solve the technical problem described above, the model generation unit 2211 deforms the target model TM, which does not reflect the deformation of the workpiece W, based on the object model OM, which reflects the deformation of the workpiece W. For example, as illustrated in FIG. 26 that illustrates the undeformed target model TM and the deformed target model TM, the model generation unit 2211 may deform the target model TM in accordance with the deformation of the workpiece W. Namely, the model generation unit 2211 may deform the target model TM, which does not reflect the deformation of the workpiece W, in accordance with the actual shape of the workpiece W indicated by the object model OM (namely, the shape of the deformed workpiece W). Incidentally, the undeformed target model TM may be distinguished from the deformed target model TM by referring to it as a reference model.

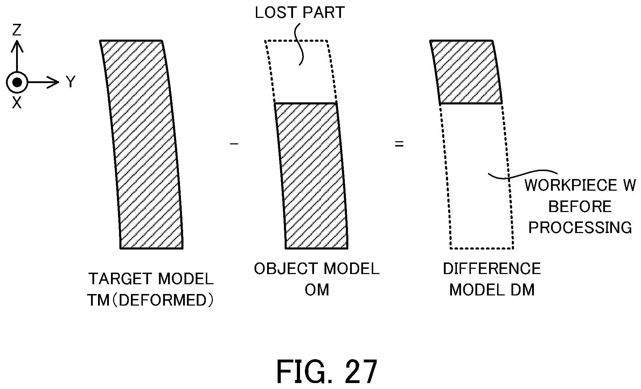

After the target model TM is deformed, the model generation unit 2211 generates the difference model DM based on the object model OM and the deformed target model TM. Specifically, as illustrated in FIG. 27, the model generation unit 2211 may generate, as the difference model DM, a three-dimensional model corresponding to a difference between the deformed target model TM and the object model OM. As a result, as illustrated in FIG. 27, the difference model DM, which corresponds to the difference between the deformed target model TM and the object model OM, is closer to the three-dimensional shape of the three-dimensional structural object ST that should be built by the processing apparatus 1, compared to the three-dimensional shape indicated by the difference model DM that corresponds to the difference between the undeformed target model TM and the object model OM (see FIG. 25). In this manner, in the third modified example, there is a smaller likelihood that the accuracy of the difference model DM deteriorates in a situation where the workpiece W is deformed, compared to a case where the difference model DM is generated by using the undeformed target model TM. Namely, there is a higher likelihood that the difference model DM appropriately indicates the three-dimensional shape of the three-dimensional structural object ST that should be built by the processing apparatus 1 so that the three-dimensional shape of the workpiece W becomes the target shape. Therefore, the control information generation apparatus 22 can appropriately generate the processing control information for controlling the processing apparatus 1 to build the three-dimensional structural object ST having the desired shape, even in a case where the workpiece W is deformed due to the use of the workpiece W. Therefore, even in a case where the workpiece W is deformed due to the use of the workpiece W, the processing apparatus 1 can build the three-dimensional structural object ST having the desired shape.

Incidentally, the third modified example may be combined with at least one of the first to second modified examples described above. Namely, even in at least one of the first to second modified examples described above, the model generation unit 2211 may deform the target model TM based on the object model OM, and may generate the difference model DM based on the object model OM and the deformed target model TM as described in the third modified example.

### (4-4) Fourth Modified Example

In a fourth modified example, the model generation unit 2211 may deform at least a part of the object model OM to generate the deformed object model OM as the target model TM. In this case, the model generation unit 2211 can generate the target model TM even in a case where the target model TM cannot be acquired at the step S3 in FIG. 8.

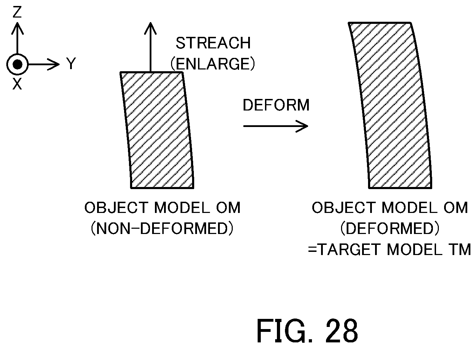

The model generation unit 2211 may deform the object model OM so that at least a part of the object model OM is stretched, as illustrated in FIG. 28 that illustrates the deformed object model OM. Namely, the model generation unit 2211 may deform the object model OM so that at least a part of the object model OM is enlarged. For example, the model generation unit 2211 may deform the object model OM so that a first surface of the object model OM, which faces toward a predetermined direction, is uniformly moved by a desired distance. As one example, FIG. 28 illustrates an example in which the model generation unit 2211 deforms the object model so that an upper surface (for example, a surface positioned on a side opposite to a bottom surface that is the reference position) of the object model OM is uniformly moved by the desired distance. Especially, FIG. 28 illustrates an example in which the model generation unit 2211 deforms the object model OM so that the upper surface of the object model OM is uniformly moved by the desired distance along a direction of a normal of the upper surface. In this case, the model generation unit 2211 may be considered to deform the object model OM so as to stretch the object model OM in a length direction. As another example, the model generation unit 2211 may deform the object model OM so that a surface (for example, a side surface) of the object model OM other than the upper surface and the bottom surface is uniformly moved by the desired distance. The model generation unit 2211 may deform the object model OM so that the surface (for example, the side surface) of the object model OM other than the upper surface and the bottom surface is uniformly moved by the desired distance along a direction of a normal of this surface. In this case, the model generation unit 2211 may be considered to deform the object model OM so as to stretch the object model OM in a width direction.

The model generation unit 2211 may deform the object model OM so that at least a part of the object model OM is shrunk. Namely, the model generation unit 2211 may deform the object model OM so that at least a part of the object model OM is reduced in size. For example, the model generation unit 2211 may deform the object model OM so as to shrink the object model OM in the length direction. For example, the model generation unit 2211 may deform the object model OM so as to shrink the object model OM in the width direction.

Furthermore, in a case where the object model OM is deformed so that the first surface of the object model OM is uniformly moved by the desired distance, the model generation unit 2211 may deform the object model OM so that a second surface of the object model OM, which is different from the first surface and is connected to the first surface, follows the movement of the first surface. In the example illustrated in FIG. 28, the model generation unit 2211 deforms the object model OM so that the side surface of the object model OM (especially, an upper edge part of the side surface that is connected to the upper surface) moves (typically, extends) upwardly to follow the upward movement of the upper surface of the object model OM.

The model generation unit 2211 may generate the target model TM by deforming the object model OM so that the first surface of the object model OM is moved by a distance that is longer than the desired distance, and then removing a part of the object model OM. For example, the model generation unit 2211 may remove a part of the object model OM by performing a Boolean calculation (for example, a Boolean calculation that calculates a difference) between the deformed object model OM and a model that is expected to be the shape of the surface of the target model TM.

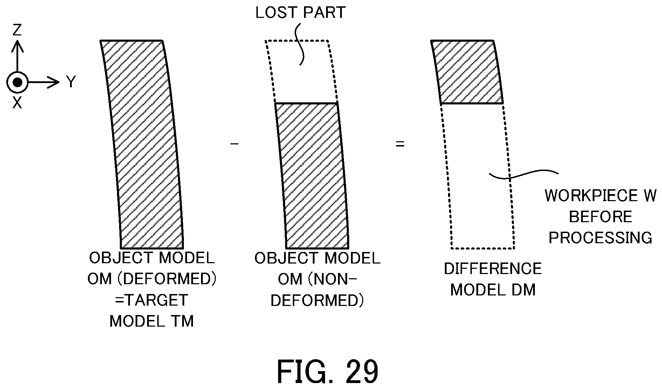

Even in a case where the target model TM is generated by deforming the object model OM in this manner, the model generation unit 2211 may generate, as the difference model DM, the three-dimensional model corresponding to the difference between the target model TM and the object model OM, as illustrated in FIG. 29. Namely, the model generation unit 2211 may generate, as the difference model DM, the three-dimensional model corresponding to the difference between the target model TM, which is generated by deforming the object model OM, and the object model OM that has not been deformed.

In the fourth modified example, the model generation unit 2211 can easily generate the target model TM by deforming the object model OM as illustrated in FIG. 28 in a situation where the upper surface of the workpiece W (for example, the tip of the turbine blade) is worn out evenly. Therefore, the model generation unit 2211 can generate the difference model DM without acquiring the target model TM.

On the other hand, in a case where a crack has occurred on the upper surface of the workpiece W or the upper surface of the workpiece W is partially worn, there is a likelihood that the deformed object model OM cannot be used as the target model TM that accurately indicates the target shape of the workpiece W even in a case where the object model OM is simply deformed as illustrated in FIG. 28. In this case, the model generation unit 2211 may specify a part of the upper surface of the object model OM as a first surface that should be deformed as illustrated in FIG. 28, and may specify another part of the upper surface of the object model OM as a second surface that should not be deformed as illustrated in FIG. 28. As a result, even in a case where the crack has occurred on the upper surface of the workpiece W or the upper surface of the workpiece W is partially worn, the model generation unit 2211 can generate the target model TM that accurately indicates the target shape of the workpiece W by deforming a part of the upper surface of the object model OM as illustrated in FIG. 28. Incidentally, in a case where it is not easy to generate the target model TM that accurately indicates the target shape of the workpiece W by deforming the object model OM, the model generation unit 2211 may generate the target model TM by using a method described in the third modified example.

Incidentally, the fourth modified example may be combined with at least one of the first to third modified examples described above. Namely, even in at least one of the first to third modified examples described above, the model generation unit 2211 may generate the deformed object model OM as the target model TM by deforming at least a part of the object model OM as described in the fourth modified example.

### (4-5) Fifth Modified Example

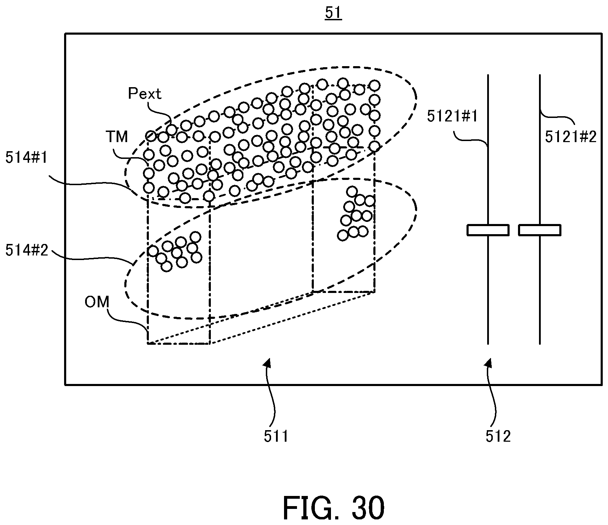

In a fifth modified example, as illustrated in FIG. 30 that illustrates the extraction point display image 51 in the fifth modified example, the extraction point display image 51 may include the display image 512 that includes a plurality of operational objects 5121. Each of the plurality of operational objects 5121 is a display object that is allowed to be operated by the user to adjust the inter-model distance threshold TH_M used to extract the plurality of extraction points Pext from a plurality of points Ptm included in respective one area of a plurality of different areas of the target model TM.

In the example illustrated in FIG. 30, the display image 512 includes two operational objects 5121 (specifically, operational objects 5121#1 and 5121#2). The operational object 5121#1 is a display object that is allowed to be operated by the user to adjust the inter-model distance threshold TH_M used to extract the plurality of extraction points Pext from the plurality of points Ptm included in a first area 514#1 of the target model TM. The operational object 5121#2 is a display object that is allowed to be operated by the user to adjust the inter-model distance threshold TH_M used to extract the plurality of extraction points Pext from the plurality of points Ptm included in a second area 514#2 of the target model TM, which is different from the first area 514#1.

In this case, the model generation unit 2211 may extract the plurality of extraction points Pext from the plurality of points Ptm included in the first area 514#1 of the target model TM by using the inter-model distance threshold TH_M adjusted by the user using the operational object 5121#1. On the other hand, the model generation unit 2211 may not use the inter-model distance threshold TH_M adjusted by the user using the operational object 5121#2 in order to extract the plurality of extraction points Pext from the plurality of points Ptm included in the first area 514#1 of the target model TM. Similarly, the model generation unit 2211 may extract the plurality of extraction points Pext from the plurality of points Ptm included in the second area 514#2 of the target model TM by using the inter-model distance threshold TH_M adjusted by the user using the operational object 5121#2. On the other hand, the model generation unit 2211 may not use the inter-model distance threshold TH_M adjusted by the user using the operational object 5121#1 in order to extract the plurality of extraction points Pext from the plurality of points Ptm included in the second area 514#2 of the target model TM.

As one example, in a case where the user adjusts the inter-model distance threshold TH_M by using the operational object 5121#1 so that the inter-model distance threshold TH_M becomes a first inter-model distance threshold TH_M#51, the model generation unit 2211 may extract the plurality of extraction points Pext from the plurality of points Ptm included in the first area 514#1 of the target model TM by using the first inter-model distance threshold TH_M#51. On the other hand, the model generation unit 2211 may not use the first inter-model distance threshold TH _M#51 in order to extract the plurality of extraction points Pext from the plurality of points Ptm included in the second area 514#2 of the target model TM.

As another example, in a case where the user adjusts the inter-model distance threshold TH_M by using the operational object 5121#2 so that the inter-model distance threshold TH_M becomes a second inter-model distance threshold TH_M#52, the model generation unit 2211 may extract the plurality of extraction points Pext from the plurality of points Ptm included in the second area 514#2 of the target model TM by using the second inter-model distance threshold TH_M#52. On the other hand, the model generation unit 2211 may not use the second inter-model distance threshold TH_M#52 in order to extract the plurality of extraction points Pext from the plurality of points Ptm included in the first area 514#1 of the target model TM.

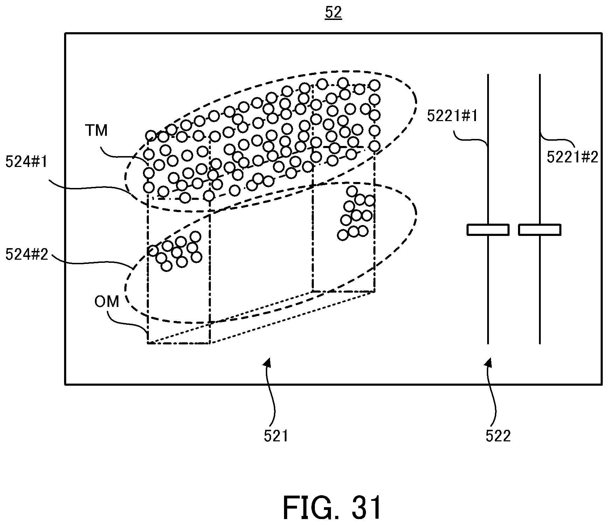

Furthermore, in the fifth modified example, as illustrated in FIG. 31 that illustrates the point cloud cluster display image 52 in the fifth modified example, the point cloud cluster display image 52 may include the display image 522 that includes a plurality of operational objects 5221. Each of the plurality of operational objects 5221 is a display object that is allowed to be operated by the user to adjust the cluster threshold TH_C used to perform the clustering of the plurality of extraction points Pext included in a respective one area of a plurality of different areas of the target model TM.

In the example illustrated in FIG. 31, the display image 522 includes two operational objects 5221 (specifically, operational objects 5221#1 and 5221#2). The operational object 5221#1 is a display object that is allowed to be operated by the user to adjust the cluster threshold TH_C used to perform the clustering of the plurality of extraction points Pext included in a first area 524#1 of the target model TM. The operational object 5221#2 is a display object that is allowed to be operated by the user to adjust the cluster threshold TH_C used to perform the clustering of the plurality of extraction points Pext included in a second area 524#2 of the target model TM, which is different from the first area 524#1.

In this case, the model generation unit 2211 may perform the clustering of the plurality of extraction points Pext included in the first area 524#1 of the target model TM by using the cluster threshold TH_C adjusted by the user using the operational object 5221#1. On the other hand, the model generation unit 2211 may not use the cluster threshold TH_C adjusted by the user using the operational object 5221#2 in order to perform the clustering of the plurality of extraction points Pext included in the first area 524#1 of the target model TM. Similarly, the model generation unit 2211 may perform the clustering of the plurality of extraction points Pext included in the second area 524#2 of the target model TM by using the cluster threshold TH_C adjusted by the user using the operational object 5221#2. On the other hand, the model generation unit 2211 may not use the cluster threshold TH_C adjusted by the user using the operational object 5221#1 in order to perform the clustering of the plurality of extraction points Pext included in the second area 524#2 of the target model TM.

As one example, in a case where the user adjusts the cluster threshold TH_C by using the operational object 5221#1 so that the cluster threshold TH_C becomes a first cluster threshold TH _C#51, the model generation unit 2211 may perform the clustering of the plurality of extraction points Pext included in the first area 524#1 of the target model TM by using the first cluster threshold TH _C#51. On the other hand, the model generation unit 2211 may not use the first cluster threshold TH_C#51 in order to perform the clustering of the plurality of extraction points Pext included in the second area 524#2 of the target model TM.

As another example, in a case where the user adjusts the cluster threshold TH_C by using the operational object 5221#2 so that the cluster threshold TH_C become a second cluster threshold TH_C#52, the model generation unit 2211 may perform the clustering of the plurality of extraction points Pext included in the second area 524#2 of the target model TM by using the second cluster threshold TH _C#52. On the other hand, the model generation unit 2211 may not use the second cluster threshold TH_C#52 in order to perform the clustering of the plurality of extraction points Pext included in the second area 524#1 of the target model TM.

Incidentally, the fifth modified example may be combined with at least one of the first to fourth modified examples described above. Namely, even in at least one of the first to fourth modified examples described above, the extraction point display image 51 may include the display image 512 that includes the plurality of operational objects 5121, and the point cloud cluster display image 52 may include the display image 522 that includes the plurality of operational objects 5221, as described in the fifth modified example.

### (4-6) Sixth Modified Example

In the sixth modified example, the model generation unit 2211 may control the display apparatus 25 to display an integrated display image 53 in which the extraction point display image 51 and the point cloud cluster display image 52 are integrated, in addition to or instead of controlling the display apparatus 25 to display the extraction point display image 51 and the point cloud cluster display image 52.

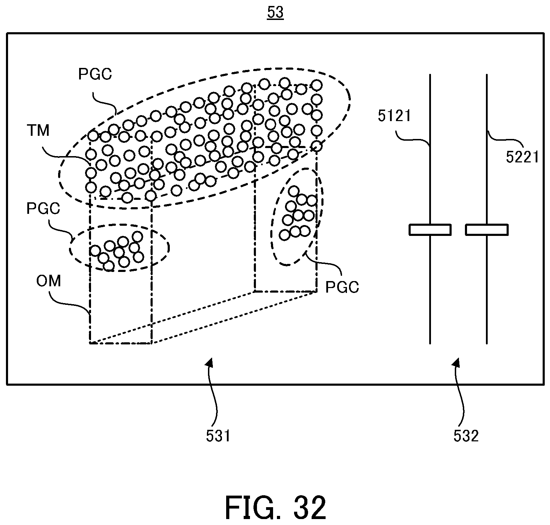

FIG. 32 illustrates one example of the integrated display image 53. As illustrated in FIG. 32, the integrated display image 53 may include a display image 531. The display image 531 is an image for displaying the plurality of extraction points Pext extracted by the model generation unit 2211 and at least one point cloud cluster PGC generated by the model generation unit 2211. The display aspect of the plurality of extraction points Pext in the display image 531 of the integrated display image 53 may be the same as or may be different from the display aspect of the plurality of extraction points Pext in the display image 511 of the extraction point display image 51 described above. The display aspect of at least one point cloud cluster PGC in the display image 531 of the integrated display image 53 may be the same as or may be different from the display aspect of at least one point cloud cluster PGC in the display image 521 of the point cloud cluster display image 52 described above.

As illustrated in FIG. 32, the integrated display image 53 may further include a display image 532. The display image 532 is an image for displaying the operational object 5121 that is allowed to be operated by the user to adjust the inter-model distance threshold TH_M used to extract the extraction points Pext and the operational object 5221 that is allowed to be operated by the user to adjust the cluster threshold TH_C used to generate the point cloud cluster PGC. The display of the operational object 5121 in the display image 532 of the integrated display image 53 may be the same as or may be different from the display of the operational object 5121 in the display image 512 of the extraction point display image 51 described above. The display of the operational object 5221 in the display image 532 of the integrated display image 53 may be the same as or may be different from the display of the operational object 5221 in the display image 522 of the point cloud cluster display image 52 described above.

In this sixth modified example, since the integrated display image 53 is displayed, the user may repeat the adjustment of the inter-model distance threshold TH_M and the adjustment of the cluster threshold TH_C as many times as necessary without switching the image displayed on the display apparatus 25. In this case, the model generation unit 2211 may be considered to control the display apparatus 25 to display the extraction point display image 51 and the point cloud cluster display image 52 simultaneously.

Incidentally, the sixth modified example may be combined with at least one of the first to fifth modified examples described above. Namely, even in at least one of the first to fifth modified examples described above, the model generation unit 2211 may control the display apparatus 25 to display the integrated display image 53, as described in the sixth modified example.

### (4-7) Seventh Modified Example

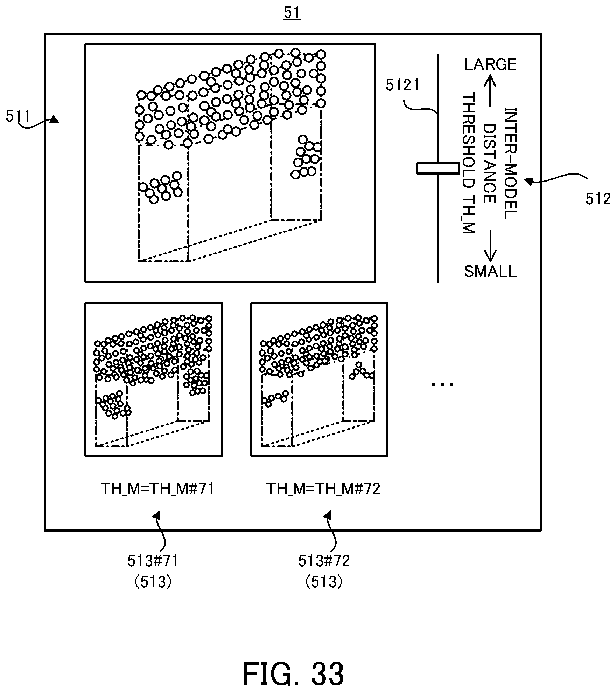

In a seventh modified example, as illustrated in FIG. 33, the extraction point display image 51 may include at least one display image 513 in addition to the display images 511 and 512 described above. The display image 513 is an image for displaying the plurality of extraction points Pext that are extracted in a case where the inter-model distance threshold TH_M is set to a predetermined preset value (in other words, a candidate value or a tentative value) corresponding to the display image 513.

In an example illustrated in FIG. 33, the extraction point display image 51 includes two display images 513 (specifically, a display image 513#71 and a display image 513#72). The display image 513#71 displays the plurality of extraction points Pext that are extracted in a case where the inter-model distance threshold TH_M is set to a first preset value TH_D#71. The display image 513#72 displays the plurality of extraction points Pext that are extracted when the inter-model distance threshold TH_M is set to a second preset value TH_D#72 that is different from the first preset value TH_D#71. However, the extraction point display image 51 may include a single display image 513 or may include three or more display images 513.

The user may adjust the inter-model distance threshold TH_M by using the input apparatus 24 to select one of the plurality of display images 513. In this case, the input apparatus 24 may receive the input from the user for selecting the display image 513 as the input for adjusting the inter-model distance threshold TH_M. Specifically, in a case where the user selects one of the plurality of display images 513 by using the input apparatus 24, the model generation unit 2211 may set the inter-model distance threshold TH_M to the preset value corresponding to the display image 513 selected by the user. For example, in a case where the user selects the display image 513#71 illustrated in FIG. 33, the model generation unit 2211 may set the inter-model distance threshold TH_M to the first preset value TH_D#71 corresponding to the display image 513#71 selected by the user. For example, in a case where the user selects the display image 513#72 illustrated in FIG. 33, the model generation unit 2211 may set the inter-model distance threshold TH_M to the first preset value TH_D#72 corresponding to the display image 513#72 selected by the user. In this case, the user can adjust the inter-model distance threshold TH_M while checking the display image 513 illustrating an extracted result of the plurality of extraction points Pext. Therefore, the user can adjust the inter-model distance threshold TH_M intuitively.

After adjusting the inter-model distance threshold TH_M by selecting the display image 513, the user may adjust the inter-model distance threshold TH_M by operating the operational object 5121. Namely, before adjusting the inter-model distance threshold TH_M by operating the operational object 5121, the user may adjust the inter-model distance threshold TH_M by selecting the display image 513. Therefore, the display image 513 may be displayed before the user operates the operational object 5121. In this case, the user may roughly adjust the inter-model distance threshold TH_M by selecting the display image 513, and then finely adjust the inter-model distance threshold TH_M by operating the operational object 5121. As a result, the user can adjust the inter-model distance threshold TH_M relatively easily so that appropriate extraction points Pext are extracted, compared to the case where the inter-model distance threshold TH_M is adjusted without selecting the display image 513.

In a case where the inter-model distance threshold TH_M is adjusted by the user selecting the displayed image 513, the model generation unit 2211 may extract the plurality of extraction points Pext by using the inter-model distance threshold TH_M adjusted by the user (the step S413 in FIG. 14), as in a case where the inter-model distance threshold TH_M is adjusted by the user operating the operational object 5121. For example, in a case where the user selects the display image 513#71 illustrated in FIG. 33, the model generation unit 2211 may extract the plurality of extraction points Pext by using the first preset value TH_D#71 as the inter-model distance threshold TH_M at the step S413 in FIG. 14. For example, in a case where the user selects the display image 513#72 illustrated in FIG. 33, the model generation unit 2211 may extract the plurality of extraction points Pext by using the second preset value TH_D#72 as the inter-model distance threshold TH_M at the step S413 in FIG. 14. Then, the model generation unit 2211 may update the extraction point display image 51 (the step S414 in FIG. 14). Especially, the model generation unit 211 may update the display image 511 that displays the plurality of extraction points Pext extracted by using the inter-model distance threshold TH_M adjusted by the user (the step S414 in FIG. 14).

The plurality of extraction points Pext displayed in the display image 513 may be extracted by using the reduced model M_reduced described in the first modified example. In this case, the processing load required to display the display image 513 (specifically, the processing load required to extract the plurality of extraction points Pext by using the preset value of the inter-model distance threshold TH_M) is not excessively high. On the other hand, the plurality of extraction points Pext displayed in the display image 511 may be extracted by using the original model M_original as described in the first modified example.

Incidentally, a data size of the display image 513 displayed by using the reduced model M_reduced may be smaller than a data size of the display image 511 displayed by using the original model M _original. A size (for example, a size in a vertical direction and a horizontal direction) of the display image 513 may be smaller than a size of the display image 511 in the extraction point display image 51. Therefore, the display image 513 displayed by using the reduced model M_reduced may be referred to as a reduced image.

Incidentally, the seventh modified example may be combined with at least one of the first to sixth modified examples described above. Namely, even in at least one of the first to sixth modified examples described above, the extraction point display image 51 may include at least one display image 513 in addition to the display images 511 and 512 described above, as described in the seventh modified example.

### (4-8) Eighth Modified Example

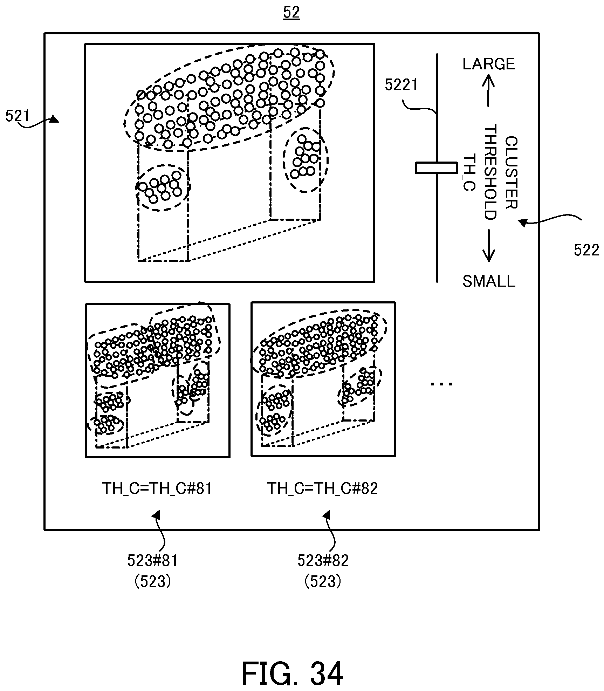

In an eighth modified example, as illustrated in FIG. 34, the point cloud cluster display image 52 may include at least one display image 523 in addition to the display images 521 and 522 described above. The display image 523 is an image for displaying at least one point cloud cluster PGC that is generated in a case where the cluster threshold TH_C is set to a predetermined preset value (in other words, a candidate value or a tentative value) corresponding to the display image 523.

In an example illustrated in FIG. 34, the point cloud cluster display image 52 includes two display images 523 (specifically, a display image 523#81 and a display image 523#82). The display image 523#71 displays at least one point cloud cluster PGC that is generated in a case where the cluster threshold TH_C is set to a first preset value TH_C#81. The display image 523#72 displays at least one point cloud cluster PGC that is generated in a case where the cluster threshold TH_C is set to a second preset value TH_C#82 that is different from the first preset value TH _C#81. However, the point cloud cluster display image 52 may include a single display image 523 or may include three or more display images 523.

The user may adjust the cluster threshold TH_C by using the input apparatus 24 to select one of the plurality of display images 523. In this case, the input apparatus 24 may receive the input from the user for selecting the display image 523 as the input for adjusting the cluster threshold TH_C. Specifically, in a case where the user selects one of the plurality of display images 523 by using the input apparatus 24, the model generation unit 2211 may set the cluster threshold TH_C to the preset value corresponding to the display image 523 selected by the user. For example, in a case where the user selects the display image 523#81 illustrated in FIG. 34, the model generation unit 2211 may set the cluster threshold TH_C to the first preset value TH_C#81 corresponding to the display image 523#81 selected by the user. For example, in a case where the user selects the display image 523#82 illustrated in FIG. 34, the model generation unit 2211 may set the cluster threshold TH_C to the first preset value TH_C#82 corresponding to the display image 523#82 selected by the user. In this case, the user can adjust the cluster threshold TH_C while checking the display image 523 illustrated a generated result of at least one point cloud cluster PGC. Therefore, the user can adjust the cluster threshold TH_C intuitively.

After adjusting the cluster threshold TH_C by selecting the display image 523, the user may adjust the cluster threshold TH_C by operating the operational object 5221. Namely, before adjusting the cluster threshold TH_C by operating the operational object 5221, the user may adjust the cluster threshold TH_C by selecting the display image 523. Therefore, the display image 523 may be displayed before the user operates the operational object 5221. In this case, the user may roughly adjust the cluster threshold TH_C by selecting the display image 523, and then finely adjust the cluster threshold TH_C by operating the operational object 5221. As a result, the user can adjust the cluster threshold TH_C relatively easily so that an appropriate point cloud cluster PGC is generated, compared to a case where the cluster threshold TH_C is adjusted without selecting the display image 523.

In a case where the cluster threshold TH_C is adjusted by the user selecting the display image 523, the model generation unit 2211 may generate at least one point cloud cluster PGC by using the cluster threshold TH_C adjusted by the user (the step S423 in FIG. 14), as in a case where the cluster threshold TH_C is adjusted by the user operating the operational object 5221. For example, in a case where the user selects the display image 523#81 illustrated in FIG. 34, the model generation unit 2211 may generate at least one point cloud cluster PGC by using the first preset value TH_C#81 as the cluster threshold TH_C at the step S423 in FIG. 14. For example, in a case where the user selects the display image 523#82 illustrated in FIG. 34, the model generation unit 2211 may generate at least one point cloud cluster PGC by using the second preset value TH_C#82 as the cluster threshold TH_C at the step S423 in FIG. 14. Then, the model generation unit 2211 may update the point cloud cluster display image 52 (the step S424 in FIG. 14). Especially, the model generation unit 211 may update the display image 521 that displays at least one point cloud cluster PGC generated by using the cluster threshold TH_C adjusted by the user (the step S424 in FIG. 14).

At least one point cloud cluster PGC displayed in the display image 523 may be generated by using the reduced model M_reduced described in the first modified example. In this case, the processing load required to display the display image 523 (specifically, the processing load required to generate at least one point cloud cluster PGC by using the preset value of the cluster threshold TH_C) is not excessively high. On the other hand, at least one point cloud cluster PGC displayed in the display image 521 may be extracted by using the original model M_original as described in the first modified example.

Incidentally, a data size of the display image 523 displayed by using the reduced model M_reduced may be smaller than a data size of the display image 521 displayed by using the original model M _original. A size (for example, a size in a vertical direction and a horizontal direction) of the display image 523 may be smaller than a size of the display image 521 in the point cloud cluster display image 52. Therefore, the display image 523 displayed by using the reduced model M_reduced may be referred to as a reduced image.

Incidentally, the eighth modified example may be combined with at least one of the first to seventh modified examples described above. Namely, even in at least one of the first to seventh modified examples described above, the point cloud cluster display image 52 may include at least one display image 523 in addition to the display images 521 and 522 described above, as described in the eighth modified example.

### (4-9) Ninth Modified Example

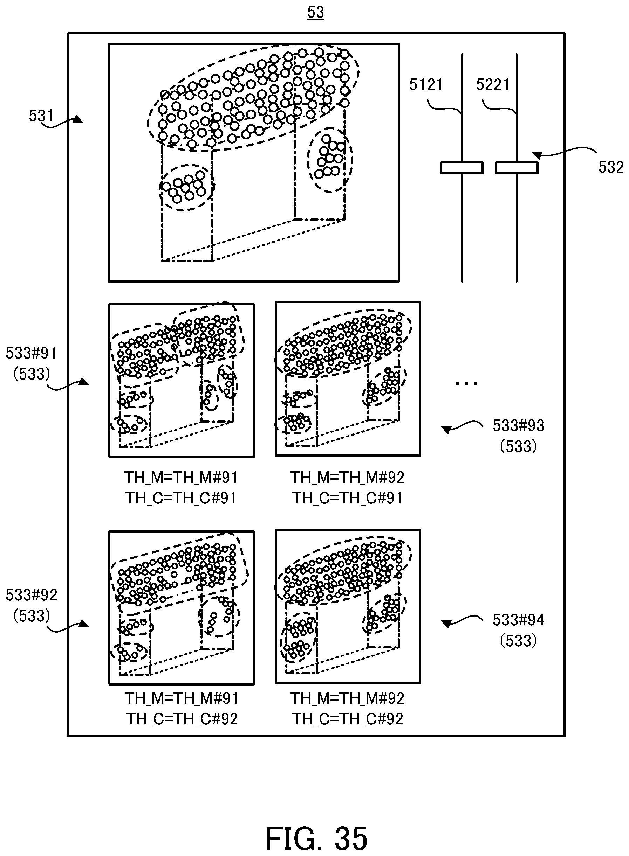

In a ninth modified example, the integrated display image 53 may be displayed as in the sixth modified example. However, in the ninth modified example, as illustrated in FIG. 35, the integrated display image 53 may include at least one display image 533 in addition to the display images 531 and 532 described above. The display image 533 is an image for displaying the plurality of extraction points Pext, which area extracted in a case where the inter-model distance threshold TH_M is set to a predetermined preset value corresponding to display image 533, and the cluster threshold TH_C, which is set to a predetermined preset value corresponding to display image 533. Furthermore, the display image 533 is an image for displaying at least one point cloud cluster PGC that is generated in a case where the inter-model distance threshold TH_M is set to the predetermined preset value corresponding to the display image 533 and the cluster threshold TH_C is set to the predetermined preset value corresponding to the display image 533.

In the example illustrated in FIG. 35, the integrated display image 53 includes four display images 533 (specifically, a display image 533#91, a display image 533#92, a display image 533#93, and a display image 533#94). The display image 533#91 displays the plurality of extraction points Pext that are extracted in a case where the inter-model distance threshold TH_M is set to a first preset value TH_D#91 and the cluster threshold TH_C is set to a first preset value TH_C#91. Furthermore, the display image 533#91 displays at least one point cloud cluster PGC that is generated in a case where the inter-model distance threshold TH_M is set to the first preset value TH_D#91 and the cluster threshold TH_C is set to the first preset value TH_C#91. The display image 533#92 displays the plurality of extraction points Pext that are extracted in a case where the inter-model distance threshold TH_M is set to the first preset value TH_D#91 and the cluster threshold TH_C is set to a second preset value TH_C#92 that is different from the first preset value TH_C#91. Furthermore, the display image 533#92 displays at least one point cloud cluster PGC that is generated in a case where the inter-model distance threshold TH_M is set to the first preset value TH_D#91 and the cluster threshold TH_C is set to the second preset value TH_C#92. The display image 533#93 displays the plurality of extraction points Pext that are extracted in a case where the inter-model distance threshold TH_M is set to a second preset value TH_D#92 that is different from the first preset value TH_D#91 and the cluster threshold TH_C is set to the first preset value TH_C#91. Furthermore, the display image 533#93 displays at least one point cloud cluster PGC that is generated in a case where the inter-model distance threshold TH_M is set to the second preset value TH_D#92 and the cluster threshold TH_C is set to the first preset value TH_C#91. The display image 533#94 displays the plurality of extraction points Pext that are extracted in a case where the inter-model distance threshold TH_M is set to the second preset value TH_D#92 and the cluster threshold TH_C is set to the second preset value TH_C#92. Furthermore, the display image 533#94 displays at least one point cloud cluster PGC that is generated in a case where the inter-model distance threshold TH_M is set to the second preset value TH_D#92 and the cluster threshold TH_C is set to the second preset value TH_C#92.

The user may adjust the inter-model distance threshold TH_M and cluster threshold TH_C by using the input apparatus 24 to select one of the plurality of display images 533. In this case, the input apparatus 24 may receive the input from the user for selecting the display image 533 as the input for adjusting the inter-model distance threshold TH_M and cluster threshold TH_C. Specifically, in a case where the user selects one of the plurality of display images 533 by using the input apparatus 24, the model generation unit 2211 may set the inter-model distance threshold TH_M to a preset value corresponding to the display image 533 selected by the user, and may set the cluster threshold TH_C to a preset value corresponding to the display image 533 selected by the user. For example, in a case where the user selects the display image 533#91 illustrated in FIG. 35, the model generation unit 2211 may set the inter-model distance threshold TH_M to the first preset value TH_D#91 corresponding to the display image 533#91 selected by the user, and may set the cluster threshold TH_C to the first preset value TH_C# 91 corresponding to the display image 533#91 selected by the user. For example, in a case where the user selects the display image 533#92 illustrated in FIG. 35, the model generation unit 2211 may set the inter-model distance threshold TH_M to the first preset value TH_D#91 corresponding to the display image 533#92 selected by the user, and may set the cluster threshold TH_C to the second preset value TH_C# 92 corresponding to the display image 533#92 selected by the user. For example, in a case where the user selects the display image 533#93 illustrated in FIG. 35, the model generation unit 2211 may set the inter-model distance threshold TH_M to the second preset value TH_D#92 corresponding to the display image 533#93 selected by the user, and may set the cluster threshold TH_C to the first preset value TH_C# 91 corresponding to the display image 533#93 selected by the user. For example, in a case where the user selects the display image 533#94 illustrated in FIG. 35, the model generation unit 2211 may set the inter-model distance threshold TH_M to the second preset value TH_D#92 corresponding to the display image 533#94 selected by the user, and may also set the cluster threshold TH_C to the second preset value TH_C# 92 corresponding to the display image 533#94 selected by the user.

After adjusting the inter-model distance threshold TH_M and the cluster threshold TH_C by selecting the display image 533, the user may adjust the inter-model distance threshold TH_M by operating the operational object 5121 and adjust the cluster threshold TH_C by operating the operational object 5221. Namely, before adjusting the inter-model distance threshold TH_M by operating the operational object 5121 and adjusting the cluster threshold TH_C by operating the operational object 5221, the user may adjust the inter-model distance threshold TH_M and the cluster threshold TH_C by selecting the display image 533. Therefore, the display image 533 may be displayed before the user operates the operational object 5221. In this case, the user may roughly adjust the inter-model distance threshold TH_M and the cluster threshold TH_C by selecting the display image 533, and then finely adjust the inter-model distance threshold TH_M by operating the operational object 5121 and finely adjust the cluster threshold TH_C by operating the operational object 5221. As a result, the user can adjust the inter-model distance threshold TH_M and the cluster threshold TH_C relatively easily so that appropriate extraction points Pext are extracted and an appropriate point cloud cluster PGC is generated, compared to a case where the inter-model distance threshold TH_M and the cluster threshold TH_C are adjusted without selecting the display image 533.

Even in the ninth modified example, as in the seventh modified example, in a case where the inter-model distance threshold TH_M is adjusted by the user selecting the display image 533, the model generation unit 2211 may extract the plurality of extraction points Pext by using the inter-model distance threshold TH_M adjusted by the user. Similarly, even in the ninth modified example, as in the seventh modified example, in a case where the cluster threshold TH_C is adjusted by the user selecting the display image 533, the model generation unit 2211 may generate at least one point cloud cluster PGC by using the cluster threshold TH_C adjusted by the user. Then, the model generation unit 2211 may update the integrated display image 53.

The plurality of extraction points Pext displayed in the display image 533 may be extracted by using the reduced model M_reduced described in the first modified example. In this case, the processing load required to display the display image 533 (specifically, the processing load required to extract the plurality of extraction points Pext by using the preset value of the inter-model distance threshold TH_M) is not excessively high. On the other hand, the plurality of extraction points Pext displayed in the display image 531 may be extracted by using the original model M_original as described in the first modified example.

Similarly, at least one point cloud cluster PGC displayed in the display image 533 may be generated by using the reduced model M_reduced described in the first modified example. In this case, the processing load required to display the display image 533 (specifically, the processing load required to generate at least one point cloud cluster PGC by using the preset value of the cluster threshold TH_C) is not excessively high. On the other hand, at least one point cloud cluster PGC displayed in the display image 531 may be extracted by using the original model M_original as described in the first modified example.

Incidentally, a data size of the display image 533 displayed by using the reduced model M_reduced may be smaller than a data size of the display image 531 displayed by using the original model M_original. A size (for example, a size in a vertical direction and a horizontal direction) of the display image 533 may be smaller than the size of the display image 531 in the integrated display image 53. Therefore, the display image 533 displayed by using the reduced model M_reduced may be referred to as a reduced image.

Incidentally, the ninth modified example may be combined with at least one of the first to eighth modified examples described above. Namely, even in at least one of the first to eighth modified examples described above, the integrated display image 53 (alternatively, at least one of the extraction point display image 51 and the point cloud cluster display image 52) may include at least one display image 533, as described in the ninth modified example.

### (4-10) Tenth Modified Example

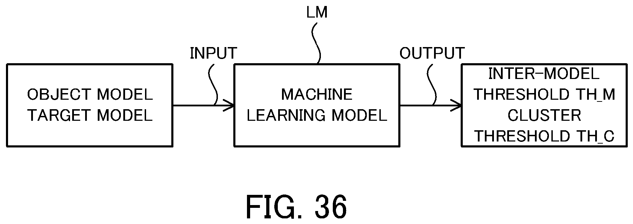

In a tenth modified example, the model generation unit 2211 may set at least one of the inter-model distance threshold TH_M and the cluster threshold TH_C by using a machine learning model LM that is configured to output a recommended value of at least one of the inter-model distance threshold TH_M and the cluster threshold TH_C when a feature amount of the object model OM and a feature amount of the target model TM are input thereto, as illustrated in FIG. 36. A machine learning model using a neural network is one example of the machine learning model. In this case, the model generation unit 2211 may extract the plurality of extraction points Pext by using the recommended value of the inter-model distance threshold TH_M output by the machine learning model LM at the step S410 or the step S413 in FIG. 14. The model generation unit 2211 may generate at least one point cloud cluster PGC by using the recommended value of the cluster threshold TH_C output by the machine learning model LM at the step S420 or the step S423 in FIG. 14.

In a case where the machine learning model LM outputs the recommended value of at least one of the inter-model distance threshold TH_M and the cluster threshold TH_C, the user may not adjust at least one of the inter-model distance threshold TH_M and the cluster threshold TH_C. As a result, a workload required for the user to adjust at least one of the inter-model distance threshold TH_M and the cluster threshold TH_C is reduced. However, in a case where the machine learning model LM outputs the recommended value for at least one of the inter-model distance threshold TH_M and the cluster threshold TH_C, the user may adjust at least one of the inter-model distance threshold TH_M and the cluster threshold TH_C. For example, the user may adjust at least one of the inter-model distance threshold TH_M and the cluster threshold TH_C based on the recommended value of at least one of the inter-model distance threshold TH_M and the cluster threshold TH_C output by the machine learning model LM.

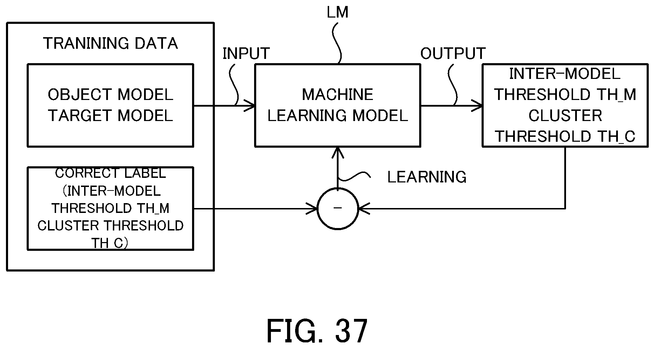

The machine learning model LM may be generated by a machine learning using training data that includes: sample data including the feature amount of the object model OM and the feature amount of the target model TM, and a correct label indicating a ground truth of at least one of the inter-model distance threshold TH_M and the cluster threshold TH_C that should be set for the object model OM and the target model TM, as illustrated in FIG. 37. Especially, the machine learning model LM may be generated by the machine learning using a training data set including a large amount of training data. In this case, the machine learning may be performed so that an error between the output of the machine learning model LM to which the sample data (specifically, the feature amount of the object model OM and the feature amount of the target model TM) included in the training data is input and the correct label included in the training data decreases.

Alternatively, the model generation unit 2211 may generate the recommended value of at least one of the inter-model distance threshold TH_M and the cluster threshold TH_C without using the machine learning model LM. For example, the model generation unit 2211 may generate the recommended value of the cluster threshold TH_C based on the distance condition described above. For example, the model generation unit 2211 may generate the recommended value of the inter-model distance threshold TH_M based on a condition of the point cloud cluster PGC (for example, at least one of the size and the number of the point cloud cluster PGC). In this case, the user may not adjust at least one of the inter-model distance threshold TH_M and the cluster threshold TH_C.

The model generation unit 2211 may automatically output or generate both the inter-model distance threshold TH_M and the cluster threshold TH_C. The model generation unit 2211 may automatically output or generate the inter-model distance threshold TH_M, and the user may manually adjust the cluster threshold TH_C. The model generation unit 2211 may automatically output or generate the cluster threshold TH_C, and the user may manually adjust the inter-model distance threshold TH_M. An operation mode of the model generation unit 2211 may be switchable between an automatic mode in which the extraction points Pext are extracted by using the inter-model distance threshold TH_M output or generated by the model generation unit 2211, and a manual mode in which the extraction points Pext are extracted by using the inter-model distance threshold TH_M adjusted by the user. The operation mode of the model generation unit 2211 may be switchable between an automatic mode in which the clustering of the extraction points Pext is performed by using the cluster threshold TH_C output or generated by the model generation unit 2211, and a manual mode in which the clustering of the extraction points Pext is performed by using the cluster threshold TH_C adjusted by the user.

### (4-11) Eleventh Modified Example

Next, in the above-described description, the processing apparatus 1 performs the additive manufacturing on the workpiece W. In an eleventh modified example, however, the processing apparatus 1 may perform a subtractive manufacturing on the workpiece W, in addition to or instead of performing the additive manufacturing on the workpiece W. Namely, the processing apparatus 1 may be configured to perform the subtractive manufacturing for removing a part of the workpiece W. Incidentally, the processing apparatus 1 may perform the subtractive manufacturing on the built object built by the processing apparatus 1, in addition to or instead of performing the subtractive manufacturing on the workpiece W.

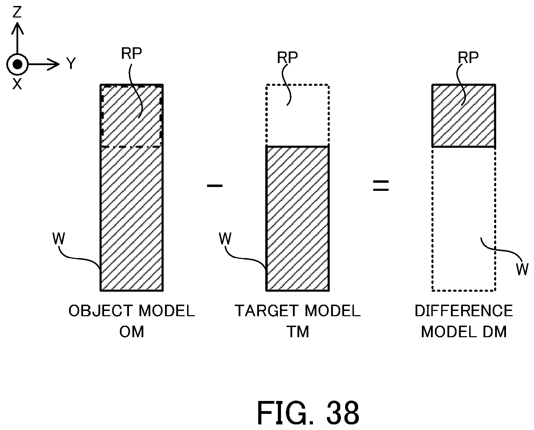

Even in a case where the processing apparatus 1 performs the subtractive manufacturing on the workpiece W, the control information generation apparatus 22 may generate the processing control information by performing the control information generation operation (see FIG. 8) described above. However, in a case where the processing apparatus 1 performs the subtractive manufacturing on the workpiece W, the object model OM indicates the three-dimensional shape of the workpiece W that includes a removed part RP by the subtractive manufacturing, and the target model TM indicates the three-dimensional shape of the workpiece W that does not include the removed part RP, as illustrated in FIG. 38. Therefore, in the eleventh modified example, the difference model DM, which corresponds to the difference between the target model TM and the object model OM, indicates the three-dimensional shape of the part that should be removed from the workpiece W by the subtractive manufacturing.

Furthermore, in the eleventh modified example, the model generation unit 2211 may extract, as the plurality of extraction points Pext, a plurality of extraction points Pext that satisfy a predetermined distance condition from among the plurality of points Pom included in the object model OM at the step S410 or the step S413 in the difference model generation operation illustrated in FIG. 14 The predetermined distance condition may include a condition that a distance D3 between one point Pom of the object model OM and one point Ptm of the target model TM that is closest to the one point Pom is equal to or longer than the predetermined model distance threshold TH_M. In this case, even in a case where the processing apparatus 1 performs the subtractive manufacturing, the above-described effect that is achievable in a case where the processing apparatus 1 performs the additive manufacturing is achievable.

Incidentally, as described above, the processing apparatus 1 that performs the additive manufacturing may perform the additive manufacturing as at least a part of the repair processing for the workpiece W having the lost part. In this case, the processing apparatus 1 that is configured to perform the subtractive manufacturing may perform the subtractive manufacturing as at least another part of the repair processing. For example, the processing apparatus 1 may perform the subtractive manufacturing for remove a part of the build object added to the workpiece W. In a case where the processing apparatus 1 performs the subtractive manufacturing, the processing apparatus 1 may process the workpiece W by using a principle of a non-thermal processing (for example, an ablation processing). Alternatively, the processing apparatus 1, which is configured to perform a melt processing, may perform the melt processing as at least another part of the repair processing. The melt processing may include a processing that melts the surface of the workpiece W or the build object and solidifies the melted surface. Incidentally, the melt processing may be referred to as a remelt processing. The processing apparatus 1 may perform a planar processing for making the surface of workpiece W or the build object be closer to a flat surface by performing the melting processing.

Moreover, even in a case where the processing apparatus 1 performs the processing that is different from the additive manufacturing and the subtractive manufacturing, the control information generation apparatus 22 may generate the processing control information by performing the control information generation operation described above (see FIG. 8). However, in this case, the model generation unit 2211 may extract, as the plurality of extraction points Pext, a plurality of points that satisfy the predetermined distance condition from among the plurality of points included in one of the object model OM or the target model TM at the step S410 or the step S413 of the difference model generation operation illustrated in FIG. 14. The predetermined distance condition may include a condition that a distance D4 between a first point of one the object model OM and the target model TM and a second point of the other one of the object model OM and the target model TM that is closest to the first point is equal to or longer than the predetermined inter-model distance threshold TH_M. In this case, even in a case where the processing apparatus 1 performs the processing that is different from the additive manufacturing and the subtractive manufacturing, the above-described effect, which is achievable in a case where the processing apparatus 1 performs at least one of the additive manufacturing and the subtractive manufacturing, is achievable.

Moreover, the difference model generation operation illustrated in FIG. 14 may be performed not only in a case where the processing apparatus 1 processes the workpiece W but also in a case where the difference model corresponding to the difference between a first three-dimensional model and a second three-dimensional model is generated. However, in this case, the model generation unit 2211 may extract, as the plurality of extraction points Pext, a plurality of points that satisfy the predetermined distance condition from among the plurality of points included in one of the first and second three-dimensional models at the step S410 or the step S413 in FIG. 14 The predetermined distance condition may include a condition that a distance D5 between a first point of one of the first or second three-dimensional model and a second point of the other one of the first or second three-dimensional model that is closest to the first point is equal to or longer than the predetermined inter-model distance threshold TH_M. In this case, even in a case where the difference model corresponding to the difference between the first three-dimensional model and the second three-dimensional model is generated, the above-described effect is achievable.

### (4-12) Other Modified Example

In the above-described description, the processing apparatus 1 melts the build material M by irradiating the build material M with the processing light EL. However, the processing apparatus 1 may melt the build material M by irradiating the build material M with any energy beam. At least one of a charged particle beam, an electromagnetic wave and the like is one example of any energy beam. A least one of an electron beam, an ion beam and the like is one example of the charged particle beam.

In the above-described description, the processing apparatus 1 performs the additive manufacturing by using the Laser Metal Deposition. However, the processing apparatus 1 may perform the additive manufacturing by using an additive manufacturing method that is different from the Laser Metal Deposition. For example, the processing apparatus 1 may perform the additive manufacturing by using a Powder Bed Fusion. In a case where the processing apparatus 1 performs the additive manufacturing using the Powder Bed Fusion, the workpiece W measured by the measurement system 2 or the holding tool that holds the workpiece W may be placed on the stage 131 of the processing apparatus 1, and then, the processing apparatus 1 may perform the additive manufacturing on the upper surface of the workpiece W by filling a periphery of the workpiece W with the build material M so that the upper surface of the build material M is positioned on the upper surface of the workpiece W.

### (5) Supplementary Note

Regarding the above-described example embodiment, below described Supplementary notes are further disclosed.

### [Supplementary Note 1]

An information processing method of generating a difference model that is a three-dimensional model indicating a difference between an object model, which is a three-dimensional model indicating a three-dimensional shape of an object, and a target model, which is a three-dimensional model indicating a target shape of the object, and that indicates a part added to the object for processing the object to be the target shape, wherein
the information processing method includes:
receiving a first input that is an input from a user;
acquiring a plurality of unit areas each of which corresponds to a part of the target model and whose distances from the object model are equal to or longer than a first threshold that is set by the first input;
receiving a second input that is an input from the user;
acquiring at least one cluster area, each cluster area is a group of the unit areas in which a distance between two unit areas of the plurality of acquired unit areas is equal to or shorter than a second threshold that is set by the second input; and
outputting, as the difference model or information for generating the difference model, at least one of the cluster area acquired after receiving the first input and receiving the second input.

### [Supplementary Note 2]

The information processing method according to the Supplementary Note 1, wherein
processing control information for controlling a processing apparatus, which is configured to process the object, to process the object so that a shape of the object becomes the target object is generated based on the difference model.

### [Supplementary Note 3]

The information processing method according to the Supplementary Note 2, wherein
the processing apparatus is an additive manufacturing apparatus, and
an additive manufacturing of the object by the processing apparatus is performed as at least a part of a repair processing of the object.

### [Supplementary Note 4]

The information processing method according to any one of the Supplementary Notes 1 to 3 further including generating the target model by deforming at least a part of a reference model of the object based on the object model.

### [Supplementary Note 5]

The information processing method according to any one of the Supplementary Notes 1 to 3, wherein
the target model is generated by deforming at least a part of the object model.

### [Supplementary Note 6]

The information processing method according to the Supplementary Note 5, wherein
a deformation of the object model includes an enlargement of a part of the object model.

### [Supplementary Note 7]

The information processing method according to any one of the Supplementary Notes 1 to 6 further including:
displaying a first display image including the plurality of unit areas and a first operational object that is allowed to be operated by the user to adjust the first threshold; and
displaying a second display image including the cluster area and a second operational object that is allowed to be operated by the user to adjust the second threshold.

### [Supplementary Note 8]

The information processing method according to the Supplementary Note 7 further including:
updating the plurality of unit areas included in the first display image based on an operation of the first operational object; and
updating the cluster area included in the second display image based on an operation of the second operational object.

### [Supplementary Note 9]

The information processing method according to any one of the Supplementary Note 7 or 8, wherein
the number of the cluster areas included in the second display image is changed due to an adjustment of the second threshold by the user.

### [Supplementary Note 10]

The information processing method according to any one of the Supplementary Notes 7 to 9, wherein
the first display image in a case where the first threshold is set to a first candidate value includes a first reduced image that includes a plurality of unit areas acquired in a case where the first threshold is set to a second candidate value that is different from the first candidate value.

### [Supplementary Note 11]

The information processing method according to the Supplementary Note 10, wherein
in a case where the user specifies the first reduced image in the first display image after the first display image including the first reduced image is displayed, the first display image in a case where the first threshold is set to the second candidate value is displayed by using a specification as the first input.

### [Supplementary Note 12]

The information processing method according to any one of the Supplementary Notes 7 to 11 further including displaying a first tentative image that includes: an image including a plurality of unit areas acquired in a case where the first threshold is set to a first tentative value; and an image including a plurality of unit areas acquired in a case where the first threshold is set to a second tentative value, wherein
in a case where the user specifies the image based on the first tentative value in the first tentative image, the first display image in a case where the first threshold is set to the first tentative value is displayed by using a specification as the first input.

### [Supplementary Note 13]

The information processing method according to the Supplementary Note 12, wherein
the first tentative image is displayed before the first input is performed.

### [Supplementary Note 14]

The information processing method according to any one of the Supplementary Notes 7 to 13, wherein
the second display image in a case where the second threshold is set to a third candidate value includes a second reduced image that includes a plurality of unit areas acquired in a case where the second threshold is set to a fourth candidate value that is different from the third candidate value.

### [Supplementary Note 15]

The information processing method according to the Supplementary Note 14, wherein
in a case where the user specifies the second reduced image in the second display image after the second display image including the second reduced image is displayed, the first display image in a case where the second threshold is set to the fourth candidate value is displayed by using a specification as the second input.

### [Supplementary Note 16]

The information processing method according to any one of the Supplementary Notes 7 to 15 further including displaying a second tentative image that includes: an image including a cluster area acquired in a case where the second threshold is set to a third tentative value; and an image including a cluster area acquired in a case where the second threshold is set to a fourth tentative value, wherein
in a case where the user specifies the image based on the third tentative value in the second tentative image, the second display image in a case where the second threshold is set to the third tentative value is displayed by using a specification as the second input.

### [Supplementary Note 17]

The information processing method according to the Supplementary Note 16, wherein
the second tentative image is displayed before the first input is performed.

### [Supplementary Note 18]

The information processing method according to any one of the Supplementary Notes 7 to 17, wherein
the first display image and the second display image are displayed simultaneously.

### [Supplementary Note 19]

The information processing method according to any one of the Supplementary Notes 1 to 18 further including receiving a third input that is an input from a user to specify at least one of the cluster area, wherein
the at least one cluster area specified by the third input is output as the difference model or the information for generating the difference model.

### [Supplementary Note 20]

The information processing method according to any one of the Supplementary Notes 1 to 19 further including acquiring a thumbnail image related to the plurality of unit areas before acquiring the plurality of unit areas.

### [Supplementary Note 21]

The information processing method according to any one of the Supplementary Notes 1 to 20 further including acquiring a thumbnail image related to the cluster area before acquiring the cluster area.

### [Supplementary Note 22]

The information processing method according to any one of the Supplementary Notes 1 to 21, wherein
the object is a first object,
the unit area is a first unit area,
the cluster area is a first cluster area,
the difference model is a first difference model,
the first difference model is determined based on a first definite value of the first threshold and a second definite value of the second threshold,
the information processing method includes:
   acquiring a plurality of second unit areas each of which corresponds to a part of a target model of a second object and whose distances from a second object model, which is a three-dimensional model indicating a three-dimensional shape of the second object, are equal to or longer than the first definite value;
   acquiring at least one second cluster area, each second cluster area is a group of the second unit areas in which a distance between two second unit areas of the plurality of acquired second unit areas is equal to or shorter than the second definite value; and
   outputting, as a second difference model or information for generating the second difference model, at least one of the at least one second cluster area.

### [Supplementary Note 23]

The information processing method according to any one of the Supplementary Notes 1 to 22, wherein
the first threshold and a third threshold that is different from the first threshold are set by receiving the first input,
the acquiring the plurality of unit areas includes acquiring, from a plurality of unit areas included in a first area of the target model, a plurality of unit areas whose distances from the object model are equal to or longer than the first threshold, and
the information processing method includes acquiring, from a plurality of unit areas included in a second area of the target model that is different from the first area, a plurality of unit areas whose distances from the object model are equal to or longer than the third threshold.

### [Supplementary Note 24]

The information processing method according to any one of the Supplementary Notes 1 to 23, wherein
the second threshold and a fourth threshold that is different from the second threshold are set by receiving the second input,
the acquiring the cluster area includes acquiring, as the cluster area from a third area included in the plurality of acquired unit areas, a group of the unit areas in which a distance between two unit areas of the plurality of acquired unit areas is equal to or shorter than the second threshold, and
the information processing method includes acquiring, as the cluster area from a fourth area included in the plurality of acquired unit areas that is different from the third area, a group of the unit areas in which a distance between two unit areas of the plurality of acquired unit areas is equal to or shorter than the fourth threshold.

### [Supplementary Note 25]

An information processing method of generating a difference model that is a three-dimensional model indicating a difference between an object model, which is a three-dimensional model indicating a three-dimensional shape of an object, and a target model, which is a three-dimensional model indicating a target shape of the object, wherein
the information processing method includes:
displaying a first display image that displays: a plurality of unit areas which are acquired by dividing the target model and whose distances from the object model are equal to or longer than a first threshold; and that displays a first operational object that is allowed to be operated by the user to adjust the first threshold;
displaying a second display image that displays: at least one cluster area, each cluster area is a group of the unit areas in which a distance between two unit areas of the plurality of acquired unit areas is equal to or shorter than a second threshold; and that displays a second operational object that is allowed to be operated by the user to adjust the second threshold; and
outputting, as the difference model or information for generating the difference model, at least one of the cluster area acquired after an operation of the first operational object and the second operational object is performed.

### [Supplementary Note 26]

The information processing method according to the Supplementary Note 25, wherein
a display of the first display image is updated based on the operation of the first operational object, and
a display of the second display image is updated based on the operation of the second operational object.

### [Supplementary Note 27]

An information processing method of generating a difference model that is a three-dimensional model indicating a difference between an object model, which is a three-dimensional model indicating a three-dimensional shape of an object, and a target model, which is a three-dimensional model indicating a target shape of the object, wherein
the information processing method includes:
receiving a first input that is an input from a user;
acquiring a plurality of unit areas each of which corresponds to a part of the target model and whose distances from the object model are equal to or longer than a first threshold that is set by the first input;
acquiring at least one cluster area, each cluster area is a group of the unit areas in which a distance between two unit areas of the plurality of acquired unit areas is equal to or shorter than a second threshold; and
outputting, as the difference model or information for generating the difference model, at least one of the cluster area acquired based on the second threshold.

### [Supplementary Note 28]

An information processing method of generating a difference model that is a three-dimensional model indicating a difference between an object model, which is a three-dimensional model indicating a three-dimensional shape of an object, and a target model, which is a three-dimensional model indicating a target shape of the object, wherein
the information processing method includes:
acquiring a plurality of unit areas each of which corresponds to a part of the target model and whose distances from the object model are equal to or longer than a first threshold;
receiving an input that is an input from a user;
acquiring at least one cluster area, each cluster area is a group of the unit areas in which a distance between two unit areas of the plurality of acquired unit areas is equal to or shorter than a second threshold that is set by the input; and
outputting, as the difference model or information for generating the difference model, at least one of the cluster area acquired after receiving the input.

### [Supplementary Note 29]

An information processing method of generating a difference model that is a three-dimensional model indicating a difference between an object model, which is a three-dimensional model indicating a three-dimensional shape of an object, and a target model, which is a three-dimensional model indicating a target shape of the object, and that indicates a part removed from the object for processing the object to be the target shape, wherein
the information processing method includes:
receiving a first input that is an input from a user;
acquiring a plurality of unit areas each of which corresponds to a part of the object model and whose distances from the target model are equal to or longer than a first threshold that is set by the first input;
receiving a second input that is an input from the user;
acquiring at least one cluster area, each cluster area is a group of the unit areas in which a distance between two unit areas of the plurality of acquired unit areas is equal to or shorter than a second threshold that is set by the second input; and
outputting, as the difference model or information for generating the difference model, at least one of the cluster area acquired after receiving the first input and receiving the second input.

### [Supplementary Note 30]

An information processing method of generating a difference model that is a three-dimensional model indicating a difference between an object model, which is a three-dimensional model indicating a three-dimensional shape of an object, and a target model, which is a three-dimensional model indicating a target shape of the object, and that indicates a processed part for processing the object to be the target shape, wherein
the information processing method includes:
receiving a first input that is an input from a user;
acquiring a plurality of unit areas each of which corresponds to a part of one model of the object model and the target model and whose distances from the other model of the object model and the target model are equal to or longer than a first threshold that is set by the first input;
receiving a second input that is an input from the user;
acquiring at least one cluster area, each cluster area is a group of the unit areas in which a distance between two unit areas of the plurality of acquired unit areas is equal to or shorter than a second threshold that is set by the second input; and
outputting, as the difference model or information for generating the difference model, at least one of the cluster area acquired after receiving the first input and receiving the second input.

### [Supplementary Note 31]

A processing method of generating, based on the difference model generated by using the information processing method according to any one of the Supplementary Notes 1 to 30, processing control information for processing a shape of an object to be a target shape by a processing apparatus configured to process the object.

### [Supplementary Note 32]

An information processing method of generating a difference model that is a three-dimensional model indicating a difference between a first model and a second model, wherein
the information processing method includes:
receiving a first input that is an input from a user;
acquiring a plurality of unit areas each of which corresponds to a part of one model of the first model and the second model and whose distances from the other model of the first model and the second model are equal to or longer than a first threshold that is set by the first input;
receiving a second input that is an input from the user;
acquiring at least one cluster area, each cluster area is a group of the unit areas in which a distance between two unit areas of the plurality of acquired unit areas is equal to or shorter than a second threshold that is set by the second input; and
outputting, as the difference model or information for generating the difference model, at least one of the cluster area acquired after receiving the first input and receiving the second input.

### [Supplementary Note 33]

An information processing method of generating a difference model that is a three-dimensional model indicating a difference between a first model and a second model, wherein
the information processing method includes:
acquiring a plurality of unit areas each of which corresponds to a part of one model of the first model and the second model and whose distances from the other model of the first model and the second model are equal to or longer than a first threshold;
receiving a second input that is an input from the user;
acquiring at least one cluster area, each cluster area is a group of the unit areas in which a distance between two unit areas of the plurality of acquired unit areas is equal to or shorter than a second threshold; and
outputting, as the difference model or information for generating the difference model, at least one of the cluster area acquired based on the second threshold.

### [Supplementary Note 34]

A display method of displaying a difference model that is a three-dimensional model indicating a difference between an object model, which is a three-dimensional model indicating a three-dimensional shape of an object, and a target model, which is a three-dimensional model indicating a target shape of the object, wherein
the display method includes:
displaying a plurality of unit areas each of which corresponds to a part of the target model and whose distances from the object model are equal to or longer than a first threshold set by a first input that is an input from a user;
displaying at least one cluster area, each cluster area is a group of the unit areas in which a distance between two unit areas of the plurality of acquired unit areas is equal to or shorter than a second threshold set by a second input that is an input from the user; and
displaying, as the difference model, at least one of the cluster area acquired after receiving the first input and receiving the second input.

### [Supplementary Note 35]

A display apparatus configured to display a difference model that is a three-dimensional model indicating a difference between an object model, which is a three-dimensional model indicating a three-dimensional shape of an object, and a target model, which is a three-dimensional model indicating a target shape of the object, wherein
the display apparatus includes an input apparatus,
the display apparatus:
   displays, as a first display image, a plurality of unit areas each of which corresponds to a part of the target model and whose distances from the object model are equal to or longer than a first threshold set by the input apparatus;
   displays, as a second display image, at least one cluster area, each cluster area is a group of the unit areas in which a distance between two unit areas of the plurality of acquired unit areas is equal to or shorter than a second threshold set by the input apparatus; and
   displays, as the difference model, at least one of the cluster area acquired based on the second threshold.

### [Supplementary Note 36]

The display apparatus according to the Supplementary Note 35, wherein
the display apparatus:
displays, as the first display image together with the plurality of unit areas, a first operational object by which the user is allowed to set the first threshold; and
displays, as the second display image together with the at least one cluster area, a second operational object by which the user is allowed to set the second threshold.

### [Supplementary Note 37]

The display apparatus according to the Supplementary Note 35 or 36, wherein
the first display image and the second display image are displayed in a switchable manner.

### [Supplementary Note 38]

The display apparatus according to the Supplementary Note 35 or 36, wherein
the first display image and the second display image are displayed simultaneously.

### [Supplementary Note 39]

An information processing apparatus configured to generate the difference model by using the information processing method according to any one of the Supplementary Notes 1 to 30 and 32 to 33.

### [Supplementary Note 40]

A computer program that allows a computer to execute the information processing method according to any one of the Supplementary Notes 1 to 30 and 32 to 33.

### [Supplementary Note 41]

A computer program that allows a computer to execute the display method according to the Supplementary Note 30.

### [Supplementary Note 42]

An information processing method of generating a difference model that is a three-dimensional model indicating a difference between a first model and a second model, wherein
the information processing method includes:
receiving an input that is an input from a user;
acquiring a plurality of unit areas each of which corresponds to a part of one model of the first model and the second model and whose distances from the other model of the first model and the second model are equal to or longer than a first threshold that is set by the input;
acquiring at least one cluster area, each cluster area is a group of the unit areas in which a distance between two unit areas of the plurality of acquired unit areas is equal to or shorter than a second threshold; and
outputting, as the difference model or information for generating the difference model, at least one of the cluster area acquired after receiving the input.

### [Supplementary Note 43]

An information processing method of generating a difference model that is a three-dimensional model indicating a difference between a first model and a second model, wherein
the information processing method includes:
receiving an input that is an input from a user;
acquiring a plurality of unit areas each of which corresponds to a part of one model of the first model and the second model and whose distances from the other model of the first model and the second model are equal to or longer than a first threshold;
acquiring at least one cluster area, each cluster area is a group of the unit areas in which a distance between two unit areas of the plurality of acquired unit areas is equal to or shorter than a second threshold that is set by the input; and
outputting, as the difference model or information for generating the difference model, at least one of the cluster area acquired after receiving the input.

### [Supplementary Note 44]

An information processing method of generating a difference model that is a three-dimensional model indicating a difference between an object model, which is a three-dimensional model indicating a three-dimensional shape of an object, and a target model, which is a three-dimensional model indicating a target shape of the object, wherein
the information processing method includes:
acquiring a plurality of unit areas each of which corresponds to a part of the target model and whose distances from the object model are equal to or longer than a first threshold;
acquiring at least one cluster area, each cluster area is a group of the unit areas in which a distance between two unit areas of the plurality of acquired unit areas is equal to or shorter than a second threshold; and
outputting, as the difference model or information for generating the difference model, at least one of the cluster area acquired based on the second threshold.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and an information processing method, a processing method, a display method, a display apparatus, an information processing apparatus, and a computer program, which involve such changes, are also intended to be within the technical scope of the present invention.

### Description of Reference Codes

- SYS: processing system
- 1: processing apparatus
- 2: measurement system
- 22: control information generation apparatus
- 22: model generation unit
- 2212: control information generation unit
- 24: input apparatus
- 25: display apparatus
- 51: extraction point display image
- 52: point cloud display image
- W: workpiece
- EL: processing light
- OM: object model
- TM: target model
- DM: difference model
- Ptm, Pom: point
- Pext: extraction point
- PGC: point cloud cluster
- TH_D: inter-model distance threshold
- TH_C: cluster threshold

- 2: processing unit
- 21: processing head
- 211: irradiation optical system
- 212: material nozzle
- 214: first optical system
- 2143: power meter
- 2144: Galvano scanner
- 2145: focus control optical system
- 2146: Galvano mirror
- 215: second optical system
- 2153: power meter
- 2154: Galvano scanner
- 2155: focus control optical system
- 2156: Galvano mirror
- 216: third optical system
- 2162: fθ lens
- 212: material nozzle
- 22: head driving system
- 23: head housing
- 231: containing space
- 232: rear wall member
- 233: side wall member
- 3: stage unit
- 31: stage
- 32: stage driving system
- 6: housing
- 63IN: chamber space
- W: workpiece
- MS: build surface
- EL, EL#1, EL#2, EL#3, EL#4: processing light
- MP: melt pool
- EA, EA#1, EA#2: target irradiation area

## Claims

1. An information processing method of generating a difference model that is a three-dimensional model indicating a difference between an object model, which is a three-dimensional model indicating a three-dimensional shape of an object, and a target model, which is a three-dimensional model indicating a target shape of the object, and that indicates a part added to the object for processing the object to be the target shape, wherein
the information processing method comprises:
receiving a first input that is an input from a user;
acquiring a plurality of unit areas each of which corresponds to a part of the target model and whose distances from the object model are equal to or longer than a first threshold that is set by the first input;
receiving a second input that is an input from the user;
acquiring at least one cluster area, each cluster area is a group of the unit areas in which a distance between two unit areas of the plurality of acquired unit areas is equal to or shorter than a second threshold that is set by the second input; and
outputting, as the difference model or information for generating the difference model, at least one of the cluster area acquired after receiving the first input and receiving the second input.

2. The information processing method according to claim 1, wherein
processing control information for controlling a processing apparatus, which is configured to process the object, to process the object so that a shape of the object becomes the target object is generated based on the difference model.

3. The information processing method according to claim 2, wherein
the processing apparatus is an additive manufacturing apparatus, and
an additive manufacturing of the object by the processing apparatus is performed as at least a part of a repair processing of the object.

4. The information processing method according to any one of claims 1 to 3 further comprising generating the target model by deforming at least a part of a reference model of the object based on the object model.

5. The information processing method according to any one of claims 1 to 3, wherein
the target model is generated by deforming at least a part of the object model.

6. The information processing method according to claim 5, wherein
a deformation of the object model includes an enlargement of a part of the object model.

7. The information processing method according to any one of claims 1 to 6 further comprising:
displaying a first display image including the plurality of unit areas and a first operational object that is allowed to be operated by the user to adjust the first threshold; and
displaying a second display image including the cluster area and a second operational object that is allowed to be operated by the user to adjust the second threshold.

8. The information processing method according to claim 7 further comprising:
updating the plurality of unit areas included in the first display image based on an operation of the first operational object; and
updating the cluster area included in the second display image based on an operation of the second operational object.

9. The information processing method according to any one of claim 7 or 8, wherein
the number of the cluster areas included in the second display image is changed due to an adjustment of the second threshold by the user.

10. The information processing method according to any one of claims 7 to 9, wherein
the first display image in a case where the first threshold is set to a first candidate value includes a first reduced image that includes a plurality of unit areas acquired in a case where the first threshold is set to a second candidate value that is different from the first candidate value.

11. The information processing method according to claim 10, wherein
in a case where the user specifies the first reduced image in the first display image after the first display image including the first reduced image is displayed, the first display image in a case where the first threshold is set to the second candidate value is displayed by using a specification as the first input.

12. The information processing method according to any one of claims 7 to 11 further comprising displaying a first tentative image that includes: an image including a plurality of unit areas acquired in a case where the first threshold is set to a first tentative value; and an image including a plurality of unit areas acquired in a case where the first threshold is set to a second tentative value, wherein
in a case where the user specifies the image based on the first tentative value in the first tentative image, the first display image in a case where the first threshold is set to the first tentative value is displayed by using a specification as the first input.

13. The information processing method according to claim 12, wherein
the first tentative image is displayed before the first input is performed.

14. The information processing method according to any one of claims 7 to 13, wherein
the second display image in a case where the second threshold is set to a third candidate value includes a second reduced image that includes a plurality of unit areas acquired in a case where the second threshold is set to a fourth candidate value that is different from the third candidate value.

15. The information processing method according to claim 14, wherein
in a case where the user specifies the second reduced image in the second display image after the second display image including the second reduced image is displayed, the first display image in a case where the second threshold is set to the fourth candidate value is displayed by using a specification as the second input.

16. The information processing method according to any one of claims 7 to 15 further comprising displaying a second tentative image that includes: an image including a cluster area acquired in a case where the second threshold is set to a third tentative value; and an image including a cluster area acquired in a case where the second threshold is set to a fourth tentative value, wherein
in a case where the user specifies the image based on the third tentative value in the second tentative image, the second display image in a case where the second threshold is set to the third tentative value is displayed by using a specification as the second input.

17. The information processing method according to claim 16, wherein
the second tentative image is displayed before the first input is performed.

18. The information processing method according to any one of claims 7 to 17, wherein
the first display image and the second display image are displayed simultaneously.

19. The information processing method according to any one of claims 1 to 18 further comprising receiving a third input that is an input from a user to specify at least one of the cluster area, wherein
the at least one cluster area specified by the third input is output as the difference model or the information for generating the difference model.

20. The information processing method according to any one of claims 1 to 19 further comprising acquiring a thumbnail image related to the plurality of unit areas before acquiring the plurality of unit areas.

21. The information processing method according to any one of claims 1 to 20 further comprising acquiring a thumbnail image related to the cluster area before acquiring the cluster area.

22. The information processing method according to any one of claims 1 to 21, wherein
the object is a first object,
the unit area is a first unit area,
the cluster area is a first cluster area,
the difference model is a first difference model,
the first difference model is determined based on a first definite value of the first threshold and a second definite value of the second threshold,
the information processing method comprises:
acquiring a plurality of second unit areas each of which corresponds to a part of a target model of a second object and whose distances from a second object model, which is a three-dimensional model indicating a three-dimensional shape of the second object, are equal to or longer than the first definite value;
acquiring at least one second cluster area, each second cluster area is a group of the second unit areas in which a distance between two second unit areas of the plurality of acquired second unit areas is equal to or shorter than the second definite value; and
outputting, as a second difference model or information for generating the second difference model, at least one of the at least one second cluster area.

23. The information processing method according to any one of claims 1 to 22, wherein
the first threshold and a third threshold that is different from the first threshold are set by receiving the first input,
the acquiring the plurality of unit areas includes acquiring, from a plurality of unit areas included in a first area of the target model, a plurality of unit areas whose distances from the object model are equal to or longer than the first threshold, and
the information processing method comprises acquiring, from a plurality of unit areas included in a second area of the target model that is different from the first area, a plurality of unit areas whose distances from the object model are equal to or longer than the third threshold.

24. The information processing method according to any one of claims 1 to 23, wherein
the second threshold and a fourth threshold that is different from the second threshold are set by receiving the second input,
the acquiring the cluster area includes acquiring, as the cluster area from a third area included in the plurality of acquired unit areas, a group of the unit areas in which a distance between two unit areas of the plurality of acquired unit areas is equal to or shorter than the second threshold, and
the information processing method comprises acquiring, as the cluster area from a fourth area included in the plurality of acquired unit areas that is different from the third area, a group of the unit areas in which a distance between two unit areas of the plurality of acquired unit areas is equal to or shorter than the fourth threshold.

25. An information processing method of generating a difference model that is a three-dimensional model indicating a difference between an object model, which is a three-dimensional model indicating a three-dimensional shape of an object, and a target model, which is a three-dimensional model indicating a target shape of the object, wherein
the information processing method comprises:
displaying a first display image that displays: a plurality of unit areas which are acquired by dividing the target model and whose distances from the object model are equal to or longer than a first threshold; and that displays a first operational object that is allowed to be operated by the user to adjust the first threshold;
displaying a second display image that displays: at least one cluster area, each cluster area is a group of the unit areas in which a distance between two unit areas of the plurality of acquired unit areas is equal to or shorter than a second threshold; and that displays a second operational object that is allowed to be operated by the user to adjust the second threshold; and
outputting, as the difference model or information for generating the difference model, at least one of the cluster area acquired after an operation of the first operational object and the second operational object is performed.

26. The information processing method according to claim 25, wherein
a display of the first display image is updated based on the operation of the first operational object, and
a display of the second display image is updated based on the operation of the second operational object.

27. An information processing method of generating a difference model that is a three-dimensional model indicating a difference between an object model, which is a three-dimensional model indicating a three-dimensional shape of an object, and a target model, which is a three-dimensional model indicating a target shape of the object, wherein
the information processing method comprises:
receiving a first input that is an input from a user;
acquiring a plurality of unit areas each of which corresponds to a part of the target model and whose distances from the object model are equal to or longer than a first threshold that is set by the first input;
acquiring at least one cluster area, each cluster area is a group of the unit areas in which a distance between two unit areas of the plurality of acquired unit areas is equal to or shorter than a second threshold; and
outputting, as the difference model or information for generating the difference model, at least one of the cluster area acquired based on the second threshold.

28. An information processing method of generating a difference model that is a three-dimensional model indicating a difference between an object model, which is a three-dimensional model indicating a three-dimensional shape of an object, and a target model, which is a three-dimensional model indicating a target shape of the object, wherein
the information processing method comprises:
acquiring a plurality of unit areas each of which corresponds to a part of the target model and whose distances from the object model are equal to or longer than a first threshold;
receiving an input that is an input from a user;
acquiring at least one cluster area, each cluster area is a group of the unit areas in which a distance between two unit areas of the plurality of acquired unit areas is equal to or shorter than a second threshold that is set by the input; and
outputting, as the difference model or information for generating the difference model, at least one of the cluster area acquired after receiving the input.

29. An information processing method of generating a difference model that is a three-dimensional model indicating a difference between an object model, which is a three-dimensional model indicating a three-dimensional shape of an object, and a target model, which is a three-dimensional model indicating a target shape of the object, and that indicates a part removed from the object for processing the object to be the target shape, wherein
the information processing method comprises:
receiving a first input that is an input from a user;
acquiring a plurality of unit areas each of which corresponds to a part of the object model and whose distances from the target model are equal to or longer than a first threshold that is set by the first input;
receiving a second input that is an input from the user;
acquiring at least one cluster area, each cluster area is a group of the unit areas in which a distance between two unit areas of the plurality of acquired unit areas is equal to or shorter than a second threshold that is set by the second input; and
outputting, as the difference model or information for generating the difference model, at least one of the cluster area acquired after receiving the first input and receiving the second input.

30. An information processing method of generating a difference model that is a three-dimensional model indicating a difference between an object model, which is a three-dimensional model indicating a three-dimensional shape of an object, and a target model, which is a three-dimensional model indicating a target shape of the object, and that indicates a processed part for processing the object to be the target shape, wherein
the information processing method comprises:
receiving a first input that is an input from a user;
acquiring a plurality of unit areas each of which corresponds to a part of one model of the object model and the target model and whose distances from the other model of the object model and the target model are equal to or longer than a first threshold that is set by the first input;
receiving a second input that is an input from the user;
acquiring at least one cluster area, each cluster area is a group of the unit areas in which a distance between two unit areas of the plurality of acquired unit areas is equal to or shorter than a second threshold that is set by the second input; and
outputting, as the difference model or information for generating the difference model, at least one of the cluster area acquired after receiving the first input and receiving the second input.

31. A processing method of generating, based on the difference model generated by using the information processing method according to any one of claims 1 to 30, processing control information for processing a shape of an object to be a target shape by a processing apparatus configured to process the object.

32. An information processing method of generating a difference model that is a three-dimensional model indicating a difference between a first model and a second model, wherein
the information processing method comprises:
receiving a first input that is an input from a user;
acquiring a plurality of unit areas each of which corresponds to a part of one model of the first model and the second model and whose distances from the other model of the first model and the second model are equal to or longer than a first threshold that is set by the first input;
receiving a second input that is an input from the user;
acquiring at least one cluster area, each cluster area is a group of the unit areas in which a distance between two unit areas of the plurality of acquired unit areas is equal to or shorter than a second threshold that is set by the second input; and
outputting, as the difference model or information for generating the difference model, at least one of the cluster area acquired after receiving the first input and receiving the second input.

33. An information processing method of generating a difference model that is a three-dimensional model indicating a difference between a first model and a second model, wherein
the information processing method comprises:
acquiring a plurality of unit areas each of which corresponds to a part of one model of the first model and the second model and whose distances from the other model of the first model and the second model are equal to or longer than a first threshold;
receiving a second input that is an input from the user;
acquiring at least one cluster area, each cluster area is a group of the unit areas in which a distance between two unit areas of the plurality of acquired unit areas is equal to or shorter than a second threshold; and
outputting, as the difference model or information for generating the difference model, at least one of the cluster area acquired based on the second threshold.

34. A display method of displaying a difference model that is a three-dimensional model indicating a difference between an object model, which is a three-dimensional model indicating a three-dimensional shape of an object, and a target model, which is a three-dimensional model indicating a target shape of the object, wherein
the display method comprises:
displaying a plurality of unit areas each of which corresponds to a part of the target model and whose distances from the object model are equal to or longer than a first threshold set by a first input that is an input from a user;
displaying at least one cluster area, each cluster area is a group of the unit areas in which a distance between two unit areas of the plurality of acquired unit areas is equal to or shorter than a second threshold set by a second input that is an input from the user; and
displaying, as the difference model, at least one of the cluster area acquired after receiving the first input and receiving the second input.

35. A display apparatus configured to display a difference model that is a three-dimensional model indicating a difference between an object model, which is a three-dimensional model indicating a three-dimensional shape of an object, and a target model, which is a three-dimensional model indicating a target shape of the object, wherein
the display apparatus comprises an input apparatus,
the display apparatus:
displays, as a first display image, a plurality of unit areas each of which corresponds to a part of the target model and whose distances from the object model are equal to or longer than a first threshold set by the input apparatus;
displays, as a second display image, at least one cluster area, each cluster area is a group of the unit areas in which a distance between two unit areas of the plurality of acquired unit areas is equal to or shorter than a second threshold set by the input apparatus; and
displays, as the difference model, at least one of the cluster area acquired based on the second threshold.

36. The display apparatus according to claim 35, wherein
the display apparatus:
displays, as the first display image together with the plurality of unit areas, a first operational object by which the user is allowed to set the first threshold; and
displays, as the second display image together with the at least one cluster area, a second operational object by which the user is allowed to set the second threshold.

37. The display apparatus according to claim 35 or 36, wherein
the first display image and the second display image are displayed in a switchable manner.

38. The display apparatus according to claim 35 or 36, wherein
the first display image and the second display image are displayed simultaneously.

39. An information processing apparatus configured to generate the difference model by using the information processing method according to any one of claims 1 to 30 and 32 to 33.

40. A computer program that allows a computer to execute the information processing method according to any one of claims 1 to 30 and 32 to 33.

41. A computer program that allows a computer to execute the display method according to claim 34.
